(19) Europäisches Patentamt
European Patent Office
Office européen des brevets

(11) EP 2 594 924 B1

(12) **EUROPEAN PATENT SPECIFICATION**

(45) Date of publication and mention
of the grant of the patent:
**23.08.2017 Bulletin 2017/34**

(51) Int Cl.:
*G01N 25/18* (2006.01)        *E04B 1/80* (2006.01)
*F16L 59/065* (2006.01)

(21) Application number: **11189757.5**

(22) Date of filing: **18.11.2011**

(54) **Method for predicting a physical characteristic of vacuum insulation panels**

Verfahren zur Vorhersage einer physischen Eigenschaft von Vakuumwärmedämmpanelen

Procédé de prédiction d'une caractéristique physique de panneaux d'isolation sous vide

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2013 Bulletin 2013/21**

(73) Proprietor: **BSH Hausgeräte GmbH**
**81739 München (DE)**

(72) Inventors:
• **Baillly, Frank**
**89233 Neu-Ulm (DE)**
• **Stelzer, Jörg, Dr.**
**89537 Giengen (DE)**
• **Göb, Rainer**
**97074 Würzburg (DE)**
• **Heinemann, Ulrich, Dr.**
**71088 Holzgerlingen (DE)**
• **Lurz, Kristina**
**97072 Würzburg (DE)**

(56) References cited:
• **SCHWAB H ET AL: "Prediction of service life for vacuum insulation panels with fumed silica kernel and foil cover", JOURNAL OF THERMAL ENVELOPE AND BUILDING SCIENCE APRIL 2005 SAGE PUBLICATIONS LTD GB, vol. 28, no. 4, April 2005 (2005-04), pages 357-374, XP8148804, DOI: DOI:10.1177/1097196305051894**
• **WEN Y ET AL: "Service life evaluation of FG-type vacuum insulation panel", ZHENKONG KEXUE YU JISHU XUEBAO/JOURNAL OF VACUUM SCIENCE AND TECHNOLOGY FEBRUARY 2011 SCIENCE PRESS CHN, vol. 31, no. 1, February 2011 (2011-02), pages 110-113, XP8148862, DOI: DOI:10.3969/J.ISSN.1672-7126.2011.01.22**
• **BRUNNER ET AL: "In situ performance assessment of vacuum insulation panels in a flat roof construction", VACUUM, PERGAMON PRESS, GB, vol. 82, no. 7, 21 December 2007 (2007-12-21), pages 700-707, XP022502934, ISSN: 0042-207X, DOI: 10.1016/J.VACUUM.2007.10.016**
• **FRICKE ET AL: "Vacuum insulation panels-From research to market", VACUUM, PERGAMON PRESS, GB, vol. 82, no. 7, 20 December 2007 (2007-12-20), pages 680-690, XP022502932, ISSN: 0042-207X, DOI: 10.1016/J.VACUUM.2007.10.014**

**Description**

The invention relates to predicting a physical characteristic of vacuum insulation panels in the future upon the basis of measurements.

Vacuum insulation panels are widely used for thermal insulation of home appliances and buildings. However, the physical characteristics such as thermal conductivity of vacuum insulation panels tend to change over time. In order to capture the changing physical characteristics, long time measurements may be performed. However, in view of a long lifetime of typical vacuum insulation panels - 10 years and more - it is not feasible to perform measurements over that long period of time.

Document Schwab H. et al.: "Prediction of service life for vacuum insulation panels with fumed silica kernel and foil cover", JOURNAL OF THERMAL ENVELOPE AND BUILDING SCIENCE APRIL 2005 SAGE PUBLICATIONS LTD GB discloses a prediction of service life for vacuum insulation panels with fumed silica kernel and foil cover.

It is therefore the object of the present invention to provide an efficient concept for determining a physical characteristic such as thermal conductivity of vacuum insulation panels for a long period of time.

This object is achieved by the features of the independent claim. Further embodiments are disclosed in the figures, in the description and in the dependent claims.

The invention is based on the finding that the above object may be solved by predicting future physical characteristic of vacuum insulation panels upon the basis of a parametric regression model. The invention relates to a method for predicting a physical characteristic of vacuum insulation panels of a certain type, the method comprising steps of claim 1. According to an embodiment, the parametric regression model is executed and/or fitted by a computer.

According to an embodiment, the values of the physical characteristic and the plurality of physical quantities are measured at three distinct time instants, in particular only at three distinct time instants.

According to an embodiment, the physical characteristic is a least one of: thermal conductivity, internal gas pressure, weight.

According to an embodiment, the step of fitting of the parametric regression model comprises determining regression coefficients of the parametric regression model. According to an embodiment, the method further comprises determining the distinct time instants for measurements.

According to an embodiment, the method further comprises determining a number of vacuum insulation panels of the same type for measurements.

According to an embodiment, the method further comprises determining a total measurement time of the measurements.

According to an embodiment, the method further comprises determining environmental conditions, in particular temperatures, to which to expose at least one vacuum insulation panel.

According to an embodiment, the method further comprises determining an exposure time.

According to an embodiment, the method further comprises determining a number of measurements repetitions.

According to an embodiment, the vacuum insulation panel of the same type comprises a panel core, in particular a fiber panel core.

According to an embodiment, the predicting the physical characteristic of the vacuum insulation panels comprises predicting a number of vacuum insulation panels having a certain value of the physical characteristic or having a value of the physical characteristic below or above a threshold.

According to an embodiment, the predicting the physical characteristic of the vacuum insulation panels comprises predicting a change of the physical characteristic over time.

Further embodiments of the invention will be described with respect to the following figures, in which:

Fig. 1      shows a diagram of a method for protecting a physical characteristic;
Fig. 2a     shows a diagram of a method for predicting a physical characteristic of more than 18 VIPs;
Fig. 2b     shows a graphical user interface;
Fig. 3      shows observed versus predicted values of pressure increase;
Fig. 4      shows residuals versus predicted values of pressure increase;
Fig. 5      shows residuals versus observed values of pressure increase;.
Fig. 6      shows histograms of the residuals;
Fig. 7      shows predicted values plotted against observed values of larger panels.
Fig. 8      shows a coefficient of a prediction interval;
Fig. 9      shows an increase in precision of a prediction of pressure increase;
Fig. 10     shows a relation between the number of testing panels and a length of the prediction interval;
Fig. 11     shows a sensitivity of the coefficient of the prediction interval;
Fig. 12     shows an increase in pressure measured in mbar plotted against the elapsed time in days;
Fig. 13     shows the thermal conductivity for different core materials;

Fig. 14    shows the thermal conductivity of a kernel made of glass fibres.

Fig. 15    shows a measured heat conductivity;

Fig. 16    shows a characteristic of an estimator;

Fig. 17    shows estimates;

Fig. 18    shows estimates;

Fig. 19    shows a prediction variance;

Fig. 20    shows a prediction variance;

Fig. 21    shows a prediction variance; and

Fig. 22    shows a prediction variance.

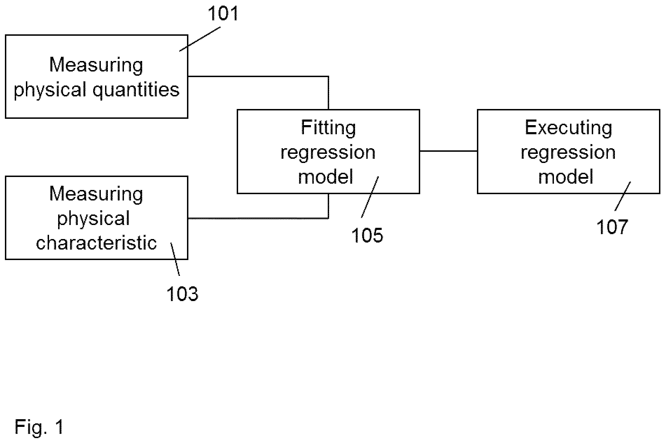

Fig. 1 shows a diagram of a method for protecting a physical characteristic, e.g. thermal conductivity, of vacuum insulation panels of a certain type. The certain type is determined by the structure of the vacuum insulation panels. Thus, vacuum insulation panels having e.g. a fiber core belong to the same certain type. Correspondingly, vacuum insulation panels without any core belong to another certain type.

The method comprises measuring 101 a plurality of physical quantities associated with the vacuum insulation panels at distinct time instants, measuring 103 the radius of the physical characteristic at the distinct time instants, fitting 105 a parametric regression model with the measure of physical quantities as regression parameters in order to predict the measured values of the physical characteristic at the distinct time instants using the parametric regression model. In other words, the parametric regression model is fitted such that its result yields at least estimates of the measured values of the physical characteristic.

The method further comprises executing 107, e.g. on a digital computer, the parametric regression model in order to predict the physical characteristic at a future time instant. The physical characteristic may be a thermal conductivity, an internal gas pressure or weight. Correspondingly, the physical quantities may be a temperature or a measured geometry of a vacuum insulation panel etc. The physical quantities are used as regression parameters in order to fit the parametric regression model.

According to an embodiment, the physical characteristic of more than 18 vacuum insulation panels (VIP) may be measured. Thereafter, three groups with respectively 6 VIPs are stored at temperatures of 23°C, 45°C and 70°C. After different time instants, e.g. after 0, 25, 50, 75 or 100 days or after a minimum of 0, 50 or 100 days, the physical characteristic of the VIP may be measured again. The measured values may be evaluated using a computer program which is adapted to compute parameter of the parametric regression model using the measuring values in order to provide a prediction of the physical characteristic for e.g. two or ten years at a certain operation temperature.

The parametric regression model is a non-linear mixed regression model for predicting efficiency, e.g. thermal conductivity of the VIPs within shorter test intervals, e.g. within 100 days. Nevertheless, the parametric regression model may provide a prediction of a physical characteristic after 15 years within a confidence interval. Thus, the vacuum insulation panels may be tested within 100 days or less in order to obtain a prediction for the physical characteristic or for the change of the physical characteristic over a significantly longer period of time.

The statistical approach yields more reliable predictions and enables an efficient deployment of test VIPs. Moreover, less VIPs may be used for measurements so that the measurement complexity is reduced.

When predicting the physical characteristic of vacuum insulation panels, the type of vacuum insulation panels is an important factor. By way of example, vacuum insulation panels having a fiber core are subject to stronger requirements relating to the quality of vacuum than vacuum insulation panels having a silicic acid core. In particular, VIPs with a fiber core are evacuated during manufacturing by a factor of 100 more than VIPs with other cores. Thus, the outer skins of the VIPs shall be correspondingly tighter.

In order to support a low gas pressure, additional integrated dry means may be used in the vacuum insulation panels. It has been found that VIPs with fiber core suffer from non-linear effects influencing a degradation of the physical characteristics, such as thermal conductivity of the VIP.

According to an embodiment, the prediction of the physical characteristic of vacuum insulation panels may be performed in order to estimate how many VIPs have after two years a thermal conductivity which is less then 0.008 W/(mK), or how many VIPs have after ten years a thermal conductivity which is less then 0.015 W/(mK). The confidence interval may be set to 95% and 99% at standard environmental conditions, e.g. 24°C and 50% air moisture or 15° Celsius and 50% relative air moisture. The maximum temperature may be set to 75° Celsius, the minimal temperature may be set to -40°C, the maximum air moisture may be 98% of the relative air moisture at 5°C. A start value for the thermal conductivity forming an embodiment of a physical characteristic may be 0.006 W/(mK).

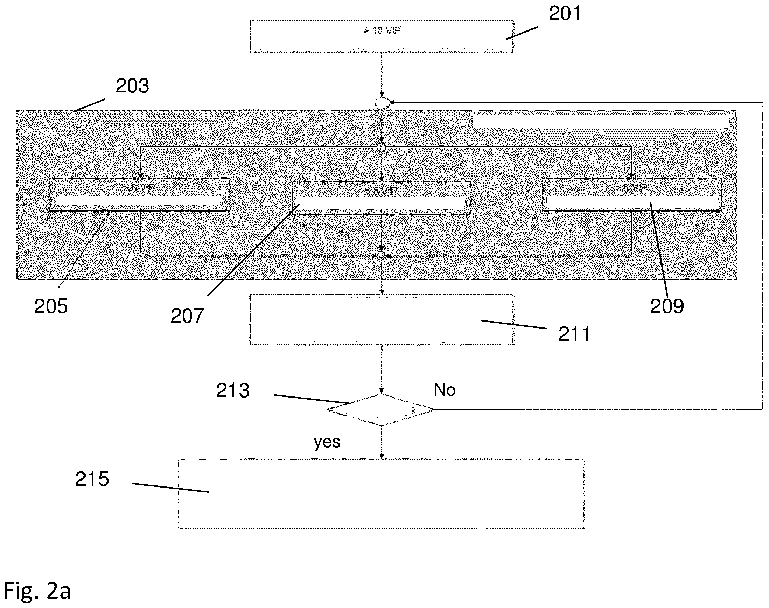

Fig. 2a shows a diagram of a method for predicting a physical characteristic of more than 18 VIPs. In step 201, the physical characteristic, e.g. an inner pressure, weight or thermal conductivity, is measured. Thereafter, in step 203, groups with more than 6 VIPs are stored at different temperatures, e.g. at a first temperature at 23°C in step 205, a second temperature at 45 to 55°C in step 207 and at a third temperature at 60 to 80°C in step 209. Thereafter, in step 211, after 25, 50, 75 or 100 days, at least with three measurement time instants by 0, 50 and 100 days, the physical characteristics, such as the inner pressure, weight or thermal conductivity, is measured again. In step 213, the elapsed time is determined. If the elapsed time is greater than 100 days, then the method proceeds with step 215. In step 215, the measurements are evaluated in order to perform the fitting of a parametric regression model enabling the prediction of the physical characteristic of the vacuum insulation panels at a future time instant, e.g. after 15 years. In step 215, the operational temperature may be set to 20°C.

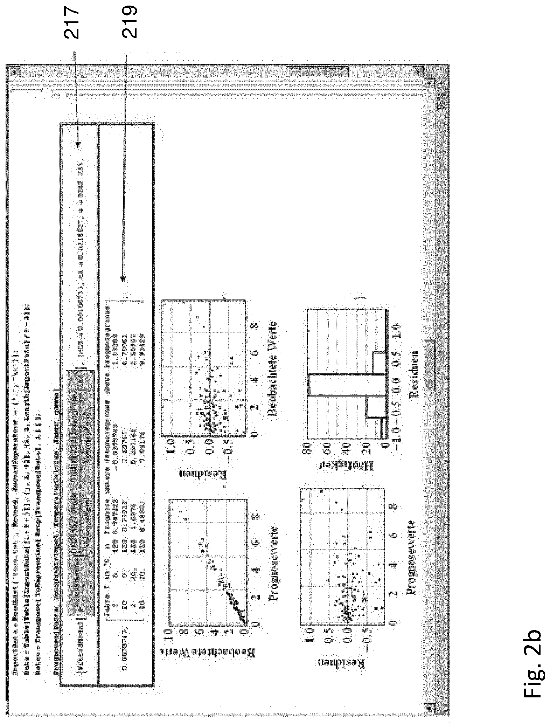

According to an embodiment, the fitting the parametric regression model and the executing the same may be performed using a graphical user interface as shown in Fig. 2b. The graphical user interface may implement the regression model 217 which calculates and outputs model parameters. The graphical user interface may further comprise a section 219 for predicting a physical characteristic of a vacuum insulation panel, e.g. after two and after ten years. The physical characteristic may be the inner pressure or thermal conductivity. The graphical user interface may further visualize predicted values versus observed values, 221, observed values versus residuals, 223, predicted values versus residuals, 225, and residuals versus frequency, 227.

The following describes a statistical model for predicting panel lifetime. The panel lifetime is defined as the time until panel failure. The panel fails if the value of the thermal conductivity exceeds a prescribed critical bound $\tilde{c}$. The occurrence of an exceedance over a critical bound $\tilde{c}$ is identified with the death of the panel. Relevant critical bounds for thermal conductivity are between 0.008 W/(m·K) after 2 years and 0.015 W/(m·K) after 10 years.

However, thermal conductivity is essentially a function of panel internal gas pressure and internal water content (mass). Hence panel failure can be alternatively defined as the exceedance of the panel interior gas pressure and/or the panel internal water content over prescribed critical values.

The functional relationships between thermal conductivity $\lambda_{gas}(t)$ at time $t$ and gas pressure $p_{gas}(t)$ at time $t$ can be expressed by the following equations.

$$\lambda_{gas}(p_{gas}) \quad = \quad \frac{\lambda_{free\ gas}}{1 + \frac{p_{1/2}}{p_{gas}}} \quad \approx \quad \frac{\lambda_{free\ gas}}{p_{1/2}} p_{gas}, \tag{1}$$

$$p_{gas}(\lambda_{gas}) \quad = \quad \frac{\lambda_{gas} \cdot p_{1/2}}{\lambda_{free\ gas} - \lambda_{gas}} \quad \approx \quad \frac{p_{1/2}}{\lambda_{free\ gas}} \cdot \lambda_{gas}, \tag{2}$$

$$\Delta p_{gas}(t) \quad = \quad \frac{\lambda_{gas}(t) \cdot p_{1/2}}{\lambda_{free\ gas} - \lambda_{gas}(t)} - \frac{\lambda_{gas}(t_0) \cdot p_{1/2}}{\lambda_{free\ gas} - \lambda_{gas}(t_0)} \quad \approx \quad \frac{p_{1/2}}{\lambda_{free\ gas}} \Delta \lambda_{gas}(t). \tag{3}$$

The constants are $\lambda_{free\ gas}$ = 25.5 × 10$^{-3}$ W/(m·K) and $p_{1/2}$ = 650+/-100 mbar. The conversion of the critical bound $\tilde{c}$ for thermal conductivity into a critical bound $c$ for gas pressure can be calculated using equation (27).

The empirical data base consists in two data sets from experiments. The experimental or testing objects were specially prepared small panels with sizes of about 10 cm × 10 cm × 1 cm and 20 cm × 20 cm × 1 cm, denominated as "test panels". Regarding the quality of experimental objects two panel brands were used that differed in the types of laminates. The panel types, respectively the laminates, are denoted as *H* and *W*. Panel internal gas pressure and panel mass were measured as experimental responses. The experimental factors were geometry, i.e. length of sealing, surface area, and kernel volume, temperature, humidity, and time. The panels were stored under various experimental conditions in six different environments resulting from the cross combinations of levels of the factors temperature and humidity. Temperature levels were 25°C, 45°C, or 65°C. Humidity levels were either uncontrolled or 75% relative. The geometric levels were panels with sizes of about 10 cm *x* 10 cm *x* 1 cm and 20 cm *x* 20 cm *x* 1 cm. As the number of experimental objects two panel units of each size were observed under each of the 6 experimental conditions defined by the cross combinations of levels of the factors temperature and humidity.

Regarding experimental period and distribution of measuring times the measurements of internal gas pressure and mass were taken weekly in the beginning and about every second week later, over about one year. In view of the number of measurements per experimental object the testing panels of type *H* were successively measured at 17 different times, whereas the testing panels of type *W* were successively measured at 10 different times. The following combinations of levels of the experimental factors temperature and humidity express stress conditions, which are significantly different from ordinary usage conditions, namely the temperature levels "45°C", "65°C" in cross combination with the humidity level "75% relative". Under the stress conditions described before experimental acceleration is achieved and the experimental responses gas pressure and mass increase more rapidly in time than under normal usage conditions. This acceleration effect was exploited for building a model for long-term prediction of the evolution of gas pressure and mass from observations from a period of one year only. For model validation purposes, a second data set of measurements on larger panels (about 48 cm $x$ 48 cm $x$ 2 cm) was considered.

In spite of the stress conditions, the responses gas pressure and mass never reached critical bounds corresponding to critical thermal conductivity levels between 0.008 W/(m·K) and 0.015 W/(m·K).

Several statistical methods and approaches are explored for modeling panel lifetime.

An analysis of the probability distribution of lifetime is a customary approach in statistical lifetime modeling. The statistical theory of lifetime and reliability has developed a great variety of parametric classes of lifetime distribution. Most popular is the class of Weibulldistributions. In recent years, the empirical analysis of lifetime distributions from accelerated experiments under stress conditions has made considerable progress.

The empirical modeling of a lifetime distribution requires the empirical observation of lifetimes, such as times until death, i.e. times until exceedance of critical bounds. In the underlying experiment the responses of the gas pressure and mass never reached critical bounds corresponding to critical thermal conductivity levels between 0.008 W/(m · K) and 0.015 W/(m · K).

If panel failure (panel death) is not able to be observed, the statistical analysis can be based on a model of the evolution of gas pressure or mass as a function of time, in order to predict the long-term evolution from observations over the short-term experimental period. This is a case for statistical regression analysis. The general form of a parametric regression model is

$$Y = g(\boldsymbol{x}, \boldsymbol{\beta}) + \varepsilon. \qquad (4)$$

$Y$ is the observed response, e.g. panel internal gas pressure or panel mass. The vector $x$ contains the levels of explicit influential factors, also called regressors, e.g. geometry, temperature, humidity, time. $\beta$ is a vector of parameters which can be fitted empirically to a specific phenomenon. The fixed function $g(x,\beta)$ aggregates the effects of the factor levels $x$ and of the parameters $\beta$. The residual $\varepsilon$ expresses random deviation due to non-explicit factors like measurement uncertainty or manufacturing variation in the panels. The residual is supposed to have no effect on the average, i.e. $E[\varepsilon] = 0$ is assumed. Hence $E[Y] = g(x, \beta)$, and $g(x, \beta)$ is called mean value function. Two regression modeling approaches can be used, namely a multivariate linear model and a nonlinear model.

Two regression modeling approaches can be used, namely a multivariate linear model and a nonlinear model.

The multivariate linear regression model, not within the scope of the present invention, is the general scheme (4) where

$$Y = \boldsymbol{\beta}^\top \boldsymbol{x} + \varepsilon = \beta_1 x_1 + \ldots + \beta_k x_k + \varepsilon. \qquad (5)$$

I.e. the mean value function is a linear function $g(x\,\beta) = \beta_1 x_1 + \ldots + \beta_k x_k$.

The following parameters are estimated:

1) the components of the vector $\beta$, where the estimator is denoted as $\hat{\beta}$; and

2) the variance $\sigma_\varepsilon^2 = V[\varepsilon]$ of the residual $\varepsilon$. The estimator is denoted as $\widehat{\sigma}_\varepsilon^2$.

For a specific data set the random effects model is $Y_i = \beta^\top x_i + \varepsilon_i$, $i = 1, \ldots, n$, and in vector notation:

$$Y = \mathbf{X}\beta + \varepsilon \quad \text{with} \quad \mathbf{X} = \begin{pmatrix} \boldsymbol{x}_1^\top \\ \vdots \\ \boldsymbol{x}_n^\top \end{pmatrix}.$$

$\beta = (\beta_1, \ldots, \beta_{k'})^\top$ is the vector of the regression parameters.

The $k' \times k'$-matrix C is defined by

$$\left( c_{ij} \right)_{1 \le i,j \le k'} = (\mathbf{X}^\top \mathbf{X})^{-1},$$

the existence of the inverse provided.

The least squares estimator $\hat{\beta}$ is determined from the equations

$$0 \overset{!}{=} \mathbf{X}^{\top}\left(\boldsymbol{Y} - \mathbf{X}\widehat{\boldsymbol{\beta}}\right).$$

The confidence interval for $\beta_l$ is:

$$\left(\widehat{\boldsymbol{\beta}}_l - z\widehat{\sigma}_{\varepsilon}\sqrt{c_{ll}};\ \widehat{\boldsymbol{\beta}}_l + z\widehat{\sigma}_{\varepsilon}\sqrt{c_{ll}}\right).$$

The variance $\sigma_{\varepsilon}^2 = V[\varepsilon]$ of the residual $\varepsilon$ is estimated by

$$\widehat{\sigma}_{\varepsilon}^2 = \frac{1}{n-k'}\sum\widehat{\varepsilon}_i^2 = \frac{1}{n-k'}\left(\boldsymbol{Y} - \mathbf{X}\widehat{\boldsymbol{\beta}}\right)^{\top}\left(\boldsymbol{Y} - \mathbf{X}\widehat{\boldsymbol{\beta}}\right).$$

The parameter estimation in the linear model is provided by many software programs by statistical commercially available packages.

The model based prediction for the value $Y(x) = \beta^{\mathsf{T}}x + \varepsilon_x$ is $\hat{Y}(x) = \hat{\beta}^{\mathsf{T}}x$. The prediction interval for the true value $Y(x) = \beta^{\mathsf{T}}x + \varepsilon_x$ is

$$\left(\widehat{Y}(\boldsymbol{x}) - z\widehat{\sigma}_{\varepsilon}\sqrt{1 + \boldsymbol{x}^{\top}\mathbf{C}\boldsymbol{x}};\ \widehat{Y}(\boldsymbol{x}) + z\widehat{\sigma}_{\varepsilon}\sqrt{1 + \boldsymbol{x}^{\top}\mathbf{C}\boldsymbol{x}}\right) \qquad (6)$$

with $z = z_{t(n-k')}\left(\frac{1+\gamma}{2}\right)$ being the $\frac{1+\gamma}{2}$ -100%-quantile of Student's t-distribution $t(n-k')$.

The model (5) can be applied to artificial regressors $x_i$ which are aggregations of the explicit variables geometry, temperature, humidity, time.

The underlying explicit untransformed regressor variables are:

- geometrical regressor variables: length of seal, e.g. for the special test panels $2(l_F + b_F)$ with $l_F$ and $b_F$ the lengths of the seal at the long the panel, surface area of the panel, e.g. for the special test panels it was $2 \cdot l_F \cdot b_F$, volume of the kernel, e.g. for the special test panels it was $l_K \cdot b_K \cdot h_K$ with $l_K$ and $b_K$ and $h_K$ the lengths of the different sides of the kernel;

- ambient regressor variables: temperature $\vartheta$ (in °C), relative humidity $F$ (in %);

- measuring time $t$ in days; and

- current mass $m(t)$, current pressure $p(t)$.

The response variables are:

- relative mass increase $Y_1 = (m(t)\ m(t_0))/m(t_0)$, where $t_0$ is the starting time of measuring, $m(t)$ is mass at time $t$ in grams, and $m(t_0)$ is the initial mass at $t_0$; and
- absolute pressure increase $Y_2 = p(t) - p(t_0)$, where $p(t)$ is the pressure at time $t$ in mbar, and $p(t_0)$ is the initial pressure at $t_0$.

The following aggregated regressor variables are calculated:

- Explanatory variables of first order:

$$F_1 = l_K \cdot b_K \cdot h_K$$

(volume kernel)

$$F_2 = 2 \cdot (l_F + b_F)$$

(length of sealing)

$$F_3 = 2 \cdot (l_F \cdot b_F + b_F \cdot h_F + l_F \cdot h_F)$$

(surface area of the panel)[1]

$$F_4 = 6.1078 \cdot \exp(17.08 \cdot \vartheta/(234.18 + \vartheta)) \cdot F/100$$

(partial pressure of water vapour in the environment)

$$F_5 = m(t_0)$$

(initial mass)

$$F_6 = t - t_0$$

(elapsed measuring time)

$$F_7 = \vartheta$$

(temperature)

- Explanatory variables of second order:

$$x_1 = F_2 \cdot F_4 \cdot F_6/F_5$$

$$x_2 = F_2 \cdot F_4 \cdot F_6/F_5 \cdot F_7$$

$$x_3 = F_3 \cdot F_4 \cdot F_6/F_5$$

$$x_4 = F_3 \cdot F_4 \cdot F_6/F_5 \cdot F_7$$

$$x_5 = F_3 \cdot F_4 \cdot F_6/F_5 \cdot F_7^2$$

$$x_6 = F_2 \cdot F_6/F_1$$

$$x_7 = F_2 \cdot F_6/F_1 \cdot F_7$$

$$x_8 = F_3 \cdot F_6/F_1$$

$$x_9 = F_3 \cdot F_6/F_1 \cdot F_7$$

$$x_{10} = F_3 \cdot F_6 / F_1 \cdot F_7^2$$

$x_6$ and $x_7$ describe the permeation of dry gases through the sealing. The temperature dependency is assumed to be linear. $x_8$, $x_9$ and $x_{10}$ describe the permeation of dry gases through the laminate. The dependency is assumed to be of second order in temperature. $x_1$, ..,$x_5$ correspondingly describe the permeation of water vapor which is assumed to be proportional to the external water vapor pressure.

By means of the above explanatory variables the response variables can be approximately described by the following two linear models:

- Model of the relative increase in mass ($Y_1$):

$$Y_1 = a_1 \cdot x_1 + a_2 \cdot x_2 + a_3 \cdot x_3 + a_4 \cdot x_4 + a_5 \cdot x_5$$

- Model of the increase in pressure ($Y_2$) (by dry air and water vapor):

$$Y_2 = b_0 \cdot Y_1 + b_6 \cdot x_6 + b_7 \cdot x_7 + b_8 \cdot x_8 + b_9 \cdot x_9 + b_{10} \cdot x_{10}$$

Both models get along without an intercept. The unknown coefficients $a_1$, ..,$a_5$ and $b_0$, ..,$b_{10}$ are estimated by means of multi-linear regression using the totality of the given data. The goodness of fit is examined. If the goodness of fit is satisfying, predictions about the future behavior of the response variables $Y_1$ and $Y_2$ can be made using the estimated model.

The fit of the linear model with explanatory variables up to second order is good in the region of experimental factor levels, i.e. geometry, temperature, humidity.

The nonlinear approach is a second regression modeling approaches.

This modeling approach is based on a regression model $Y = g(x, \beta) + \varepsilon$ of type (4) with nonlinear mean value functions $g(x, \beta)$. Firstly the theory of the statistical analysis of such nonlinear regression models is reviewed, which is applied below.

The following parameters are estimated:

1) the components of the vector $\beta$, where the estimator is denoted as $\hat{\beta}$; and

2) the variance $\sigma_\varepsilon^2 = V[\varepsilon]$ of the residual $\varepsilon$. The estimator is denoted as $\hat{\sigma}_\varepsilon^2$.

For a specific data set the random effects model is $Y_i = g(x_i, \beta) + \varepsilon_i$, $i = 1, ..., n$, and in vector notation

$$Y = g(\mathbf{X}, \beta) + \varepsilon \quad \text{with} \quad g(\mathbf{X}, \beta) = \left( g(x_1, \beta), \dots, g(x_n, \beta) \right)^\top.$$

$\beta = (\beta_1, ..., \beta_k)^\mathrm{T}$ is the vector of the regression parameters and $X = (x_1,..., x_n)^\mathrm{T}$ the matrix of the regressor values.

The $n \times k'$-matrix $G(X, \beta)$ is defined by

$$\mathbf{G}(\mathbf{X}, \beta) = \frac{\partial}{\partial \beta} g(\mathbf{X}, \beta).$$

The $k' \times k'$-matrix $C(\beta)$ is defined by

$$\left( c_{ij}(\beta) \right)_{1 \le i,j \le k'} = \mathbf{C}(\beta) = \left( \mathbf{G}(\mathbf{X}, \hat{\beta})^\top \mathbf{G}(\mathbf{X}, \hat{\beta}) \right)^{-1},$$

the existence of the inverse provided.

The least squares estimator $\hat{\beta}$ is determined from the equations

$$0 \stackrel{!}{=} \mathbf{G}(\mathbf{X}, \widehat{\boldsymbol{\beta}})^{\top} \left( \mathbf{Y} - \boldsymbol{g}(\mathbf{X}, \widehat{\boldsymbol{\beta}}) \right) = \mathbf{G}(\mathbf{X}, \widehat{\boldsymbol{\beta}})^{\top} \widehat{\varepsilon}.$$

For a large sample size $n$ the estimator $\hat{\beta}$ is approximately normally distributed with the k'-dimensional normal distribution $N_{k'}(\boldsymbol{\beta}, \sigma_\varepsilon^2 \mathbf{C}(\boldsymbol{\beta}))$. If $\boldsymbol{a} \in \mathbb{R}^{k'}$ is a prescribed vector, then $a^{\mathsf{T}}\hat{\beta}$ is approximately distributed as the univariate normal distribution $N(\boldsymbol{a}^{\top}\boldsymbol{\beta}, \sigma_\varepsilon^2 \boldsymbol{a}^{\top}\mathbf{C}(\boldsymbol{\beta})\boldsymbol{a})$.

For a large sample size $n$ the asymptotic prediction interval for the value $a^{\mathsf{T}}\beta$ is:

$$\left( \boldsymbol{a}^{\top}\widehat{\boldsymbol{\beta}} - z\widehat{\sigma}_\varepsilon \sqrt{\boldsymbol{a}^{\top}\mathbf{C}(\boldsymbol{\beta})\boldsymbol{a}}; \ \boldsymbol{a}^{\top}\widehat{\boldsymbol{\beta}} + z\widehat{\sigma}_\varepsilon \sqrt{\boldsymbol{a}^{\top}\mathbf{C}(\boldsymbol{\beta})\boldsymbol{a}} \right) \tag{7}$$

with $z = z_{t(n-k')}\left(\frac{1+\gamma}{2}\right)$ being the $\frac{1+\gamma}{2}$ 100%-quantile of Student's t-distribution $t(n - k')$.

For the empirical analysis $C(\beta)$ is replaced by $C(\hat{\beta})$.

The confidence interval for $\beta_l$ is obtained by predefining the vector $a_l = (0,...,0, 1, 0,..., 0)^{\mathsf{T}}$, with $a_l = 1$ as its $l$-th component and the components $a_j = 0$ for $j \neq l$. The following interval results:

$$\left( \widehat{\boldsymbol{\beta}}_l - z\widehat{\sigma}_\varepsilon \sqrt{c_{ll}(\boldsymbol{\beta})}; \ \widehat{\boldsymbol{\beta}}_l + z\widehat{\sigma}_\varepsilon \sqrt{c_{ll}(\boldsymbol{\beta})} \right).$$

For the empirical analysis $C(\beta)$ is replaced by $C(\hat{\beta})$ and $c_{ll}(\beta)$ by $c_{ll}(\hat{\beta})$.

The variance $\sigma_\varepsilon^2 = V[\varepsilon]$ of the residual $\varepsilon$ is estimated by

$$\widehat{\sigma}_\varepsilon^2 = \frac{1}{n - k'} \sum \widehat{\varepsilon}_i^2 = \frac{1}{n - k'} \left( \mathbf{Y} - \boldsymbol{g}(\mathbf{X}, \widehat{\boldsymbol{\beta}}) \right)^{\top} \left( \mathbf{Y} - \boldsymbol{g}(\mathbf{X}, \widehat{\boldsymbol{\beta}}) \right).$$

The estimation uses numerical algorithms, in particular minimization algorithms like the Gauß-Newton or Levenberg-Marquard procedures. The solution requires advanced statistical or mathematical software like Statistica, Minitab, or Mathematica.

The model based prediction for the value $Y(x) = g(x, \beta) + \varepsilon_x$ is $\hat{Y}(x) = g(x, \hat{\beta})$. If $d(\beta) = \frac{\partial}{\partial \beta} g(x, \beta)$ is the column gradient of $g$ with respect to $\beta$ with fixed $x$, then for a large sample size $n$ the asymptotic prediction interval for the true value $Y(x) = g(x, \beta) + \varepsilon_x$ is:

$$\left( \widehat{Y}(x) - z\widehat{\sigma}_\varepsilon \sqrt{1 + \boldsymbol{d}(\boldsymbol{\beta})^{\top}\mathbf{C}(\boldsymbol{\beta})\boldsymbol{d}(\boldsymbol{\beta})}; \ \widehat{Y}(x) + z\widehat{\sigma}_\varepsilon \sqrt{1 + \boldsymbol{d}(\boldsymbol{\beta})^{\top}\mathbf{C}(\boldsymbol{\beta})\boldsymbol{d}(\boldsymbol{\beta})} \right) \tag{8}$$

with $z = z_{t(n-k')}\left(\frac{1+\gamma}{2}\right)$ being the $\frac{1+\gamma}{2}$ 100%-quantile of Student's t-distribution $t(n - k')$.

For the empirical analysis $C(\beta)$ is replaced by $C(\hat{\beta})$ and $d(\beta)$ by $d(\hat{\beta})$.

The confidence intervals and prediction intervals given by formulae (7) and (8) are based on linear approximations of the mean value function $g(x, \beta)$, compared to equation (4). In the following the mean value function is strictly monotonous in all parameters.

Table 1: Notation of variables and coefficients in the nonlinear regression model.

| variable | meaning | model notation | model coefficient |
|---|---|---|---|
| $LS$ | length of the sealing | - | - |
| $A = A_{Folie}$ | surface area | - | - |

(continued)

| variable | meaning | model notation | model coefficient |
|---|---|---|---|
| $V$ | volume of the kernel | - | - |
| $\frac{LS}{V}$ | length of sealing per volume | $x_1$ | $c_{LS} = \beta_1$ |
| $\frac{A}{V}$ | surface per volume | $x_2$ | $c_A = \beta_2$ |
| $\frac{1}{T} - \frac{1}{T_0}$ | transformed temperature | $x_3$ | $E = \beta_3$ |
| $t - t_0$ | time elapsed | $x_5$ | - |
| $\frac{m(t) - m(t_0)}{m(t)}$ | relative mass increase | $x_4$ | $\alpha = \beta_4$ |

In the following embodiments of the present invention, the aforementioned methods are applied to the prediction of pressure and mass increase.

A nonlinear model for increase of gas pressure with dependency on mass is discussed, which is based on an iterative data modeling process. A simplifying assumption can be used for the analysis of small test panels with kernels made of fumed silica:

1. Permeation through edges and corners is assumed to be negligible, so that the coefficients $c_{air,C}$, $c_{air,LE}$, $c_{wv,C}$ and $c_{wv,LE}$ are assumed to be zero.
2. The driving force for permeation of air is the external pressure. The variation of internal pressure is neglected.
3. The internal water vapor partial pressure is assumed to be constantly zero, consequently there are no effects due to saturation.
4. The variation of temperature is assumed to follow an Arrhenius equation.
5. The effect of temperature on the permeation is the same for length of the sealing and surface area.

The assumptions result in the model

$$p(t) - p_0 \;=\; \left(c_{LS}\frac{LS}{V} + c_A\frac{A}{V}\right)\exp\left(\frac{-E}{R}\left(\frac{1}{T} - \frac{1}{T_0}\right)\right)(t - t_0) + \alpha\frac{m(t) - m(0)}{m(0)} \quad (9)$$

with $R = 8.314472$ (J/(mol K)) being the gas constant, $T$ the temperature in K, $E$ the activation energy, $c_{LS}$ the coefficient of the sealing, $c_A$ the coefficient of the surface area and $\alpha$ the coefficient of the mass. The reference temperature is $T_0 = 296.15$ K. The values $E$, $c_{LS}$, $c_A$, $\alpha$ are unknowns.

Equation (9) expresses the relation between the increase in pressure and the above mentioned parameters on average. When the model empirically is fitted, the random deviation can be considered. If $Y$ is the observed increase in gas pressure, then equation (9) corresponds to the regression model

$$Y \;=\; f(\boldsymbol{x}, \boldsymbol{\beta}) + \varepsilon \;=\; (\beta_1 x_1 + \beta_2 x_2)\exp\left(\frac{-\beta_3}{R}x_3\right)x_5 + \beta_4 x_4 + \varepsilon \quad (10)$$

with

$$\beta_1 = c_{LS}, \; x_1 = \frac{LS}{V}, \;\; \beta_2 = c_A, \; x_2 = \frac{A}{V}, \;\; \beta_3 = E, \; x_3 = \frac{1}{T} - \frac{1}{T_0},$$
$$\beta_4 = \alpha, \; x_4 = \frac{m(t) - m(0)}{m(0)}, \;\; x_5 = t - t_0. \quad (11)$$

See above for a survey of the used notation. The residual $\varepsilon$ in equation (10) expresses the random deviation due to nonsystematic measuring effects and due to manufacturing and handling effects of the panels.

Therefore the fit of the model is performed by means of nonlinear regression analysis.

Here the gradient $\frac{\partial}{\partial \beta} f(\boldsymbol{x}, \boldsymbol{\beta})$ of $f$ with respect to $\beta$ with fixed $x$ can be used. It follows from equation (10):

$$\frac{\partial}{\partial \beta} f(\boldsymbol{x}, \boldsymbol{\beta}) = \begin{pmatrix} x_1 \exp\left(\frac{-\beta_3}{R} x_3\right) x_5 \\ x_2 \exp\left(\frac{-\beta_3}{R} x_3\right) x_5 \\ -(\beta_1 x_1 + \beta_2 x_2) \exp\left(\frac{-\beta_3}{R} x_3\right) \frac{x_3}{R} x_5 \\ x_4 \end{pmatrix}. \qquad (12)$$

A nonlinear model for increase of gas pressure without dependency on mass is discussed.

Under consideration of the panels under low water vapor partial pressure the model (10) can be simplified with in predictive power by omitting the mass term. The latter condition corresponds to the conditions in practice for freezers and refrigerators. The following regression model is considered:

$$Y = g(\boldsymbol{x}, \boldsymbol{\beta}) + \varepsilon = (\beta_1 x_1 + \beta_2 x_2) \exp\left(\frac{-\beta_3}{R} x_3\right) x_5 + \varepsilon \qquad (13)$$

with

$$\beta_1 = c_{LS}, \ x_1 = \frac{LS}{V}, \ \beta_2 = c_A, \ x_2 = \frac{A}{V}, \ \beta_3 = E, \ x_3 = \frac{1}{T} - \frac{1}{T_0}, \qquad (14)$$

$$x_5 = t - t_0.$$

See above for a survey of the used notation used. The fit of the model is performed by means of nonlinear regression analysis. If the gradient $\frac{\partial}{\partial \beta} g(\boldsymbol{x}, \boldsymbol{\beta})$ of $g$ with respect to $\beta$ with fixed $x$ is used, it follows from equation (13):

$$\frac{\partial}{\partial \beta} g(\boldsymbol{x}, \boldsymbol{\beta}) = \begin{pmatrix} x_1 \exp\left(\frac{-\beta_3}{R} x_3\right) x_5 \\ x_2 \exp\left(\frac{-\beta_3}{R} x_3\right) x_5 \\ -(\beta_1 x_1 + \beta_2 x_2) \exp\left(\frac{-\beta_3}{R} x_3\right) \frac{x_3}{R} x_5 \end{pmatrix}. \qquad (15)$$

Table 2: Empirical results for small test panels.

| | | Estimate | Lower confidence limit | Upper confidence limit |
|---|---|---|---|---|
| Parameter estimates for panels with laminate *H*. | | | | |
| $\beta_1$ | $c_{LS}$ | 0.001174 | 0.000941 | 0.001407 |
| $\beta_2$ | $c_A$ | 0.0186 | 0.0157 | 0.0215 |
| $\frac{\beta_3}{R}$ | $\frac{E}{R}$ | 3677 | 3487 | 3866 |
| $\beta_3$ | $E$ | 30572.3 | 28992.6 | 32143.7 |
| $\sigma_\varepsilon^2$ | | 0.356300 | 0.295745 | 0.437672 |
| Parameter estimates for panels with laminate *W*. | | | | |
| $\beta_1$ | $c_{LS}$ | 0.001067 | 0.000845 | 0.001290 |
| $\beta_2$ | $c_A$ | 0.0216 | 0.0186 | 0.0245 |
| $\frac{\beta_3}{R}$ | $\frac{E}{R}$ | 3282 | 3107 | 3458 |
| $\beta_3$ | $E$ | 27288.1 | 25833.1 | 28751.4 |

(continued)

Parameter estimates for panels with laminate *W*.

| | Estimate | Lower confidence limit | Upper confidence limit |
|---|---|---|---|
| $\sigma_\varepsilon^2$ | 0.0870747 | 0.0684527 | 0.114527 |

In an empirical fit of the nonlinear model without mass term the following parameters are estimated:

1) the components of the vector $\beta$, as explained by formula (14). The estimator is denoted as $\hat{\beta}$; and

2) the variance $\sigma_\varepsilon^2 = V[\varepsilon]$ of the residual $\varepsilon$, where the estimator is denoted as $\widehat{\sigma_\varepsilon^2}$.

For the estimation, commercially available tools in combination with the minimization algorithm of Levenberg-Marquard can be used.

Table 2 shows parameter estimates for the model (13) including confidence intervals for the estimates for both laminate types. The quantities displayed in table 2 are explained as follows:

- Estimate is an empirical estimate of the parameter from the measurement data.
- Lower/Upper confidence limit represents two values L < U such that with a high probability, here 0.95, the true value of the estimated parameter lies between L and U.

The R-squared-value is a measure for the goodness of fit of a model. Possible values lie between 0 and 1. The more the R-squared-value approaches 1 the better is the fit of the model. Both the model for H and the model for W show reasonable R-squared-values.

R- and R-squared-values.

| | *H* | *W* |
|---|---|---|
| R | 0.97982448 | 0.98932815 |
| R-squared | 0.96005601 | 0.97877019 |

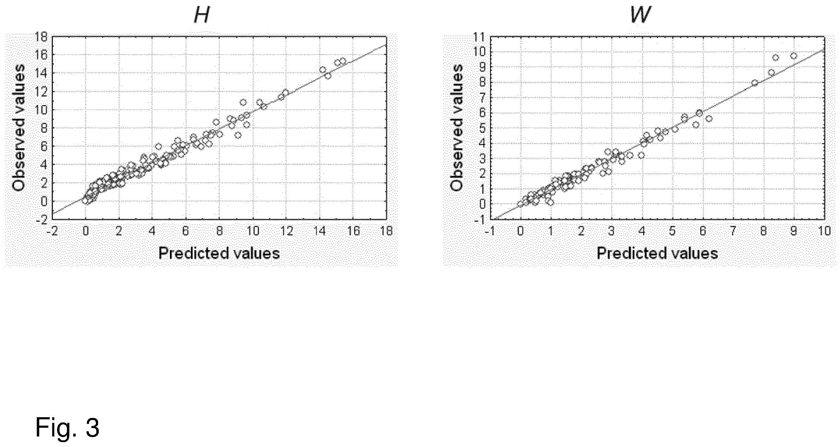

Fig. 3 shows observed versus predicted values of pressure increase measured in mbar and how precisely the prediction values of the model match with the observed values. Ideally the points lie on a straight line through the origin with a 100%-slope.

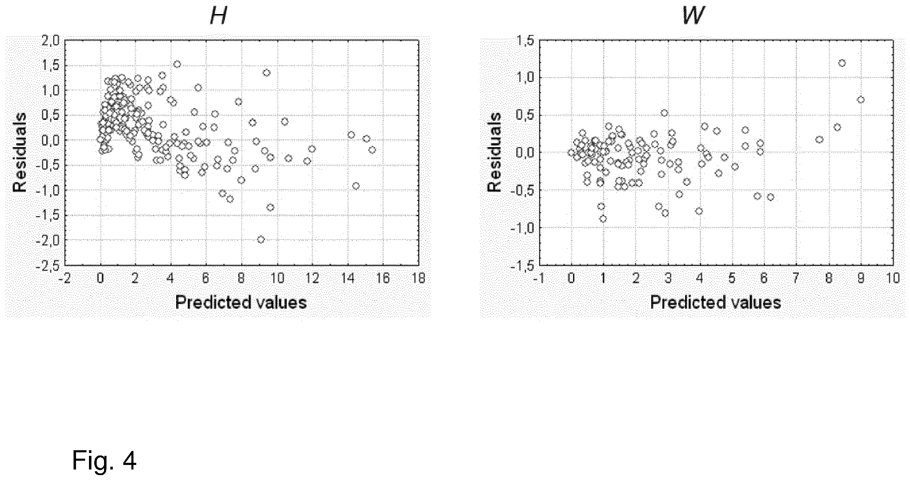

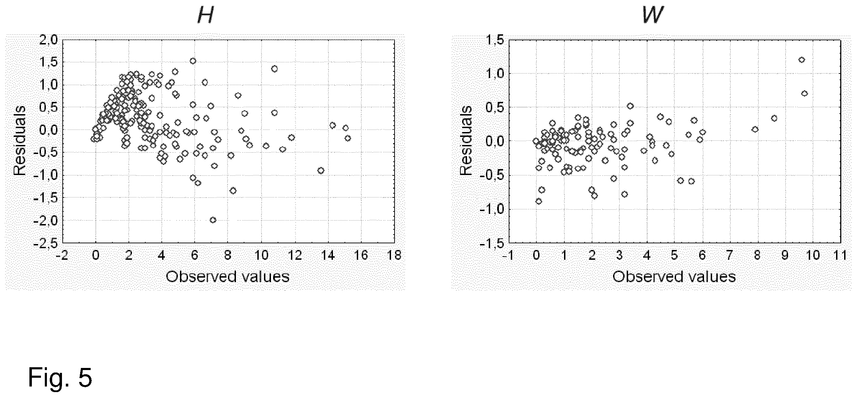

Fig. 4 shows residuals versus predicted values of pressure increase measured in mbar and Fig. 5 shows residuals versus observed values of pressure increase measured in mbar.

Fig. 4 and Fig. 5 plot the residuals $\varepsilon$ = observed values predicted values of H and W against the predicted values and the observed values, respectively. For W-type and H-type panels the plots show agreement and predictive power of the model.

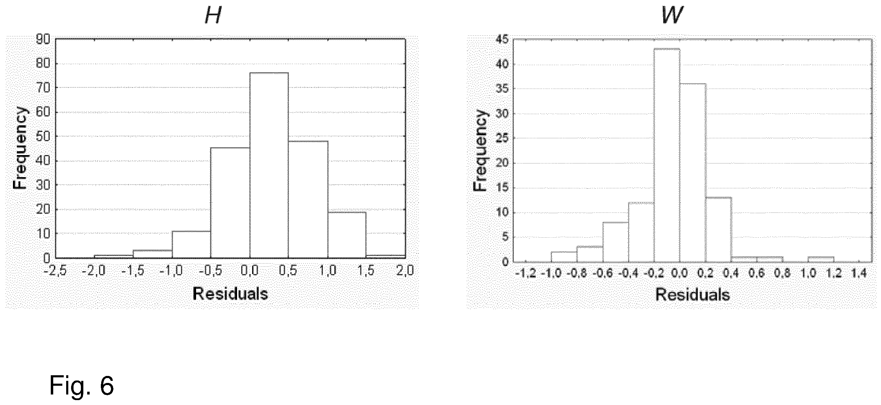

Fig. 6 shows histograms of the residuals measured in mbar for both laminate H and laminate W. The histograms are symmetric around zero and exhibit a shape close to a normal distribution, while statistical inferences based on normal distribution are acceptable.

The model for the increase of pressure, which found by fitting the data based on small test panels (about 10 cm × 10 cm × 1 cm and 20 cm × 20 cm × 1 cm) with laminate H, is tested on the larger panels (about 48 cm × 48 cm × 2 cm).

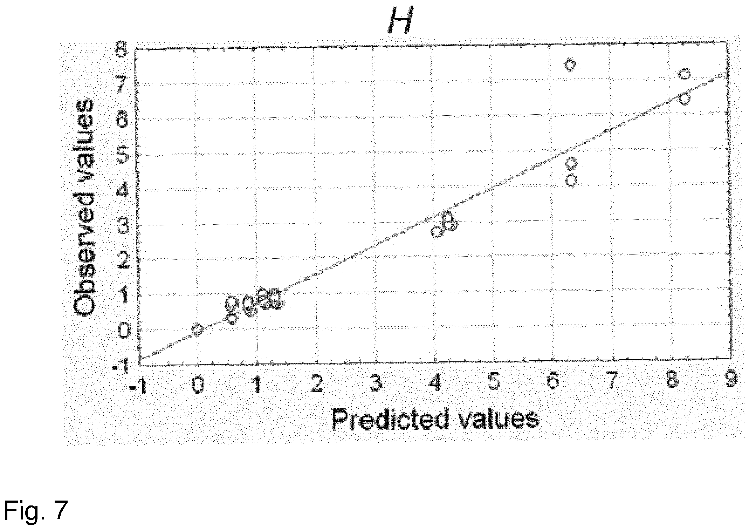

Fig. 7 shows the predicted values plotted against the observed values of the larger panels. Overestimating the observed values is consistent with the fact that the laminates of the small panels slightly differ from the laminate of the larger panels.

For a model based prediction the nonlinear model (13) integrates three types of influential factors expressed by the vector x:

1) geometry (sealing length, surface area, volume);
2) temperature; and
3) time.

Experiments are performed under specific factor levels, like small test panels, accelerated temperature, relatively short time. Under these conditions, the model aforementioned parameters are estimated.

The response "pressure increase" $Y = g(x, \beta) + \varepsilon$ is predicted under usage conditions, i.e. under the following values of the factors, i.e. of the components of x: geometry of usage panels, usually larger than test panels; ambient temperature under usage conditions; and extended time.

The prediction is based on two components, namely point prediction and interval prediction.

The point prediction is a prediction of the expected value $\hat{Y} = g(x, \hat{\beta})$, ignoring random deviation effects expressed by the residual $\varepsilon$.

The interval prediction accounts for the effect of the residual $\varepsilon$. The structure of the interval prediction is

$$B_x = \left( \hat{Y} - z \hat{\sigma}_\varepsilon o(\hat{\beta}); \;\; \hat{Y} + z \hat{\sigma}_\varepsilon o(\hat{\beta}) \right) \qquad (16)$$

By suitable choice of $z = z \left( \frac{1+\gamma}{2} \right)$, a prescribed forecasting confidence level $\gamma$, e.g. 95%, can be achieved, i.e. $z = z \left( \frac{1+\gamma}{2} \right)$ can be chosen so as to provide

$$\mathsf{P}(Y \in B_x) = \gamma. \qquad (17)$$

I.e. the probability that the real pressure increase value $Y$ lies in the interval $B_x$ is $\gamma$. Technical issues and the theoretical background is explained above.

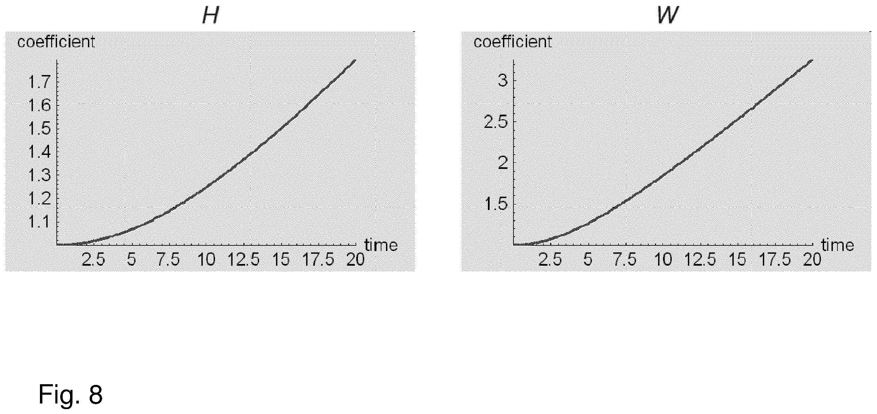

Fig. 8 shows the coefficient $o(\hat{\beta})$ of the prediction interval (16) as a function of time (measured in years) for panel types H and W. The prediction is for a temperature of 20 °C and panel size 100 cm $\times$ 50 cm $\times$ 2 cm. Since multiplying this coefficient by the variance $\hat{\sigma}_\varepsilon$ of the residual $\varepsilon$ and $z = z_{t(n-k')} \left( \frac{1+\gamma}{2} \right)$, the $\frac{1+\gamma}{2}$ -quantile of Student's t-distribution $t(n - k')$ leads to a half-length of the prediction interval and it is shown that the length of the prediction interval increases in time.

Experimental design under the nonlinear approach is discussed under consideration of the nonlinear model (13).

For selection of measuring points the panels are denominated as "testing panels". Each testing panel is measured at three different time points $t_1 < t_2 < t_3$, i.e. the regressor variable $x_5$ in model (13) takes three different values.

In this case it is possible to reveal occasional problems and disturbances in the measuring process. A reasonable distribution of measuring points is to measure at the beginning of the experiment and after two equally sized time intervals. Accordingly $t_1$ is the starting time of the experiment and $t_2 = 0.5 (t_1 + t_3)$. The time length of the experiment is determined by the comparison of the following calculations:

1) The increase of pressure in a panel is predicted by the value $g(x, \hat{\beta})$ or the nonlinear regression function (13), where $x$ is the prediction point with respect to the regression factors and where $\beta$ is estimated from all available observations.

2) The increase of pressure in a panel is predicted by the value of the nonlinear regression function (13), where $x$ is the prediction point with respect to the regression factors, and where $\beta$ is estimated from the observations at three selected time points more or less equidistant in time. Additionally the time period is varied.

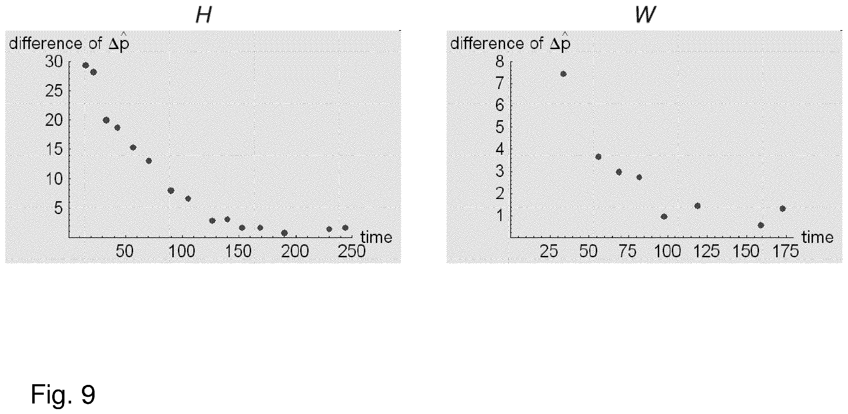

Fig. 9 shows the increase in precision of the prediction of pressure increase $\Delta \hat{p}$ as a function of the duration (measured in days) of the experiment. The vertical axis represents the difference in absolute values of two predictions measured in mbar. One is based on all available observations, whereas the other is based on a shorter measuring period with only three measurements. In general the the precision raises the longer the testing panels are kept in the experiment. The prediction is for 10 years and 20 °C and panels of size 100 cm $\times$ 50 cm $\times$ 2 cm. To achieve an accuracy of about 2 mbar in the predicted pressure increase of 10 years and 20 °C, panel size 100 cm $\times$ 50 cm $\times$ 2 cm, a minimum measuring time of about 100 days is used.

Fig. 9 further shows the difference in absolute values between the predicted pressure increase $\Delta \hat{p}$ measured in mbar based on an estimation of $\hat{\beta}$ from all available observations, measured over the total period of 250 days and respectively 170 days, and predicted values based on an estimation of $\hat{\beta}$ over a shorter period and with only three measurements in time. The x-axis depicts the length of this period varied (measured in days). The prediction is for 10 years and 20°C, panels of size 100 cm × 50 cm × 2 cm.

The choice and number of testing panels and the statistical sample size is calculated from the following components:

- The number of independently varying factors is three, namely temperature, geometry, time. The humidity remains uncontrolled at ambient levels. The numbers of levels of these factors are: 3 levels of temperature, 2 geometric levels, 3 time levels, as compared to above.

- Each of the 3 × 2 = 6 combinations of temperature and geometry requires 1 testing panel. Observations at the 3 time levels are taken for each panel. Hence each experimental unit should use 3x2 = 6 panels.

- In order to guarantee the validity of the experiment in case of unexpected events like improper or destroyed material, the minimum number of experimental units should be 2, i.e. 2x6 = 12 panels.

- The number of experimental units can be successively increased starting from 2. If q is the total number of experimental units, then q = 2, 3, 4

- The number of panels for q experimental units is q×6. Each new experimental unit can use 6 additional testing panels.

- The total statistical sample size $n$ counts all measurements. Under $q$ experimental units, each of the $q$×6 panels is measured at 3 time points. Hence the statistical sample size is $n$ = $q$×6×3 = $q$×18. Each new experimental unit uses 6x3 = 18 additional measurements.

- Under a statistical sample size n, the required number of testing panels is $k=n/3$. In order to decide how many testing panels should be included in the experiment, the length of the prediction interval for the increase of pressure under certain conditions can be considered.

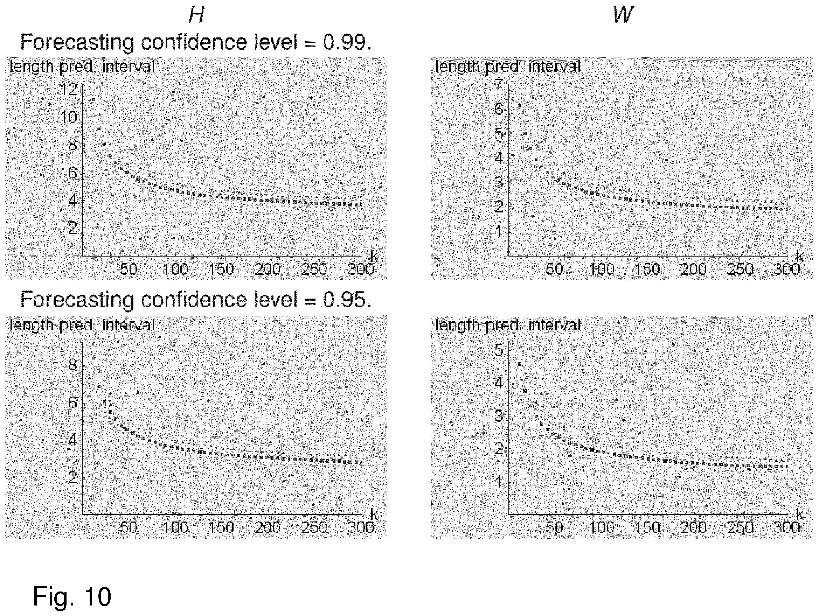

Fig. 10 shows the relation between the number k of testing panels and the length of the prediction interval (16) for each laminate type in a prediction for temperature 20 °C and 10 years and panels of size 100 cm×50 cm×2 cm, measured at the beginning and about 50 and 110 days after the first measuring at forecasting confidence levels of 99% and 95%.

The calculations are based on the parameter estimates $\tilde{\beta}$ and variance estimate $\hat{\sigma}_\varepsilon^2$ from the nonlinear regression using all available observations. The lengths of the prediction intervals are plotted that result when the estimated variance $\hat{\sigma}_\varepsilon^2$ and its lower $(\hat{\sigma}_{\varepsilon L}^2)$ and upper confidence limit $(\hat{\sigma}_{\varepsilon U}^2)$ at the 95%-level are used for the calculation, i.e. with a probability of 0.95 the true value of $\sigma_\varepsilon^2$ lies in the interval $[\hat{\sigma}_{\varepsilon L}^2; \hat{\sigma}_{\varepsilon U}^2]$. The plots indicate that the length of the prediction interval (16) decreases if the number k of testing panels is increased. Furthermore there is only a minor decrease in the length of the prediction interval observed for the number k of testing panels ≥ 120.

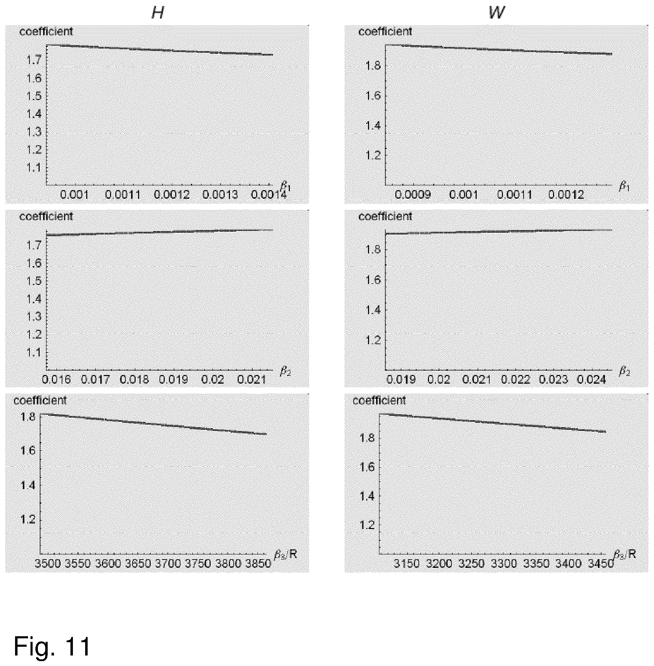

Fig. 11 shows the sensitivity of the coefficient $o(\tilde{\beta})$ of the prediction interval (16) to the estimation of the parameters $\beta_1$ = $c_{LS}$ (coefficient of the sealing), $\beta_2$ = $c_A$ (coefficient of the surface area) and $\frac{\beta_3}{R} = E$ (activation energy) of model (13) (R = 8.314472 (J/(mol K))) for both laminate types. For the calculation the number of testing panels is set to 60, i.e. the number of experimental units is 10. The prediction is for 10 years and 20°C and panels of size 100 cm × 50 cm × 2 cm. Only one parameter $\beta_i$, i = 1, 2, 3 is varied at the same time in the range of its confidence interval, whereas the other two parameters $\beta_j$, j = 1, 2, 3, j ≠ i are kept constant. The coefficient of the prediction interval changes is constant when varying the parameter estimates. Therefore the assumption the performed experiment with the small test panels of types H and W is a representative for experiments of that kind, since the coefficient $o(\hat{\beta})$ of the prediction interval (16) and thus also the length of the prediction interval, are hardly sensitive to slight changes of the parameter estimates.

The fit of the nonlinear model (13) with only three parameters is satisfactory and implausible effects are not observed. In particular the nonlinear model can be used for extrapolating to lower temperatures. From this point of view the nonlinear model can be used for predictions of the development of pressure along the time axis.

Linearity testing under a univariate linear regression model without intercept is discussed. The univariate linear regression model without intercept is a special case of model (5) with $k = 1$, i.e. with only one regressor variable x and only one coefficient β. The model equation for the response $Y$ is

$$Y = \beta x + \varepsilon. \tag{18}$$

In the analysis of the panel internal gas pressure Y, the univariate regression model(18) arises as an instance of the nonlinear model (13) $Y = (\beta_1 x_1 + \beta_2 x_2) \exp\left(\frac{-\beta_3}{R} x_3\right) x_5 + \varepsilon$ without dependency on the mass term, if the geometric factors and the temperature are fixed. Then the variables $x_1$, $x_2$, $x_3$ are fixed. If

$$\beta = (\beta_1 x_1 + \beta_2 x_2) \exp\left(\frac{-\beta_3}{R} x_3\right), \quad x = x_5, \tag{19}$$

model (13) collapses into the model according to (18).

The univariate model is used below in the context of model validation as a basis of the linearity test by Fisher. The procedure of the Fisher-test is explained in general. Having a phenomenon with random response Y, the hypothesis

$$H: Y = \beta x + \varepsilon$$

of the validity of model (18) is to be tested. The empirical data base consists of $N = m_1 + ... + m_h$ observations Y assembled in the h groups $Y_{ij}$, $i = 1, ..., h$, $j = 1, ..., m_i$. For each group i, the data $Y_{i,1},..., Y_{i,mi}$ are observed under a fixed lexel $x_i$ of the regressor variable x. One requirement for Fisher's test of linearity is the assumption, that $m_i \geq 2$ for at least one $i=1, .,h$, i.e. for at least one level $x_i$ of the regressor variable we have more than one observation.

Fisher's test proceeds in the following steps:

1) Determine the customary least squares estimate $\hat{\beta}$ for $\beta$. This estimate is implemented as "univariate regression analysis without intercept" in every reasonable statistical package and even in EXCEL.
2) Determine the interpolations $\hat{Y}_i, = \hat{\beta} x_i$ for $i = 1, ..., h$.

3) For $i = 1, ..., h$ determine the arithmetical mean $\overline{Y}_i = \frac{1}{m_i} \sum_{j=1}^{m_i} Y_{ij}$ of the observations under fixed regressor level $x_i$.

4) Calculate the residual sum of squares

$$Q_0 = \sum_{i=1}^{h} \sum_{j=1}^{m_i} (Y_{ij} - \widehat{Y}_i)^2. \tag{20}$$

5) Calculate the replication sum of squares

$$Q_1 = \sum_{i=1}^{h} \sum_{j=1}^{m_i} (Y_{ij} - \overline{Y}_i)^2. \tag{21}$$

6) Calculate the lack of fit sum of squares

$$Q_2 = Q_1 - Q_0 = \sum_{i=1}^{h} m_i (\widehat{Y}_i - \overline{Y}_i)^2. \tag{22}$$

7) The hypothesis H: $Y = \beta x + \varepsilon$ of the validity of model (18) can be rejected at a confidence level of $\gamma$ 100% if the test statistic

$$\frac{Q_2/(h-1)}{Q_1/(N-h)} \tag{23}$$

is greater than or equals $z_F(h\text{-}1,N\text{-}n)(\gamma)$, which is the $\gamma$-quantile of the F-distribution $F(h - 1, N - h)$ with $h\text{-}1$ and $N\text{-}h$ degrees of freedom. $\gamma$ usually is chosen as $\gamma=0.95$ or $\gamma=0.99$. If the test statistic (23) does not exceed or equals $z_F(h\text{-}1,h)(\gamma)$, then the hypothesis $H$: $Y = \beta x + \varepsilon$ cannot be rejected.

An analysis of originally sized mass production panels is discussed

For the analysis of originally sized mass production panels geometric effects are irrelevant. Hence the mean value function $g(x, \beta)$ of the model (13) can be linearized by considering the logarithm of $g(x, \beta)$ :

$$\ln\left(g(\boldsymbol{x},\boldsymbol{\beta})\right) \;=\; \ln\left(\beta_1 x_1 + \beta_2 x_2\right) + \frac{-\beta_3}{R}x_3 + \ln(x_5). \tag{24}$$

This leads to considering the linear model

$$Y - \ln(t - t_0) \;=\; \theta_0 + \theta_1 z_1 + \varepsilon \tag{25}$$

with

$$\theta_0 = \ln\left(\beta_1 x_1 + \beta_2 x_2\right), \;\; \theta_1 = \frac{-\beta_3}{R}, \;\; z_1 = x_3. \tag{26}$$

The data of the larger panels (about 48 cm $\times$ 48 cm $\times$ 2 cm) is analyzed using the model (25). The analysis is the univariate special case of the aforementioned method for the multivariate linear model. Table 3 shows the estimates of the parameters $\theta_0$ and $\theta_1$ and the residual variance $\sigma_\varepsilon^2$ or the model (25) including confidence intervals at a reliability level of 95%.

The R- and R-squared-values are as follows:

Table 3: Empirical results for larger panels.

| | Estimate | Lower confidence limit | Upper confidence limit |
|---|---|---|---|
| $\theta_0$ | -6.33 | -6.45 | -6.22 |
| $\theta_1$ | -3780 | -4148 | -3412 |
| $\beta_3$ | 31428.7 | 34488.4 | 28369 |
| $\sigma_\varepsilon^2$ | 0.0618179 | 0.0386411 | 0.11453 |

R- and R-squared-values.

| | |
|---|---|
| R | 0.96312004 |
| R-squared | 0.92760021 |

Operating instructions for small test panels are discussed.

Regarding choice of the experimental factors and their levels ambient temperature is considered to be room temperature at about 20°C. Humidity is considered to be an uncontrolled experimental factor. Water vapor partial pressure is kept at typical values at ambient temperature. At 20°C, water vapor pressure is about 15 mbar.

The controlled experimental factors are temperature, geometry, and time elapsed. The levels of the controlled factors are as follows:

- Temperature, two level model: The lower temperature level is close to usage conditions. Hence, for practical reasons tolerable lower levels are close to ambient temperature, e. g. 20°C.

The upper temperature level should be tolerably high. At excessively high temperatures phase transitions with additional destructive effects can occur. Concluding from the experience from various measuring experiments, 70°C is appropriate. Water vapor pressure should not exceed values resulting automatically from ambient conditions.

- Temperature, three level model: Upper and lower levels are chosen as in the two level model. An intermediate temperature is chosen as the Arrhenius mean of the lower and upper level. For instance, the Arrhenius mean of the lower level 20°C and the upper level 70 °C is about 55 °C.

- Geometry: Two levels are achieved by varying the sealing length. The surface varies implicitly in the sealing length. The levels should be clearly distinct in the sense that the ratios of sealing length versus surface area differ substantially between the two levels. The experimental vacuum chamber restricts the linear extension of the test panels, typically at a maximum of 30 cm. For instance, the above analysed experiments ar perforemd with test panels of kernel extensions 10 cm $\times$ 10 cm (level one) and 20 cm $\times$ 20 cm (level two).

- Time elapsed: Each panel should me measured at three different time points $t_1 < t_2 < t_3$. A reasonable distribution of measuring points is to measure at the beginning of the experiment and after two equally sized time intervals. For example $t_1$ is the starting time of the experiment, and $t_2 = 0.5(t_1 + t_3)$.

In general the increase of pressure can be predicted more precisely the longer the panels are kept in the experiment. To achieve an accuracy of about 2 mbar in the predicted pressure increase in a prediction for 10 years and 20° C and panel size 100 cm $\times$ 50 cm $\times$ 2 cm, t3$\geq$100 days can be chosen.

The choice of the number of testing panels is discussed.

In order to cover all combinations of independently varying controlled factors like temperature, geometry and time, when the temperature has 3 and the geometry 2 levels, at least $3\times2 = 6$ testing panels (= 1 experimental unit) are used. Each testing panel is measured at 3 time levels. A minimum number of experimental units can be 2, i.e. $2\times6 = 12$ panels. The number of experimental units can be increased starting from 2, where each new experimental unit uses 6 additional testing panels and 18 additional measurements. The total number of measurements is summarized in the statistical sample size *n* and the statistical sample size is $n = q\times6\times3 = q\times18$.

The length of the prediction interval for the increase of pressure under certain conditions can be considered, to decide how many testing panels should be included in the experiment. Naturally, the length of the prediction interval decreases if the number *k* of testing panels increses. There might be only a minor decrease in the length of the prediction interval observed for the number *k* of testing panels $\geq$ 120.

A test of linearity is discussed.

Measurements can be checked for plausibility. Model (13) assumes the pressure to increase linearly in time when all of the other conditions, namely geometry and temperature, are kept constant.

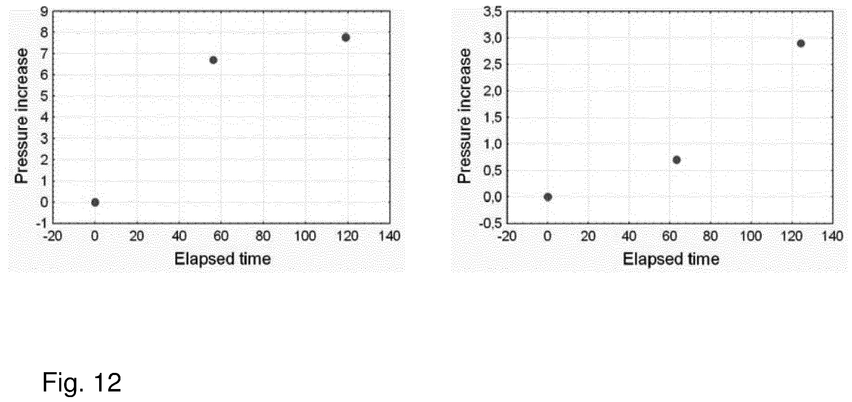

Fig. 12 shows an increase in pressure measured in mbar plotted against the elapsed time in days. Each plot shows the three measurements of one testing panel kept under constant conditions depcting a nonlinear relation between pressure increase and elapsed time.

The three measurements of each testing panel should are visually checked for nonlinearities. When plotting the pressure increase against the elapsed time, measuring points can be identified that are not consistent with the assumption of linearity. In this case the panel can be excluded from the experiment and not considered in further examinations.

Fig. 12 shows two situations for assesing linearity. The first plot reveals a higher slope of pressure increase in the beginning than between the second and third measuring. The second plot shows a comparibly high third measuring point, which can be an example for the destruction of a testing panel during the experiment due to unsatisfying handling of the panel.

A formal test of linearity is discussed.

When considering the nonlinear model (13) given by $$Y = (\beta_1 x_1 + \beta_2 x_2) \exp\left(\frac{-\beta_3}{R} x_3\right) x_5 + \varepsilon$$ without dependency on the mass term under fixed panel size and fixed temperature, the nonlinear model collapses into the linear model (18) $Y = \beta x + \varepsilon$ with $$\beta = (\beta_1 x_1 + \beta_2 x_2) \exp\left(\frac{-\beta_3}{R} x_3\right), \quad x = x_5$$

Hence a test for the validity of the univariate model *H*: $Y = \beta_x + \varepsilon$ under fixed panel size and fixed temperature can also provide a test for the validity of the nonlinear model (13). At least 2 equally sized panels are observed under a fixed temperature. Hence the requirements for Fisher's formal test of linearity described are satisfied. An application of the test is illustrated by the following example.

Example:

The pressure increase $Y$ of two panels is measured at three different time points $x$, namely at the beginning of the experiment, after 57 and after 105 days. The following table contains the data:

| i | $x_i$ | $y_{ij}$ |
|---|-------|----------|
| 1 | 0 | 0 |
| 1 | 0 | 0 |
| 2 | 57 | 2.6 |
| 2 | 57 | 2.4 |
| 3 | 105 | 3.3 |
| 3 | 105 | 3 |

The hypothesis is $H$: $Y = \beta x$. There are $h$ = 3 time points and $N$ = 6 observations. $m_i$=2 for $i$ = 1, 2, 3, because at each time point there are 2 measurements (1 for each panel). The replication sum of squares is

$$Q_1 = (0-0)^2 + (0-0)^2 + (2.6 - 2.5)^2 + (2.4 - 2.5)^2 + (3.3 - 3.15)^2 + (3 - 3.15)^2 = 0.065.$$

Performing a linear regression on the data results in an estimation of $\beta$ = 0.0331547. In the following table the replication averages $\bar{y}_i$ as well as the predicted values $\hat{y}_i$ and the residuals $\hat{\varepsilon}_{ij}$ are given.

| i | $x_i$ | $y_{ij}$ | $\bar{y}_i$ | $\hat{y}_i$ | $\hat{\varepsilon}_{ij}$ |
|---|-------|----------|-------------|-------------|--------------------------|
| 1 | 0 | 0 | 0 = (0+0)/2 | 0 | 0 |
| 1 | 0 | 0 | 0 = (0+0)/2 | 0 | 0 |
| 2 | 57 | 2.6 | 2.5 = (2.6+2.4)/2 | 1.88982 | 0.510183 |
| 2 | 57 | 2.4 | 2.5 = (2.6+2.4)/2 | 1.88982 | 0.710183 |
| 3 | 105 | 3.3 | 3.15 = (3.3+3)/2 | 3.48124 | -0.481242 |
| 3 | 105 | 3 | 3.15=(3.3+3)/2 | 3.48124 | -0.181242 |

The residual sum of squares is

$$Q_0 = 0^2 + 0^2 + 0.510183^2 + 0.710183^2 + (-0.481242)^2 + (-0.181242)^2 = 1.02909.$$

Thus the sum of squares due to lack of fit is

$$Q_2 = Q_0 - Q_1 = 1.02909 - 0.065 = 0.964089.$$

Therefore the test statistic takes the value

$$\frac{Q_2/(n-1)}{Q_1/(N-n)} = \frac{0.964089/(3-1)}{0.065/(6-3)} = 22.2482.$$

Further the value of the 95%-quantile of the F(2,3)-distribution is 5.78614. Since 22.2482 > 5.78614, the hypothesis that there is a linear relation of the form $Y = \beta x$ between $Y$ and $x$ can be rejected at a condidence level of 0.95.
Prediction of the proportion of nonconforming items is discussed.
To predict the proportion of nonconforming items, the point prediction $\hat{Y}(x)$ for the pressure increase as well as the prediction interval

$$B_x \;=\; \left( \widehat{Y}(x) - z\widehat{\sigma}_\varepsilon \sqrt{1 + d(\beta)^\top C(\beta) d(\beta)}; \; \widehat{Y}(x) + z\widehat{\sigma}_\varepsilon \sqrt{1 + d(\beta)^\top C(\beta) d(\beta)} \right)$$

can be examined. The interval prediction accounts for the effect of the residual $\varepsilon$ which is not visible in the point estimation.

By suitable choice of $z = z_{t(n-k')}\left(\frac{1+\gamma}{2}\right)$, which is the $\frac{1+\gamma}{2}$ 100%-quantile of Student's t-distribution $t(n - k')$, a prescribed forecasting confidence level $\gamma$ can be achieved, i.e. $z = z_{t(n-k')}\left(\frac{1+\gamma}{2}\right)$ can be chosen so as to provide

$$P(Y \in B_x) \;=\; \gamma.$$

I.e. the probability that the real pressure increase value $Y$ lies in the interval $B_x$ is $\gamma$. The prediction interval for the widely used forecasting confidence levels $\gamma = 0.95$ and $\gamma = 0.99$ is considered.

If the upper bound $\widehat{Y}(x) + z\widehat{\sigma}_\varepsilon \sqrt{1 + d(\beta)^\top C(\beta) d(\beta)}$ of the prediction interval for $\gamma = 0.99$ does not exceed a critical value c for the pressure increase, not more than 1% of the panels exceed $c$ in pressure increase.

If the upper bound of the prediction interval for $\gamma = 0.99$ is higher than the critical value $c$, then the prediction interval for $\gamma = 0.95$ can be calculated. If the upper bound of the prediction interval is below $c$, in the long run less than 5% of the panels exceed the critical value $c$.

To predict the proportion of nonconforming items, consider the following two cases:

1) $\widehat{Y}(x) < c$, i.e. the point prediction $\widehat{Y}(x)$ lies below the critical value $c$. In this case the upper bound $\widehat{Y}(x) + z\widehat{\sigma}_\varepsilon \sqrt{1 + d(\beta)^\top C(\beta) d(\beta)}$ of the prediction interval is considered. $\gamma$ is determined in a way, that

$$\widehat{Y}(x) + z\widehat{\sigma}_\varepsilon \sqrt{1 + d(\beta)^\top C(\beta) d(\beta)} = c$$

with $z = z_{t(n-k')}\left(\frac{1+\gamma}{2}\right)$. Then a proportion of less than $(1-\gamma) \cdot 100\%$ items exceeds the critical value c.

2) $\widehat{Y}(x) > c$, i.e. the point prediction $\widehat{Y}(x)$ lies above the critical value $c$. In this case the lower bound $\widehat{Y}(x) - z\widehat{\sigma}_\varepsilon \sqrt{1 + d(\beta)^\top C(\beta) d(\beta)}$ of the prediction interval is considered. $\gamma$ is determined in a way that:

$$\widehat{Y}(x) - z\widehat{\sigma}_\varepsilon \sqrt{1 + d(\beta)^\top C(\beta) d(\beta)} = c$$

with $z = z_{t(n-k')}\left(\frac{1+\gamma}{2}\right)$. Then a proportion of at least than $\gamma \cdot 100\%$ items exceeds the critical value c.

The unknown vector $\beta$ is replaced by the estimator $\widehat{\beta}$ obtained from the actual experiment. The estimator is determined by the above described method.

In industrial applications, bounds $\tilde{c}$ for the absolute value of the thermal conductivity are prescribed, e.g. $\tilde{c} = 0.008$ W/(m·K) after 2 years and $\tilde{c} = 0.015$ W/(m · K) after 10 years. The bound $\tilde{c}$ for the thermal conductivity can be converted into a critical value c for the pressure increase using the following equation, as compared to equations (1) - (3).

$$c \;=\; \frac{\tilde{c} \cdot p_{1/2}}{\lambda_{free\,gas} - \tilde{c}} - \frac{\lambda_{gas}(t_0) \cdot p_{1/2}}{\lambda_{free\,gas} - \lambda_{gas}(t_0)} \;\approx\; \frac{p_{1/2}}{\lambda_{free\,gas}} \left( \tilde{c} - \lambda_{gas}(t_0) \right) . \qquad (27)$$

The constants are $\lambda_{free\,gas} = 25.5 \times 10^{-3}$ W/(m·K) and $p_{1/2} = 650 +/- 100$ mbar. An initial value $\lambda_{gas}(t_0)$ of the thermal conductivity is either given by the manufacturer of the panels or can be measured at the beginning of the experiment.

The estimation of parameters in the nonlinear model can be performed with a statistical package. In particular, the prediction of the proportion nonconforming requires a programming environment.

For the description of the physical basics on heat transfer in vacuum insulation panels, as well as on degradation effects due to penetrating gases see Report ZAE 2 - 1108 - 12 (2008). Different to kernels made of fumed silica a significant increase in the thermal conductivity with increasing gas pressure not only occurs in the pressure range above 10 mbar, but already in the range of a few tenths of a mbar (see figure 1).

Accordingly, for low degradation rates in the insulation capability vacuum tight envelopes with penetration rates of a factor of 10 to 100 smaller can be used.

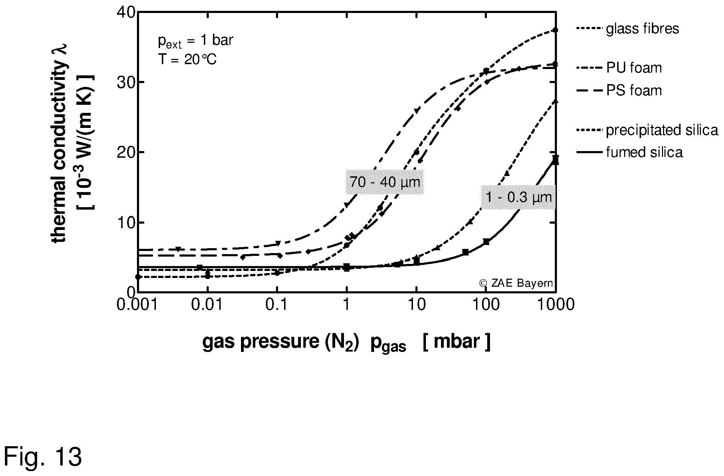

Fig. 13 shows the thermal conductivity for different core materials that are optimized for the application in VIP depending on (nitrogen) gas pressure.

A coupling effect considerably at kernels made of glass fibres is taken into account. In the evacuated state dot-like contacts between single glass fibres yield high thermal resistances. In the non-evacuated state this contact resistance is bypassed by the gas. Consequently a total thermal conductivity results that is larger than expected for the sum of the thermal conductivity of the evacuated specimen and the thermal conductivity of the free, non-convecting gas:

$$\lambda_{tot} = \lambda_{evac} + \lambda_{gas} + \lambda_{coupl} \qquad (28)$$

with

$\lambda_{tot}$ being the total thermal conductivity;
$\lambda_{evac}$ being the thermal conductivity of the evacuated material;
$\lambda_{gas}$ being the contribution of the gas according Knudsen formula (see below); and
$\lambda_{coupl}$ an additional coupling term.

According to considerations done by Knudsen the contribution of the gas to the total thermal conductivity depending on the gas pressure $p_{gas}$ can be described by:

$$\lambda_{gas}(p_{gas}) = \frac{\lambda_{free\ gas}}{1 + {p_{1/2}}/{p_{gas}}} \qquad (29)$$

$\lambda$free gas and $p_{1/2}$ are constant properties of the gas and the porous matrix.

The additional coupling effect especially is pronounced at higher gas pressures, as shown in Fig. 13 by the values between 100 and 1000 mbar. The contribution of the coupling effect is taken into account in a modified empirical equation:

$$\lambda_{gas}(p_{gas}) + \lambda_{coupl}(p_{gas}) = \frac{\lambda_{free\ gas}}{1 + {p_{1/2}}/{p_{gas}}} + \frac{a}{1 + {b}/{p_{gas}}} \qquad (30)$$

The two additional constants $a$ and $b$ can be determined experimentally.

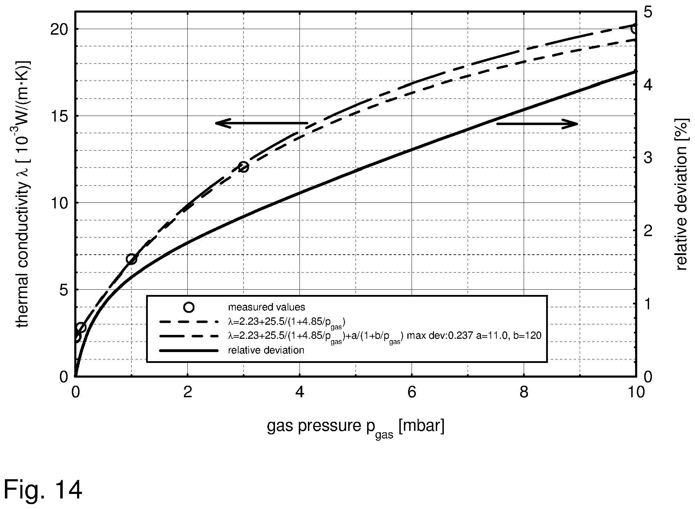

In Fig. 14 the measured thermal conductivity depending on the gas pressure is depicted (circles) for a presumably similar kernel made of glass fibres. The X-axis in Fig. 14 is a linear scale, with the pressure range delimitated from 0 to 10 mbar. Fig. 2 additionally comprises an analytical description according to the Knudsen formula - dashed line - as well as an empirical description including coupling effects - long dashed line. The difference of the two formula descriptions related to the thermal conductivity according Knudsen, i.e. a 'relative deviation' - solid line, is related to the right Y-axis.

Fig. 14 further shows the thermal conductivity of a kernel made of glass fibres depending on the gas pressure: measured values - circles, analytical description according Knudsen formula - dashed line and an empirical description including coupling phenomena - long dashed line. The difference between the two formula descriptions related to the thermal conductivity according Knudsen that are referred to as 'relative deviation', is related to the right Y-axis - solid line.

The increase of the internal gas pressure that causes the degradation of the thermal performance of the vacuum insulated panel - VIP - is linearly in time. In contrast to kernels made of fumed silica at accelerated tests of VIP with glass fibre kernels the internal gas pressure increases up to a pressure region, at which the increase of the thermal conductivity can be no longer considered as linearly with gas pressure. Thus the nonlinearity due to 'saturation' according Knudsen formula can be taken into account. Experimental tests as well as analyses can be limited to the pressure range below 10 mbar. Within this region the thermal conductivity increases up to a value of approximately 0.020 W/(m·K), which is a value that cannot be reached in practical application even at longer service time. Within this region the influence of the coupling effect remains below 4%. Thus in the following considerations the coupling effect can be neglected.

The permeating water vapor can be assumed to be adsorbed by dryers or getters on a sufficiently low pressure level so that there is no significant effect on the thermal conductivity.

Regarding the used physical regression model the increase of the thermal conductivity is related to penetrating (dry) gases. The sensitivity on the gas pressure depends on a characteristic parameter of the filler material $p_{1/2}$, the pressure, at which gas contribution is the half of thermal conductivity of free, non-convecting gas. This parameter is affected by the mean effective pore size.

Whether a larger increase is caused by a higher permeability of the envelope or whether it is caused by a higher sensitivity of the filler material due to larger effective pores, cannot precisely determined. In the regression model rates of increase of gas pressure and initial gas pressure are given in multiples of $p_{1/2}$.

From the measurements it can also not determined precisely, whether higher or different values of the thermal conductivity measured at the beginning of the tests are related to different thermal conductivity of the evacuated kernels or whether they are related to different internal gas pressures significantly affecting the total thermal conductivity.

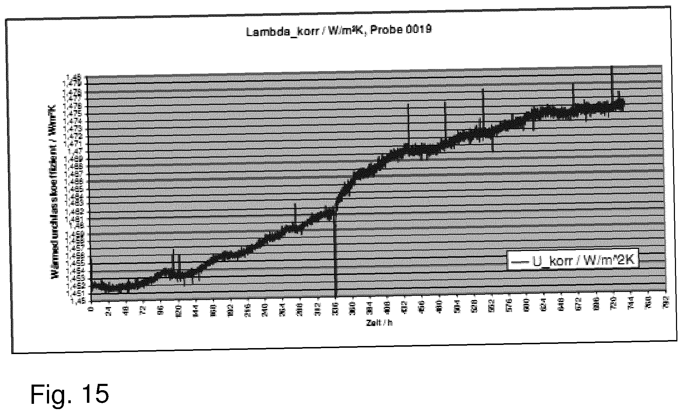

Fig. 15 shows a time curve of a measured heat conductivity coefficient.

In the following, the empirical basis of the measurements will be described.

The empirical data base consisted in two data sets from experiments. In a first experiment, the measurings showed very small increases in the thermal conductivity in the panel. The experiment had the following characteristics:

- Experimental objects: The experimental or testing objects were specially prepared small panels of one brand with sizes of about 35 cm × 35 cm × 1 cm
- Measured experimental responses: heat transfer coefficient
- Experimental factors: temperature, time
- Experimental conditions: The panels were stored under two different temperature levels: 20°C (non-accelerated condition), 70°C (accelerated condition)
- Number of experimental objects: 8 test panels
- Experimental setting: 4 test panels under constant 20°C (non-accelerated condition). Four test panels temporarily under 70°C (accelerated condition), temporarily under 20°C (non-accelerated condition).
- Experimental period: 01.10.2008 until 23.04.2009
- Measurement method: 6 among the 8 panels were subject to measurements twice over the experimental period
- Distribution of measuring times: Each measurement of the heat transfer coefficient was extended over a time period between 3 and 31 days. During each period the heat transfer coefficient in a panel is measured every 5 minutes, so that all in all for each measuring period between about 800 and 9000 observations are available
- Stress conditions: The storage temperature of 70°C is considered as a stress condition that is not expected to occur in practice
- Experimental acceleration: The stress conditions described before allow the estimation of the activation energy which can be used for the prediction of the heat transfer coefficient when storing the panels under arbitrary temperatures

One measuring run (panel 46 = measuring run number 13, see table 5) of a panel showed results considerably different from all other measuring results. It was concluded that the panel was delivered with defects, for which reason it was not measured a second time and is not considered in further analysis. Furthermore the second panel which was not measured twice is excluded from the analysis (panel 51 = measuring run number 19). So in the sequel only a total of six panels, each with 2 measuring runs, is considered.

In addition, further measurements have been performed. For control purposes, the absolute values of the heat transfer coefficient were measured twice for each test panel during the experimental period. The specifications of this second measurement experiment are as follows:

- Experimental objects: The experimental or testing objects were specially prepared small panels of one brand with sizes of about 35 cm × 35 cm × 1 cm.

- Measured experimental responses: heat transfer coefficient

- Experimental factors: temperature, time.

- Experimental conditions: The panels were stored under two different temperature levels: 20°C (non-accelerated condition), 70°C (accelerated condition).

- Number of experimental objects: 10 test panels

- Experimental setting: 5 test panels under constant 20°C (non-accelerated condition). 5 test panels temporarily under 70°C (accelerated condition), temporarily under 20°C (non-accelerated condition).

- Experimental period: 01.10.2008 until 23.04.2009

- Measurement method: Each of the 10 panels was measured three times during the experimental period. Each measurement took about half a day.

- Distribution of measuring times: Each of the panels was measured in the beginning, after a period of 50 to 70 days and at the end of the experimental period.

The panels that had initially been stored under 70°C were transferred to a 20°C environment after their second measurement.

- Stress conditions: The storage temperature of 70°C is considered as a stress condition that is not expected to occur in practice.

- Experimental acceleration: The stress conditions described before allow the estimation of the activation energy which can be used for the prediction of the heat transfer coefficient when storing the panels under arbitrary temperatures.

The panel which in the measurements showed considerably different results from the other panels (panel 46, see table 5) also showed high degradation rates in the measurements. It is excluded from the further analysis based on the measurements.

According to an embodiment, an analysis of panel lifetimes, in particular, building a statistical model to enable forecasts of panel lifetime may be performed. The panel lifetime is defined as the time until panel failure. The panel fails if the value of the thermal conductivity exceeds a prescribed critical bound e c. The occurrence of an exceedance over a critical bound is identified with the death of the panel. Relevant critical bounds for thermal conductivity are between 0.008 W/(m· K) after 2 years and 0.015 W/(m· K) after 10 years.

In the present context, the thermal conductivity was measured directly as described. However, the thermal conductivity is essentially a function of panel internal gas pressure.

The functional relationships between thermal conductivity $\lambda_{gas}(t)$ at time t and gas pressure $p_{gas}(t)$ at time t are expressed by the following equation.

$$\lambda_{gas}(p_{gas}) \;=\; \frac{\lambda_{free\ gas}}{1 + \frac{p_{1/2}}{p_{gas}}}; \qquad\qquad (6.1)$$

The constants are $\lambda_{free\ gas} = 26 \times 10\text{-3 W/(m· K)}$ and $p_{1/2}$ gas pressure where the (unknown) thermal conductivity equals one half of $\lambda_{free\ gas}$ millibar.

The total thermal conductivity $\lambda_{gesamt} = Y = \lambda_{gas} + \beta_{evac}$ due to the influence of the gas pressure therefore results in the regression model

$$Y = f(x, \beta) + \varepsilon = \beta_{evac} + \frac{\lambda_{free\ gas}}{1 + \frac{\beta_0}{\beta_{-1}+\beta_1 \cdot \left[\sum_{i=1}^{2}\exp\left(\frac{-\beta_2}{R}z_{2i}\right)z_{3i}\right]}} + \varepsilon, \qquad (6.2)$$

With

$\beta_{evac}$ = thermal conductivity of the completely evacuated panel;
$\beta_{-1}$ = initial gas pressure; $\beta_0 = p_{1/2}$, $\beta_1$ = c, $\beta_2 = E$ (activation energy);

$x_{2i} = \frac{1}{T_{N,i,t}} - \frac{1}{T_0}$ for temperature level $N_i$ ($\overline{T}_{N,i,t}$ as described below);

$x_{3i} = d(i,t,N)$ = storage period of panel i in temperature level N;

$$(d(i,t,N) \text{ as described below}), \tag{6.3}$$

$t$ = time in days;
$T$ = temperature in K;
$R$ = gas constant; R = 8:314472(J/(mol K));
$T_0$ = reference temperature; T0 = 296:15 K:

There are basically 2 levels of temperatures: 20°C and 70°C. For each panel i, each point of time t let $T_{N,i,t}$ be the exact temperature, the panel j ist stored in temperature level N between t and t + 1.

For each panel i, each time point t and each temperature level N let d(i; t;N) be the storage period of panel i until t in the temperature level N and

$$\overline{T}_{N,i,t} = \frac{d(i,t-1,N) \cdot \overline{\overline{T}}_{N,i,t-1} + \left(d(i,t,N) - d(i,t-1,N)\right)T_{N,i,t-1}}{d(i,t,N)},$$

the average temperature in the temperature level N.

In the following, regression models will be described.

The statistical analysis is based on a model of the heat transfer coefficient, in order to predict the long-term thermal conductivity from observations over the short-term experimental period. This is a case for statistical regression analysis. The statistical analysis of experiments on VIPs has to account for two levels of variation:

1) Measurement-to measurement variation in runs of repeated measurements,
2) panel-to-panel variation resulting from manufacturing instability.

Because of the immaturity of the VIP manufacturing sector, panel-to-panel variation is particularly strong and serious. The subsequent study accounts for the above requirements by analysing experiments on VIPs by a nonlinear mixed regression model. Such models are often referred to as hierarchical nonlinear regression models.

With respect to mixed models, he basic modeling problem is to distinguish between variation resulting from panels and variation resulting from measurement. For a better understanding of this distinction, a sampling model is much more instructive than a structural model.

As to the distinction of groups, one has to distinguish groups of measurement taken under similar conditions. Two factors are relevant: the panels and the measurement periods. The factor "measurement period" is more distinctive. In general, each panel is subject to measurement in two periods, see table 5.

Groups defined by measurement periods. If groups are identified with measurement periods, the sampling model uses the following indices and counting variables:

- Group index i of measurement periods, $i \in M = \{12, ..., 25\}\backslash\{23\}$.

- The sample size $n_i$ in group i is the number $n_i$ of measurements during measurement period i.

- Index j of measurements. In measurement period i, j ranges over j = 1; :::; $n_i$.

Table 3: Parameters of the models (7.1), (7.3), (7.4), (7.6), (7.7) and (7.9).

| | |
|---|---|
| $\beta_0$ | thermal conductivity in the evacuated and dry state of the panel |
| $\beta_{-1}$ | $\beta_{-1} = p_0/p_{1/2}$ average initial relative gas pressure in a panel at time 0 |
| $\beta_1$ | $\beta_1 = c/p_{1/2}$ average increase of relative gas pressure per day |
| $\beta_2$ | activation energy |

(continued)

| | |
|---|---|
| $\beta$ | vector of $\beta$-regression coefficients |
| $b_{0i}$ | random deviation of the initial thermal conductivity of panel $i$ from the population average |
| $b_{-1i}$ | random deviation of the initial relative gas pressure of panel $i$ from the population average |
| $b_{1i}$ | random deviation of the increase of relative gas pressure of panel $i$ from the population average per day |
| $b_i$ | vector of random deviations of panel $i$ from the population average |
| $x_{time,20,i,j}$ | total non-accelerated exposure time of panel $i$ until measurement $j$ in days |
| $\overline{T}_{N,i,t}$ | average temperature of panel $i$ at the time point $t$ in temperature group $N$ in K |
| $T_0$ | $T_0$ = 296.15 K reference temperature |
| $\alpha_{temp,70,i}$ | $\alpha_{temp,70,i} = \dfrac{1}{\overline{T}_{70,i,t}} - \dfrac{1}{T_0}$ transformed accelerated temperature applied to panel $i$ |
| $x_{temp,20,i}$ | $x_{temp,20,i} = \dfrac{1}{\overline{T}_{20,i,t}} - \dfrac{1}{T_0}$ transformed non-accelerated temperature applied to panel $i$ |
| $\alpha_{co,20,i}$ | $\alpha_{co,20,i} = \exp\left(\dfrac{-\beta_2}{R} x_{temp,20,i,j}\right)$ applied to panel $i$ in non-accelerated temperature group |
| $\alpha_{time,70,i}$ | total accelerated exposure time of panel $i$ |
| $\alpha_{d,i}$ | thickness of the panel $i$ |
| $\alpha_i$ | $\alpha_i = (\alpha_{d,i}, \alpha_{temp,70,i}, \alpha_{time,70,i})$ vector of the levels of the observable factors varying only with the groups $i$ and not with measurement time $j$ |

Table 4: Parameters of the models (7.1), (7.3), (7.4), (7.6), (7.7) and (7.9).

| | |
|---|---|
| $x_{i,j}$ | $x_{i,j} = (x_{temp,20,i,j}, x_{time,20,i,j})^T$ vector of the levels of the observable factors varying with the groups $i$ and with measurement time $j$ in days |
| $\varepsilon_{i,j}$ | measurement errors or measurement residuals |
| $\varepsilon_i$ | $\varepsilon_i = (\varepsilon_{i,1}, ..., \varepsilon_{i,n_i})^T$ collection of measurement errors $\varepsilon_{i,1}, ..., \varepsilon_{i,n_i}$ |
| $Y_i$ | $Y_i = (Y_{i,1}, ..., Y_{i,n})^T$ vector of the $n_i$ measurements obtained in group $i$. |
| $R$ | universal gas constant $R$ = 8.314472 J $\times$ mol$^{-1}$ $\times$ K$^{-1}$ |
| $\lambda_{free\ gas}$ | thermal conductivity $\lambda_{free\ gas}$ = 26 $\cdot$ 10$^{-3}$ W $\times$ m$^{-1}$ $\times$ K$^{-1}$ of the free and still gas |

Furthermore, groups may be defined by panels. If groups are identified with panels, the sampling model uses the following indices and counting variables:

- Group index i of panels, , $i \in M$ = {43, ...., 51}\{47}.

- The sample size $n_i$ in group i is the number $n_i$ of measurements taken on panel i.

- Index j of measurements taken on the panel. With respect to panel i, j ranges over $j$ = 1, ..., $n_i$.

In the following, a mixed model with random shift in location will be described.

The mixed nonlinear regression model with a random location shift $b_{0i}$ for each group $i \in$ {12, ..., 25} \ {23} or $i \in$ {43, ..., 51}\{47} is based in the following equations:

$$f(\boldsymbol{x}_{ij}, \boldsymbol{a}_i, \boldsymbol{\beta}, \boldsymbol{b}_i) \;=\; \frac{1}{a_{d,i}}\left(\beta_0 \;+\; b_{0i} \;+\; \frac{\lambda_{free\ gas}}{1+\frac{1}{\beta_{-1}+\beta_1\cdot\left[a_{co,20,i}x_{time,20,i,j}+\exp\left(\frac{-\beta_2}{R}a_{temp,70,i}\right)a_{time,70,i}\right]}}\right) \;= \tag{7.1}$$

$$\frac{1}{a_{d,i}}\left(\beta_0 \;+\; b_{0i} \;+\; \lambda_{free\ gas}\times\left\{1-\frac{1}{1+\beta_{-1}+\beta_1\cdot\left[a_{co,20,i}x_{time,20,i,j}+\exp\left(\frac{-\beta_2}{R}a_{temp,70,i}\right)a_{time,70,i}\right]}\right\}\right), \tag{7.2}$$

$$Y_{ij} \;=\; f(\boldsymbol{x}_{ij}, \boldsymbol{a}_i, \boldsymbol{\beta}, \boldsymbol{b}_i)+\varepsilon_{i,j} \tag{7.3}$$

$i \in \{12,...,25\} \setminus \{23\}$ or $i \in \{43,.., 51\} \setminus \{47\}$, $j = 1,...,n_j$.

For

In the following, a fixed model with random shifts in location and slope will be described.

The mixed nonlinear regression model with a random location shift $b_{0i}$ and a random shift $b_{li}$ in the slope for each group $i \in \{12,..., 25\} \setminus \{23\}$ or $i \in \{43,..., 51\} \setminus \{47\}$ is based on the following equations:

$$f(\boldsymbol{x}_{ij}, \boldsymbol{a}_i, \boldsymbol{\beta}, \boldsymbol{b}_i) \;=\; \frac{1}{a_{d,i}}\left(\beta_0 \;+\; b_{0i} \;+\; \frac{\lambda_{free\ gas}}{1+\frac{1}{\beta_{-1}+(\beta_1+b_{1i})\cdot\left[a_{co,20,i}x_{time,20,i,j}+\exp\left(\frac{-\beta_2}{R}a_{temp,70,i}\right)a_{time,70,i}\right]}}\right) \;= \tag{7.4}$$

$$\frac{1}{a_{d,i}}\left(\beta_0 \;+\; b_{0i} \;+\; \lambda_{free\ gas}\times\left\{1-\frac{1}{1+\beta_{-1}+(\beta_1+b_{1i})\cdot\left[a_{co,20,i}x_{time,20,i,j}+\exp\left(\frac{-\beta_2}{R}a_{temp,70,i}\right)a_{time,70,i}\right]}\right\}\right), \tag{7.5}$$

$$Y_{ij} \;=\; f(\boldsymbol{x}_{ij}, \boldsymbol{a}_i, \boldsymbol{\beta}, \boldsymbol{b}_i)+\varepsilon_{i,j} \tag{7.6}$$

For $i \in \{12,...,25\} \setminus \{23\}$ or $i \in \{43,...,51\} \setminus \{47\}$, $j = 1,...,n_j$.

In the following, a second mixed model with random shifts in location and slope will be described.

The location shift can also be allocated to the parameter $\beta_{-1}$. The mixed nonlinear regression model with a random location shift b-1i and a random shift $b_{1i}$ in the slope for each group $i \in \{12,...,25\} \setminus \{23\}$ or $i \in \{43,..., 51\} \setminus \{47\}$ is based in the following equations:

$$f(\boldsymbol{x}_{ij}, \boldsymbol{a}_i, \boldsymbol{\beta}, \boldsymbol{b}_i) \;=\; \frac{1}{a_{d,i}}\left(\beta_0 \;+\; \frac{\lambda_{free\ gas}}{1+\frac{1}{\beta_{-1}+b_{-1i}+(\beta_1+b_{1i})\cdot\left[a_{co,20,i}x_{time,20,i,j}+\exp\left(\frac{-\beta_2}{R}a_{temp,70,i}\right)a_{time,70,i}\right]}}\right) \;= \tag{7.7}$$

$$\frac{1}{a_{d,i}}\left(\beta_0 + \lambda_{free\ gas} \times \left\{ 1 - \right.\right.$$

$$\left.\left.\frac{1}{1 + \beta_{-1} + b_{-1i} + (\beta_1 + b_{1i}) \cdot \left[ a_{co,20,i} x_{time,20,i,j} + \exp\left(\frac{-\beta_2}{R} a_{temp,70,i}\right) a_{time,70,i}\right]}\right\}\right), \quad (7.8)$$

$$Y_{ij} = f(x_{ij}, a_i, \beta, b_i) + \varepsilon_{i,j} \quad (7.9)$$

$i \in \{12,... 25\} \setminus \{23\}$ or $i \in \{43,...,51\} \setminus \{47\}$, $j = 1,..., n_i$.

For

In the following, the parameters in the mixed models (7.1), (7.3) and (7.4), (7.6) will be described.

The parameters in the models (7.1), (7.3), (7.4), (7.6), (7.7) and (7.9) can be derived from the tables 3 and 4.

Further comments on the parameters:

- Approximately, $\overline{T}_{20,i,j} = 293.0$, hence

$$x_{temp,20,i,j} \approx \frac{1}{293.0} - \frac{1}{296.15} = 0.0000363021.$$

Obviously, the variation of $x_{temp,20,i,j}$ is too small to allow the estimation of the activation energy $\beta_2$ from panels stored under non-accelerated temperature only. From prior physical knowledge, values $4 \cdot 10^4 \le \beta_2 \le 5 \cdot 10^4$ are to be expected. The gas constant R is $R = 8.314472$ (J/(mol K)). Hence

$$0.803879 = \exp\left(\frac{-50000}{8.314472}0.0000363021\right) \le a_{co,20,i} \le$$

$$\exp\left(\frac{-40000}{8.314472}0.0000363021\right) = 0.839755. \quad (7.10)$$

- The random parameters are collected in the vectors $\cdot b_i = (b_{0i})^T$ for model (7.3), $b_i = (b_{0i}, b_{1i})^T$, for model (7.6) and $b_i = (b_{-1i}, b_{1i})^T$, for model (7.6), respectively. If groups are defined by measurement periods, the vectors $b_i$, $i \in \{12,...,25\} \setminus \{23\}$ express variation due to different panels and different measurement set-ups. If groups are defined by panels, the vectors $b_i$, $i \in \{43,..., 51\} \setminus \{47\}$ express variation due to different panels.

In the following, stochastic assumptions on the mixed models (7.1), (7.3) and (7.4), (7.6) will be described.

For each measurement period i, the residual vector $\varepsilon_i$ and the vector of measurement set-up deviations are considered to be independent. In particular, $\varepsilon_i$ has the parameters

$$E[\varepsilon_i|b_i] = E[\varepsilon_i] = 0, \qquad \text{Cov}[\varepsilon_i|b_i] = \text{Cov}[\varepsilon_i] = V_i, \quad (7.11)$$

Stochastic variables corresponding to different measuring periods are considered to be independent. In particular, the family of residual vectors $\varepsilon_i$, $i \in \{12,...,25\} \setminus \{23\}$ or
$i \in \{43,....,51\} \setminus \{47\}$ and the family of measurement set-up variation vectors
$b_i$, $i \in \{12,...,25\} \setminus \{23\}$ or $i \in \{43,...,51\} \setminus \{47\}$, are independent families.

The measurement set-up variation vectors $b_i$, $i \in \{12,...,25\} \setminus \{23\}$, are considered to be i.i.d. with parameters

$$E[b_i] = 0, \qquad \text{Cov}[b_i] = \begin{pmatrix} \sigma_{b1}^2 & 0 \\ 0 & \sigma_{b2}^2 \end{pmatrix}. \quad (7.12)$$

From equations (7.11) and (7.12) we have

$$E[Y_{i,j}|b_i] \;=\; f(x_{ij}, a_i, \beta_i, b_i), \quad \mathrm{Cov}[Y_i|b_i] \;=\; \mathrm{Cov}[\varepsilon_i] \;=\; V_i, \qquad (7.13)$$

Table. 5: Panels and measurement periods

|  | panel number | number 1st measuring period | number 2nd measuring period |
|---|---|---|---|
| storing at 20°C | 43 | 16 | 24 |
|  | 44 | 17 | 25 |
|  | 45 | 18 | 26 |
|  | 46 | 13 | - |
|  | 47 | - | - |
| after first measuring storing at 70°C | 48 | 14 | 20 |
|  | 49 | 12 | 21 |
|  | 50 | 15 | 22 |
|  | 51 | 19 | - |
|  | 52 | - | - |

In the following, linear expansion of model equations will be described.

When all other parameters and variables are kept fixed, the regression function f(xij ; ai; β; bi) of model (7.4) grows nearly linearly in $x_{time,20,i,j}$. To simplify the investigation, we approximate $f(x_{ij}, \alpha_i, \beta, b_i)$ by its linear expansion around $x_{time,20,i,j}$ =0.. The derivative is

$$\frac{\partial}{\partial x_{time,20,i,j}} f(x_{ij}, a_i, \beta, b_i) \;=$$

$$\frac{\lambda_{free\ gas}}{a_{d,i}} \frac{\partial}{\partial x_{time,20,i,j}} \cdot$$

$$\left\{ 1 - \frac{1}{1 + \beta_{-1} + (\beta_1 + b_{1i}) \cdot \left[ a_{co,20,i} x_{time,20,i,j} + \exp\left(\frac{-\beta_2}{R} a_{temp,70,i}\right) a_{time,70,i} \right]} \right\} \;=$$

$$\frac{\lambda_{free\ gas}(\beta_1 + b_{1i}) a_{co,20,i}}{a_{d,i} \left\{ 1 + \beta_{-1} + (\beta_1 + b_{1i}) \cdot \left[ a_{co,20,i} x_{time,20,i,j} + \exp\left(\frac{-\beta_2}{R} a_{temp,70,i}\right) a_{time,70,i} \right] \right\}^2}$$

In particular

$$\frac{\partial}{\partial x_{time,20,i,j}} f(x_{ij}, a_i, \beta, b_i)\big|_{x_{time,20,i,j}=0} =$$

$$\frac{\lambda_{free\ gas}(\beta_1 + b_{1i})a_{co,20,i}}{a_{d,i}\left[1 + \beta_{-1} + (\beta_1 + b_{1i})\exp\left(\frac{-\beta_2}{R}a_{temp,70,i}\right)a_{time,70,i}\right]^2} \cdot$$

$$\frac{\partial}{\partial(\beta_1 + b_{1i})} f(x_{ij}, a_i, \beta, b_i) =$$

$$\frac{\lambda_{free\ gas}}{a_{d,i}} \frac{\partial}{\partial(\beta_1 + b_{1i})} \cdot$$

$$\left\{1 - \frac{1}{1 + \beta_{-1} + (\beta_1 + b_{1i})\cdot\left[a_{co,20,i}x_{time,20,i,j} + \exp\left(\frac{-\beta_2}{R}a_{temp,70,i}\right)a_{time,70,i}\right]}\right\} =$$

$$\frac{\lambda_{free\ gas}\left[a_{co,20,i}x_{time,20,i,j} + \exp\left(\frac{-\beta_2}{R}a_{temp,70,i}\right)a_{time,70,i}\right]}{a_{d,i}\left\{1 + \beta_{-1} + (\beta_1 + b_{1i})\cdot\left[a_{co,20,i}x_{time,20,i,j} + \exp\left(\frac{-\beta_2}{R}a_{temp,70,i}\right)a_{time,70,i}\right]\right\}^2}$$

The approximation by linear expansion around $x_{time,20,i,j} = 0$ provides

$$f(x_{ij}, a_i, \beta, b_i)\big|_{x_{time,20,i,j}=x} \approx$$

$$f(x_{ij}, a_i, \beta, b_i)\big|_{x_{time,20,i,j}=0} + x \cdot \frac{\partial}{\partial x_{time,20,i,j}} f(x_{ij}, a_i, \beta, b_i)\big|_{x_{time,20,i,j}=0} =$$

$$\frac{\beta_0 + b_{0i}}{a_{di}} + \frac{\lambda_{free\ gas}}{a_{d,i}}\left\{1 - \frac{1}{1 + \beta_{-1} + (\beta_1 + b_{1i})\cdot\exp\left(\frac{-\beta_2}{R}a_{temp,70,i}\right)a_{time,70,i}} + x\frac{(\beta_1 + b_{1i})a_{co,20,i}}{\left[1 + \beta_{-1} + (\beta_1 + b_{1i})\exp\left(\frac{-\beta_2}{R}a_{temp,70,i}\right)a_{time,70,i}\right]^2}\right\} \quad (7.14)$$

In the following, an application of the approximation (7.14) for panels stored under non-accelerated conditions will be described.

For the panels stored under non-accelerated conditions (approximately 20 °C), we have $\alpha_{time,70,i} = 0_!$, hence the approximation

$$f(x_{ij}, a_i, \beta, b_i)\big|_{x_{time,20,i,j}=x} \approx$$

$$\frac{\beta_0 + b_{0i}}{a_{di}} + \frac{\lambda_{free\ gas}}{a_{d,i}}\left\{1 - \frac{1}{1 + \beta_{-1}} + x\frac{(\beta_1 + b_{1i})a_{co,20,i}}{[1 + \beta_{-1}]^2}\right\} \cdot \quad (7.15)$$

In the following, an application of the approximation (7.14) for panels stored under accelerated conditions will be described.

For a simple application of the approximation (7.14) for panels stored under accelerated conditions (approximately 70 °C), we need a further approximation. Let $r,s > 0$ and consider the function

$$g_{r,s}(y) = \frac{1}{r + sy}, \quad h_{r,s}(y) = \frac{y}{(r + sy)^2} \quad \text{for } y > -r/s.$$

Then

$$g'_{r,s}(y) \;=\; \frac{-s}{(r+sy)^2}, \quad h'_{r,s}(y) \;=\; \frac{r^2 - s^2 y^2}{(r+sy)^4},$$

In particular

$$h'_{r,s}(0) \;=\; \frac{r^2}{r^4} \;=\; \frac{1}{r^2}, \quad g'_{r,s}(0) \;=\; \frac{-s}{r^2}.$$

Hence we obtain the approximations

$$g_{r,s}(y) \;\approx\; g_{r,s}(0) + g'_{r,s}(0)y \;=\; \frac{1}{r} - \frac{sy}{r^2}, \quad h_{r,s}(y) \;\approx\; h_{r,s}(0) + h'_{r,s}(0)y \;=\; y/r^2, \qquad (7.16)$$

for small $|y|$· $|\beta_1 + b_{1i}|$ is expected to be small. With

$$y \;=\; \beta_1 + b_{1i}, \quad r \;=\; 1 + \beta_{-1}, \quad s \;=\; \exp\!\left(\tfrac{-\beta_2}{R} a_{temp,70,i}\right) a_{time,70,i}$$

we obtain from (7.16)

$$\frac{1}{1 + \beta_{-1} + (\beta_1 + b_{1i}) \cdot \exp\!\left(\tfrac{-\beta_2}{R} a_{temp,70,i}\right) a_{time,70,i}} \;\approx\; \frac{1}{1 + \beta_{-1}} - \frac{\exp\!\left(\tfrac{-\beta_2}{R} a_{temp,70,i}\right) a_{time,70,i}(\beta_1 + b_{1i})}{(1 + \beta_{-1})^2},$$

$$\frac{(\beta_1 + b_{1i}) a_{co,20,i}}{\left[1 + \beta_{-1} + (\beta_1 + b_{1i}) \exp\!\left(\tfrac{-\beta_2}{R} a_{temp,70,i}\right) a_{time,70,i}\right]^2} \;\approx\; \frac{(\beta_1 + b_{1i}) a_{co,20,i}}{\left[1 + \beta_{-1}\right]^2}.$$

Inserting these approxiomations into (7.14), we obtain the approximation

$$f(x_{ij}, a_i, \beta, b_i)\big|_{x_{time,20,i,j}=x} \;\approx\;$$

$$\frac{\beta_0 + b_{0i}}{a_{di}} + \frac{\lambda_{free\ gas}}{a_{d,i}}\left\{ 1 - \frac{1}{1 + \beta_{-1}} + \frac{\exp\!\left(\tfrac{-\beta_2}{R} a_{temp,70,i}\right) a_{time,70,i}(\beta_1 + b_{1i})}{(1 + \beta_{-1})^2} + \right.$$
$$\left. x\frac{(\beta_1 + b_{1i}) a_{co,20,i}}{\left[1 + \beta_{-1}\right]^2} \right\} \qquad (7.17)$$

for $i \in M_{70}$· for $i \in M_{20}$ we have $\alpha_{time,70,i} = 0$·· Hence (7.17) can also be used to express the approximation (7.15) for $i \in M_{20}$·

In the following, shift estimations based on the approximation (7.17) of the model equation will be described.

In the subsequent approach, the parameters $\beta_{-1}$ and $\beta_2$ in model (7.4) are considered as prescribed. We fit univariate linear models

$$Y_{ij} \;=\; \alpha_{0i} + \alpha_{1i} x_{time,20,i,j} + \varepsilon_{ij}, \quad j = 1, ..., n_i \qquad (7.18)$$

to the data from groups i to obtain the OLS estimates $\hat{\alpha}_{0i}$, $\hat{\alpha}_{1i}$. Using the approximations (7.15) and (7.17), we can develop estimators for $\beta_0$, $\beta_1$, and for the shift quantitities $b_{0i}$, $b_{1i}$·· Motivated by $E[b_{0i}] = 0 = E[b_{1i}]$, estimators $\hat{b}_{0i}$, $i \in M$, and $\hat{b}_{1i}$, $i \in M$, are required to satisfy

$$\sum_{i\in M}\widehat{b}_{0i} \;=\; 0 \;=\; \sum_{i\in M}\widehat{b}_{1i}. \tag{7.19}$$

In the following, an estimation of $\beta_1$ and $b_{li}$ will be described.
(7.15), (7.17), and (7.18) suggest the estimator

$$\widehat{\beta_1 + b_{1i}} \;=\; (1+\beta_{-1})^2 \frac{a_{di}\widehat{\alpha}_{1i}}{\lambda_{free\ gas}a_{co,20,i}} \tag{7.20}$$

for $\beta_1 + b_{li}$. Application of the summation rule (7.19) provides the estimator

$$\widehat{\beta}_1 \;=\; \frac{(1+\beta_{-1})^2}{|M|}\sum_{i\in M}\frac{a_{di}\widehat{\alpha}_{1i}}{\lambda_{free\ gas}a_{co,20,i}} \tag{7.21}$$

For $\beta_1$. Hence

$$\widehat{b}_{1i} \;=\; (1+\beta_{-1})^2 \left( \frac{a_{di}\widehat{\alpha}_{1i}}{\lambda_{free\ gas}a_{co,20,i}} - \frac{1}{|M|}\sum_{l\in M}\frac{a_{dl}\widehat{\alpha}_{1l}}{\lambda_{free\ gas}a_{co,20,l}} \right) \tag{7.22}$$

Estimates $b_{li}$,
**[0223]** In the following, estimation of $\beta_0$ and $b_{0i}$ will be described.
(7.15), (7.17), and (7.18) suggest the estimator

$$\widehat{\beta_0 + b_{0i}} \;=\; a_{di}\widehat{\alpha}_{0i} - \lambda_{free\ gas}\left[ \frac{\beta_{-1}}{1+\beta_{-1}} + \frac{\exp\left(\frac{-\beta_2}{R}a_{temp,70,i}\right)a_{time,70,i}(\widehat{\beta}_1+\widehat{b}_{1i})}{(1+\beta_{-1})^2} \right] \tag{7.23}$$

for $\beta_0 + b_{0i}$. Application of the summation rule (7.19) provides the estimator

$$\widehat{\beta}_0 \;=\; \frac{1}{|M|}\sum_{l\in M}a_{dl}\widehat{\alpha}_{0l} - $$
$$\lambda_{free\ gas}\left[ \frac{\beta_{-1}}{1+\beta_{-1}} + \frac{1}{|M|}\sum_{l\in M}\frac{\exp\left(\frac{-\beta_2}{R}a_{temp,70,l}\right)a_{time,70,l}(\widehat{\beta}_1+\widehat{b}_{1l})}{(1+\beta_{-1})^2} \right] \tag{7.24}$$

For $\beta_0$. Hence

$$\widehat{b}_{0i} \;=\; a_{di}\widehat{\alpha}_{0i} - \frac{1}{|M|}\sum_{l\in M}a_{dl}\widehat{\alpha}_{0l} - \frac{\lambda_{free\ gas}}{(1+\beta_{-1})^2}\times$$
$$\left[ \exp\left(\frac{-\beta_2}{R}a_{temp,70,i}\right)a_{time,70,i}(\widehat{\beta}_1+\widehat{b}_{1i}) - \frac{1}{|M|}\sum_{l\in M}\exp\left(\frac{-\beta_2}{R}a_{temp,70,l}\right)a_{time,70,l}(\widehat{\beta}_1+\widehat{b}_{1l}) \right] \tag{7.25}$$

estimates $b_{0i}$.
In the following, shift estimations based on the approximation (7.14) of the model equation will be described.
In the subsequent approach, the parameters $\beta_{-1}$ and $\beta_2$ are considered as prescribed. We fit univariate linear models

$$Y_{ij} = \alpha_{0i} + \alpha_{1i}x_{time,20,i,j} + \varepsilon_{ij}, \quad j = 1, \ldots, n_i \tag{7.26}$$

to the data from groups i to obtain the OLS estimates $\hat{\alpha}_{0i}$, $\hat{\alpha}_{1i}$. Using the approximation (7.14), we can develop estimators for $\beta_0$, $\beta_1$, and for the shift quantitities $b_{0i}$, $b_{li}$. Motivated by $E[b_{0i}] = 0 = E[b_{li}]$ estimators $\hat{b}_{0i}$, $i \in M$, and $\hat{b}_{li}$, $i \in M$, are required to satisfy

$$\sum_{i \in M} \hat{b}_{0i} = 0 = \sum_{i \in M} \hat{b}_{1i}. \tag{7.27}$$

In the following, a basic equation will be discussed.

We consider the function

$$h_{r,s,t}(y) = \frac{y}{(r+sy)^2} - t \qquad \text{with parameters } r, t > 0, s \geq 0. \tag{7.28}$$

In case of s = 0, the function $h_{r,s,t}$ has the unique zero $y_{r,s,t} = r^2t$.

In case of s > 0, the zeroes of the function $h_{r,s,t}$ are the zeroes of the quadratic function $ts^2y^2+(2rst-1)y+r^2t$ The discriminant of the quadratic equation $ts^2y^2+(2rst-1)y+r^2t =! 0$ is $D = \sqrt{1-4rst}$. In case of rst > 0:25, the quadratic equation $ts^2y^2+(2rst-1)y+r^2t=! 0$ has no solution. In case rst = 0:25, the quadratic equation $ts^2y^2+(2rst -1)y+r^2t =! 0$ has the unique solution $y_{r,s,t} = 1/(4ts^2)$ In case rst < 0:25, the quadratic equation $ts^2y^2 + (2rst -1)y + r^2t = !0$ has two solutions

$$y_{r,s,t}^{(1)} = \frac{1 - 2rst - \sqrt{1 - 4rst}}{2s^2t}, \quad y_{r,s,t}^{(2)} = \frac{1 - 2rst + \sqrt{1 - 4rst}}{2s^2t},$$

Where $0 < y_{r,s,t}^{(1)} < y_{r,s,t}^{(2)}$. We have

$$\lim_{s \downarrow 0} y_{r,s,t}^{(1)} = r^2t, \quad \lim_{s \downarrow 0} y_{r,s,t}^{(2)} = +\infty.$$

Hence the unique zero $y_{r,s,t} = r^2t$ from the case s = 0 is approximated by $y_{r,s,t}^{(1)}$, $s \downarrow 0$. To achieve compatibility of the solutions for the case s > 0 and for the case s = 0, one may to focus on the solution $y_{r,s,t}^{(1)}$.

In the following, estimation of $\beta_1$ and $b_{li}$ will be described.

Estimators $\beta_1$ and $b_{li}$ are obtained by equating the coefficient of x in (7.14) with $\hat{\alpha}_{1i}$ in the fitted linear model (7.26). The resulting equation is

$$\frac{(\hat{\beta}_1 + \hat{b}_{1i})}{\left[1 + \beta_{-1} + (\beta_1 + b_{1i})\exp\left(\frac{-\beta_2}{R}a_{temp,70,i}\right)a_{time,70,i}\right]^2} = \frac{\hat{\alpha}_{1i}a_{d,i}}{a_{co,20,i}\lambda_{free\ gas}},$$

or equivalently

$$h_{1+\beta_{-1},\exp\left(\frac{-\beta_2}{R}a_{temp,70,i}\right)a_{time,70,i},\frac{\hat{a}_{1i}a_{d,i}}{a_{co,20,i}\lambda_{free\ gas}}}(\hat{\beta}_1 + \hat{b}_{1i}) = 0.$$

The estimators are obtained by applying the previous results.

In case of $\alpha_{temp,70,i} = 0$, we obtain

$$\widehat{\beta}_1 + \widehat{b}_{1i} \quad = \quad (1 + \beta_{-1})^2 \frac{\widehat{\alpha}_{1i} a_{d,i}}{a_{co,20,i}\lambda_{free\ gas}}. \qquad (7.29)$$

In case of

$$a_{temp,70,i} > 0, \quad (1 + \beta_{-1}) \exp\left(\frac{-\beta_2}{R} a_{temp,70,i}\right) a_{time,70,i} \frac{\widehat{\alpha}_{1i} a_{d,i}}{a_{co,20,i}\lambda_{free\ gas}} \quad < \quad 0.25$$

We obtain

$$\widehat{\beta}_1 + \widehat{b}_{1i} \quad = \quad \left\{ 2\left[\exp\left(\frac{-\beta_2}{R} a_{temp,70,i}\right) a_{time,70,i}\right]^2 \frac{\widehat{\alpha}_{1i} a_{d,i}}{a_{co,20,i}\lambda_{free\ gas}} \right\}^{-1} \times$$

$$\left\{ 1 - 2(1 + \beta_{-1}) \exp\left(\frac{-\beta_2}{R} a_{temp,70,i}\right) a_{time,70,i} \frac{\widehat{\alpha}_{1i} a_{d,i}}{a_{co,20,i}\lambda_{free\ gas}} \quad - \right. \qquad (7.30)$$

$$\left. \sqrt{1 - 4(1 + \beta_1) \exp\left(\frac{-\beta_2}{R} a_{temp,70,i}\right) a_{time,70,i} \frac{\widehat{\alpha}_{1i} a_{d,i}}{a_{co,20,i}\lambda_{free\ gas}}} \right\} \quad =$$

$$\frac{1 - 2(1 + \beta_{-1}) \exp\left(\frac{-\beta_2}{R} a_{temp,70,i}\right) a_{time,70,i} \frac{\widehat{\alpha}_{1i} a_{d,i}}{a_{co,20,i}\lambda_{free\ gas}} - \sqrt{1 - 4(1 + \beta_{-1}) \exp\left(\frac{-\beta_2}{R} a_{temp,70,i}\right) a_{time,70,i} \frac{\widehat{\alpha}_{1i} a_{d,i}}{a_{co,20,i}\lambda_{free\ gas}}}}{2\left[\exp\left(\frac{-\beta_2}{R} a_{temp,70,i}\right) a_{time,70,i}\right]^2 \frac{\widehat{\alpha}_{1i} a_{d,i}}{a_{co,20,i}\lambda_{free\ gas}}}.$$

In the following, a transformation to linear model will be described.
The regression functions of the mixed models as defined can be transformed to conditionally linear model functions.
In the following, a transformation of the mixed model (7.4) will be described.
Consider the regression function $f(x_{ij}, \alpha_i, \beta, b_i)$ of the mixed model (7.4) with random shifts in location and slope. Then

$$g(x_{ij}, \alpha_i, \beta, b_i) \quad = \quad \frac{\lambda_{free\ gas}}{\lambda_{free\ gas} - a_{d,i} f(x_{ij}, \alpha_i, \beta, b_i) + \beta_0 + b_{0i}} \quad =$$

$$1 + \beta_{-1} + (\beta_1 + b_{1i}) \cdot \left[a_{co,20,i} x_{time,20,i,j} + \exp\left(\frac{-\beta_2}{R} a_{temp,70,i}\right) a_{time,70,i}\right] \quad =$$

$$1 + \beta_{-1} + \underbrace{(\beta_1 + b_{1i}) \cdot \exp\left(\frac{-\beta_2}{R} a_{temp,70,i}\right) a_{time,70,i}}_{= \ a_{0i}} + \underbrace{(\beta_1 + b_{1i}) \cdot a_{co,20,i}}_{= \ a_{1i}} x_{time,20,i,j}.$$

Conditionally under $\beta_{0i} = \beta_0 + b_{0i}$, and for given value of $\beta_2$, the model

$$\frac{\lambda_{free\ gas}}{\lambda_{free\ gas} - a_{d,i} Y_{ij} + \beta_0 + b_{0i}} \quad = \quad Z_{ij} \quad = \quad g(x_{ij}, \alpha_i, \beta, b_i) + \varepsilon_{Zij}, \qquad (7.31)$$

$$g(\boldsymbol{x}_{ij}, \boldsymbol{a}_i, \boldsymbol{\beta}, \boldsymbol{b}_i) =$$

$$\underbrace{1 + \beta_{-1} + (\beta_1 + b_{1i}) \cdot \exp\left(\frac{-\beta_2}{R} a_{temp,70,i}\right) a_{time,70,i}}_{= \, \alpha_{0i}} + \underbrace{(\beta_1 + b_{1i}) \cdot a_{co,20,i}}_{= \, \alpha_{1i}} x_{time,20,i,j} \qquad (7.32)$$

is a linear regression model in $x_{time,20,i,j}$, where the coefficients $\alpha_{0i}$, $\alpha_{1i}$ are linear functions of the parameters $\beta_{-1}$ and $\beta_{1i} = \beta_1 + b_{1i}$

In the following, a transformation of the second mixed model (7.7) will be described.

Consider the regression function $f(x_{ij}, \alpha_i, \beta, b_i)$ of the second mixed model (7.7) with random shifts in location and slope. Then

$$g(\boldsymbol{x}_{ij}, \boldsymbol{a}_i, \boldsymbol{\beta}, \boldsymbol{b}_i) = \frac{\lambda_{free\ gas}}{\lambda_{free\ gas} - a_{d,i} f(\boldsymbol{x}_{ij}, \boldsymbol{a}_i, \boldsymbol{\beta}, \boldsymbol{b}_i) + \beta_0} =$$

$$1 + \beta_{-1} + b_{-1i} + (\beta_1 + b_{1i}) \cdot \left[ a_{co,20,i} x_{time,20,i,j} + \exp\left(\frac{-\beta_2}{R} a_{temp,70,i}\right) a_{time,70,i} \right] =$$

$$\underbrace{1 + \beta_{-1} + b_{-1i} + (\beta_1 + b_{1i}) \cdot \exp\left(\frac{-\beta_2}{R} a_{temp,70,i}\right) a_{time,70,i}}_{= \, \alpha_{0i}} + \underbrace{(\beta_1 + b_{1i}) \cdot a_{co,20,i}}_{= \, \alpha_{1i}} x_{time,20,i,j} \; .$$

For given values of $\beta_0$ and of $\beta_2$, the model

$$\frac{\lambda_{free\ gas}}{\lambda_{free\ gas} - a_{d,i} Y_{ij} + \beta_0} = Z_{ij} = g(\boldsymbol{x}_{ij}, \boldsymbol{a}_i, \boldsymbol{\beta}, \boldsymbol{b}_i) + \varepsilon_{Zij}, \qquad (7.33)$$

$$g(\boldsymbol{x}_{ij}, \boldsymbol{a}_i, \boldsymbol{\beta}, \boldsymbol{b}_i) =$$

$$\underbrace{1 + \beta_{-1i} + \beta_{1i} \cdot \exp\left(\frac{-\beta_2}{R} a_{temp,70,i}\right) a_{time,70,i}}_{= \, \alpha_{0i}} + \underbrace{\beta_{1i} \cdot a_{co,20,i}}_{= \, \alpha_{1i}} x_{time,20,i,j}, \qquad (7.34)$$

$$\beta_{-1i} = \beta_{-1} + b_{-1i}, \quad \beta_{1i} = \beta_1 + b_{1i}$$

is a linear regression model in $x_{time,20,i,j}$, where the coefficients $\alpha_{0i}$, $\alpha_{1i}$ are linear functions of the parameters $\beta_{-1} + b_{-1i}$ and $\beta_{1i} = \beta_1 + b_{1i}$.

In the following, a stochastic assumptions on the mixed model (7.33), (7.34) will be described.

For each measurement period i, the residual vector $\varepsilon_i$ and the vector of measurement set-up deviations are considered to be independent. In particular, the vector $\varepsilon_{Zi} = (\varepsilon_{Zi1}, ..., \varepsilon_{Zin_i})^T$ has the parameters

$$E[\varepsilon_{Zi}|b_i] = E[\varepsilon_{Zi}] = 0, \quad \operatorname{Cov}[\varepsilon_{Zi}|b_i] = \operatorname{Cov}[\varepsilon_{Zi}] = V_i, \qquad (7.35)$$

Stochastic variables corresponding to different measuring periods are considered to be independent. In particular, the family of residual vectors $\varepsilon_{Zi}$, $i \in \{12, ...,25\}\backslash\{23\}$ or $i \in \{43, ..., 51\}\backslash\{47\}$, and the family of measurement set-up variation vectors $b_i$, $i \in \{12, ..., 25\}\backslash\{23\}$ or $i \in \{43, ...,51\}\backslash\{47\}$, are independent families.

The measurement set-up variation vectors $b_i$, $i \in \{12, ...,25\}\backslash\{23\}$, are considered to be i.i.d. with parameters

$$E[b_i] = 0, \quad \operatorname{Cov}[b_i] = \begin{pmatrix} \sigma_{b_{-1}}^2 & \sigma_{b_{-1}b_2} \\ \sigma_{b_{-1}b_2} & \sigma_{b_2}^2 \end{pmatrix} . \qquad (7.36)$$

From equations (7.33) and (7.35) we have

$$E[Z_{i,j}|b_i] = g(x_{ij}, a_i, \beta_i, b_i), \quad \mathrm{Cov}[Y_i|b_i] = \mathrm{Cov}[\varepsilon_{Zi}] = V_i, \qquad (7.37)$$

$$V[Z_{i,j}] = \sigma^2_{\varepsilon_{Zij}} + \sigma^2_{b_{-1}} + \sigma^2_{b_1}\left[\exp\left(\frac{-\beta_2}{R}a_{temp,70,i}\right)a_{time,70,i} + a_{co,20,i}x_{time,20,i,j}\right]^2$$
$$+ 2\sigma_{b_{-1}b_1}\left[\exp\left(\frac{-\beta_2}{R}a_{temp,70,i}\right)a_{time,70,i} + a_{co,20,i}x_{time,20,i,j}\right] \qquad (7.38)$$

In the following, estimations based on the transformed model equation will be described.

We consider the transformed mixed models (7.33), (7.34). In the subsequent approach, he parameters $\beta_0$ nd $\beta_2$ re considered as prescribed. We fit the linear model described y (7.33), (7.34) to the data from groups i to obtain the OLS estimates $\hat{\alpha}_{0i}$, $\hat{\alpha}_{1i}$. Estimators of $\beta_{-1i}$ and $\beta_{1i}$ are obtained by equating the respective expressions in formula (7.34) to he estimates $\hat{\alpha}_{0i}$, $\hat{\alpha}_{1i}$. Motivated by $E[b_{-1i}] = 0 = E[b_{1i}]$, estimators $\hat{b}_{-1i}$, $i \in M$, and $\hat{b}_{1i}$, $i \in M$ are required to satisfy

$$\sum_{i \in M} \hat{b}_{-1i} = 0 = \sum_{i \in M} \hat{b}_{1i}. \qquad (7.39)$$

In the following, an estimation of $\beta_1$ and $b_{1i}$ will be described.

The estimator for $\beta_{1i}$ is

$$\hat{\beta}_{1i} = (\hat{\beta}_1 + \hat{b}_{1i}) = \frac{\hat{\alpha}_{1i}}{a_{co,20,i}}. \qquad (7.40)$$

Application of the summation rule (7.39) provides the estimator

$$\hat{\beta}_1 = \frac{1}{|M|}\sum_{i \in M}\hat{\beta}_{1i} = \frac{1}{|M|}\sum_{i \in M}\frac{\hat{\alpha}_{1i}}{a_{co,20,i}} \qquad (7.41)$$

for $\beta_1$. The estimators for the $b_{1i}$ are

$$\hat{b}_{1i} = \hat{\beta}_{1i} - \hat{\beta}_1 = \frac{\hat{\alpha}_{1i}}{a_{co,20,i}} - \frac{1}{|M|}\sum_{l \in M}\frac{\hat{\alpha}_{1l}}{a_{co,20,l}}. \qquad (7.42)$$

From the structure of the mixed model (7.33), (7.34), and from the theory of univariate egression, we have $E[\hat{\alpha}_{1i}|b_{1i}](\beta_1 + b_{1i})\alpha_{co,20,i}$, hence $E[\hat{\alpha}_{1i}] = \beta_1\alpha_{co,20,i}$, hence

$$E[\hat{b}_{1i}] = \frac{E[\hat{\alpha}_{1i}]}{a_{co,20,i}} - \frac{1}{|M|}\sum_{l \in M}\frac{E[\hat{\alpha}_{1l}]}{a_{co,20,l}} = 0. \qquad (7.43)$$

Hence $\hat{b}_{1i}$ is a linear unbiased predictor of $b_{1i}$ in the sense of definition 12.2.1 by [1]. From he theory of mixed models it follows that $\hat{b}_{1i}$ is the best linear unbiased predictor of $b_{1i}$. From $E[\hat{\alpha}_{1i}] = \beta_1\alpha_{co,20,i}$ and from (7.42) we obtain

$$E[\hat{\beta}_1] = \frac{1}{|M|}\sum_{l \in M}\frac{E[\hat{\alpha}_{1l}]}{a_{co,20,l}} = \beta_1. \qquad (7.44)$$

$$E[\hat{\beta}^2_{1i}|b_{1i}] = \frac{E[\hat{\alpha}^2_{1i}|b_{1i}]}{a^2_{co,20,i}} = \frac{\sigma^2_{\varepsilon_{Zi}}}{a^2_{co,20,i}}\frac{1}{\sum_j(x_{ij} - \bar{x}_i)^2} + (\beta_1 + b_{1i})^2. \qquad (7.45)$$

In the following, an estimation of $\beta_{-1}$ and $b_{-1i}$ will be described.

The estimator for $\beta_{-1i}$ is

$$\widehat{\beta}_{-1i} \;=\; (\widehat{\beta}_{-1} + \widehat{b}_{-1i}) \;=\; \widehat{\alpha}_{0i} - 1 - \widehat{\beta}_{1i}\exp\left(\frac{-\beta_2}{R}a_{temp,70,i}\right)a_{time,70,i}. \tag{7.46}$$

Application of the summation rule (7.39) provides the estimator

$$\widehat{\beta}_{-1} \;=\; \frac{1}{|M|}\sum_{i\in M}\widehat{\beta}_{-1i} \tag{7.47}$$

for $\beta_{-1}$. The estimators for the $b_{-1i}$ are

$$\widehat{b}_{-1i} \;=\; \widehat{\beta}_{-1i} - \widehat{\beta}_{-1}. \tag{7.48}$$

From the structure of the mixed model (7.33), (7.34), and from the theory of univariate regression, we have

$$E[\widehat{\alpha}_{0i}|b_{-1i},b_{1i}] \;=\; 1 + \beta_{-1} + b_{-1i} + (\beta_1 + b_{1i})\cdot\exp\left(\frac{-\beta_2}{R}a_{temp,70,i}\right)a_{time,70,i} \tag{7.49}$$

$$E[\widehat{\alpha}_{0i}^2|b_{-1i},b_{1i}] \;=\; \sigma_{\varepsilon z i}^2\frac{\sum_j x_{ij}^2}{n\sum_j(x_{ij}-\overline{x}_i)^2} + \left[1 + \beta_{-1} + b_{-1i} + (\beta_1 + b_{1i})\cdot\exp\left(\frac{-\beta_2}{R}a_{temp,70,i}\right)a_{time,70,i}\right]^2 \tag{7.50}$$

From the theory of univariate linear regression we have

$$\mathrm{Cov}[\widehat{\alpha}_{0i},\widehat{\alpha}_{1i}|b_{-1i},b_{1i}] \;=\; \sigma_{\varepsilon z i}^2\frac{-\overline{x}_i}{\sum_j(x_{ij}-\overline{x}_i)^2}, \tag{7.51}$$

Hence

$$E[\widehat{\alpha}_{0i}\widehat{\beta}_{1i}|b_{-1i},b_{1i}] \;=\; \frac{\sigma_{\varepsilon z i}^2}{a_{co,20,i}}\frac{-\overline{x}_i}{\sum_j(x_{ij}-\overline{x}_i)^2} + \left[1 + \beta_{-1} + b_{-1i} + (\beta_1 + b_{1i})\cdot\exp\left(\frac{-\beta_2}{R}a_{temp,70,i}\right)a_{time,70,i}\right](\beta_1 + b_{1i}). \tag{7.52}$$

Table 6 shows the estimates b $\widehat{\beta}_{-1i}$ by equation (7.46) and $\widehat{\beta}_{1i}$ by equation (7.40), arranged or measurement periods associated to the same panel number, see table 7. Strong ariation comes from the panels, the measurement periods have minor influence only.

In the following, a dependence of the estimators on prescribed values $\beta_0$ and $\beta_2$ will be described.

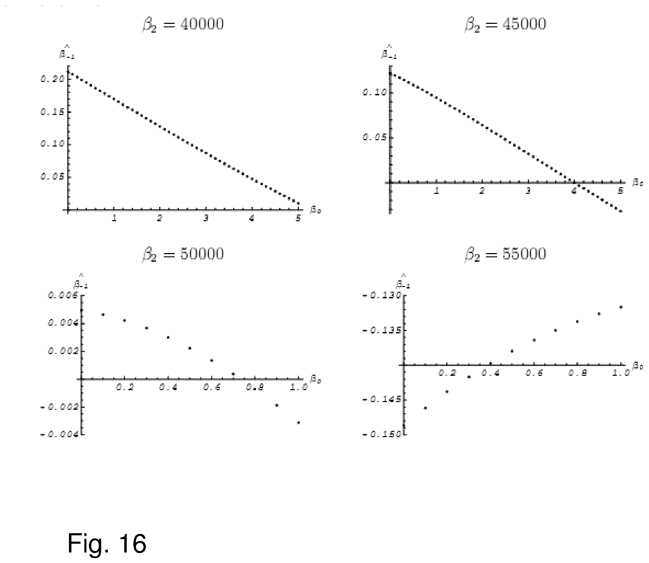

The estimators previously developed depend on prescribed values of he arameters $\beta_0$ and $\beta_2$. Fig. 16 shows that the estimator $\widehat{\beta}_1$ is particularly sensitive to the choice of $\beta_2$. The problem of estimating $\beta_0$ and $\beta_2$ will be considered later.

Table 6

Estimates $\hat{\beta}_{-1i}$ by equation (7.46), $\hat{\beta}_{1i}$ by equation (7.40) in different measurement periods. Prescribed values $\beta_0$ = 0.00, $\beta_2$ = 50000.

| panel | period | $\hat{\beta}_{-1i}$ | $\hat{\beta}_{1i}$ |
|---|---|---|---|
| 43 | 16 | 0.181113 | 0.000362595 |
| 43 | 24 | 0.205757 | 0.000433143 |
| 44 | 17 | 0.168277 | 0.000918908 |
| 44 | 25 | 0.163997 | 0.000810314 |
| 45 | 18 | 0.211783 | 0.000987398 |
| 45 | 26 | 0.227202 | 0.001139390 |
| 48 | 14 | 0.194823 | 0.000402698 |
| 48 | 20 | 0.205890 | 0.000771891 |
| 49 | 12 | 0.224012 | 0.000900400 |
| 49 | 21 | -0.168143 | 0.001047360 |
| 50 | 15 | -0.133373 | 0.001867880 |
| 50 | 22 | -1.422040 | 0.002771310 |

In the following, a variance estimation will be described.

Consider the homoskedastic situation, where all groups have the same residual variance $\sigma^2_{\varepsilon_{Z,i}} = \sigma^2_\varepsilon$. Let $N = \sum_i n_i$ be the total sample size in all groups. In group i, the empirical residuals are

$$\hat{\varepsilon}_{Zij} \;=\; Z_{ij} - (\hat{\alpha}_{0i} + x_{time,20,i,j}\hat{\alpha}_{1i}). \tag{7.53}$$

In each group i, the unbiased variance estimator is

$$S^2_{\varepsilon,i} \;=\; \frac{1}{n_i - 2}\sum_{j=1}^{n_i} \hat{\varepsilon}^2_{Zij} \tag{7.54}$$

$(n_i - 2)S^2_{\varepsilon,i}$ has the $\chi^2$ distribution $\chi^2(n_i - 2)$ with degrees of freedom $n_i$ - 2. The pooled variance estimator is

$$S^2_\varepsilon \;=\; \frac{1}{N - |M|}\sum_i (n_i - 2)S^2_{\varepsilon,i} \;=\; \frac{1}{N - |M|}\sum_i \sum_{j=1}^{n_i} \hat{\varepsilon}^2_{Zij}. \tag{7.55}$$

$(N - 2|M|)S^2_\varepsilon$ has $\chi^2$ distribution $\chi^2(N - 2|M|)$ with degree of freedom $N$ - 2|M|.

In the following, a linear mixed model scheme and related empirical inferences will be described.

For technical reasons, the notation in this paragraph differs from the notation of previous sections.

In the following, a linear mixed model scheme will be described.

We consider a group structured sampling model. Let 1; :::;m be independent groups with $n_i$ observations $Z_{i1},...,Z_{in}$ in group i. The sampling vector $Z_i = (Z_{i1}, ..., Z_{in_i})^T$ in group i follows the model

$$Z_i \;=\; X_i\alpha_i + \varepsilon_i. \tag{7.56}$$

$\varepsilon_i$ is a vector of residuals with $E[\varepsilon_i]$ = 0, $Cov[\varepsilon_i]$ = $V_i$. $X_i$ is a $n_i \times q_i$ design matrix of known regressor values. The $q_i$-dimensional random parameter $\alpha_i$ follows the equation

$$\alpha_i \;=\; \Lambda_i\beta_i + d_i. \tag{7.57}$$

where $\Lambda_i$ is a $q_i \times q$ matrix, and di is a fixed and known vector in $\mathbb{R}^{q_i}$. The q-dimensional random parameter $\beta_i$ follows the equation.

$$\beta_i = \beta + b_i, \tag{7.58}$$

where $\beta$ is an unknown vector in $\mathbb{R}^q$, and $b_i$ is a q-dimensional random vector with the properties

$$E[b_i] = 0, \quad \mathrm{Cov}[b_i] = \mathrm{B}. \tag{7.59}$$

The random parameter vector $b_i$ and the residual vector $\varepsilon_i$ are independent among each other.

In the following, a response variance will be described.

The assumptions immediately imply

$$\mathrm{Cov}[Z_i|b_1, ..., b_m] = \mathrm{Cov}[Z_i|b_i] = = \mathrm{Cov}[\varepsilon_i] = \mathrm{V}_i. \tag{7.60}$$

Because of the independence between the random parameter vector $b_i$ and the residual vector $\varepsilon_i$, the unconditional covariance matrix of $Z_i$ is

$$\mathrm{Cov}[Z_i] = \mathrm{Cov}[X_i\alpha_i + \varepsilon_i] = X_i\mathrm{Cov}[\Lambda_i\beta_i + d_i]X_i^\top + \mathrm{Cov}[\varepsilon_i] =$$
$$\Lambda_i X_i \mathrm{Cov}[b_i]X_i^\top \Lambda_i^\top + \mathrm{V}_i = \Lambda_i X_i \mathrm{B}(\Lambda_i X_i)^\top + \mathrm{V}_i. \tag{7.61}$$

In the following, a parameter estimation in the linear mixed model scheme will be described.

In the subsequent paragraphs, we consider invertible quadratic matrices $\Lambda_1, ..., \Lambda_m$, in particular $q_i = q$, and design matrices $X_i$ of full rank $q = q_i$ for i = 1,...,m. Let b $\hat{\alpha}_i$ be the OLS estimator

$$\hat{\alpha}_i = (X_i^\top X_i)^{-1} X_i^\top Z_i. \tag{7.62}$$

Motivated by the property $E[b_i] = 0$, we consider estimators $\hat{b}_1, ..., \hat{b}_m$ which satisfy

$$\sum_{i=1}^m \hat{b}_i = 0. \tag{7.63}$$

Motivated by (7.57) and (7.58), the estimators $\hat{\beta}$ and $\hat{b}_i$ should satisfy

$$\hat{\beta}_i = \hat{\beta} + \hat{b}_i = \Lambda_i^{-1}(\hat{\alpha}_i - d_i). \tag{7.64}$$

From (7.63) and (7.64) we obtain

$$\hat{\beta} = \frac{1}{m}\sum_{i=1}^m \Lambda_i^{-1}(\hat{\alpha}_i - d_i). \tag{7.65}$$

From (7.64) and (7.65) we obtain

$$\hat{b}_i = \Lambda_i^{-1}(\hat{\alpha}_i - d_i) - \hat{\beta} = \Lambda_i^{-1}(\hat{\alpha}_i - d_i) - \frac{1}{m}\sum_{l=1}^m \Lambda_l^{-1}(\hat{\alpha}_l - d_l). \tag{7.66}$$

In the conditional situation with $b_i$ prescribed, the equation (7.56) describes an ordinary linear model, hence

$$E[\widehat{\alpha}_i|b_i] = \Lambda_i(\beta + b_i) + d_i. \tag{7.67}$$

Since $E[b_i] = 0$, we obtain

$$E[\widehat{\alpha}_i] = \Lambda_i\beta + d_i. \tag{7.68}$$

Inserting (7.68) into (7.65) provides

$$E[\widehat{\beta}] = \frac{1}{m}\sum_{i=1}^{m}\Lambda_i^{-1}(E[\widehat{\alpha}_i] - d_i) = \beta. \tag{7.69}$$

Inserting (7.68) and (7.69) into (7.64) provides

$$E[\widehat{b}_i] = \Lambda_i^{-1}(E[\widehat{\alpha}_i] - d_i) - E[\widehat{\beta}] = \Lambda_i^{-1}(\Lambda_i\beta + d_i - d_i) - \beta = 0. \tag{7.70}$$

In the following, a variance estimation in the linear mixed model scheme will be described.

In each group i, the residual vector $\varepsilon_i$ is estimated by

$$\widehat{\varepsilon}_i = Z_i - X_i\widehat{\alpha}_i = (I - P_{C(X_i)})\varepsilon_i \tag{7.71}$$

where $P_{C(Xi)}$ is the orthogonal projection onto the range space $C(X_i)$ of $X_i$. As an additional assumption, we consider the totally homoskedastic model where

$$V_i = \mathrm{Cov}[\varepsilon_i] = \sigma^2 I \quad \text{for } i = 1, \ldots, m. \tag{7.72}$$

From linear model theory it is known that the empirical variance

$$S_{Z_i}^2 = \frac{1}{n_i - q}\widehat{\varepsilon}_i^\top\widehat{\varepsilon}_i \tag{7.73}$$

is an unbiased estimator for $\sigma^2$ from group i. Let $N = n_1 + \ldots + n_m$ be the total sample size. Then an appropriate unbiased pooled variance estimator is

$$S_Z^2 = \frac{1}{N - mq}\sum_{i=1}^{m}(n_i - q)S_{Z_i}^2 = \frac{1}{N - mq}\sum_{i=1}^{m}\widehat{\varepsilon}_i^\top\widehat{\varepsilon}_i. \tag{7.74}$$

In the following, the covariance matrices of $\widehat{\alpha}_i$ and of $\widehat{\beta}$, will be described.

As described, we consider the totally homoskedastic model described by equation (7.72). In the conditional situation with $b_i$ prescribed, the equation (7.56) describes an ordinary linear model, where $\mathrm{Cov}[\widehat{\alpha}_i|b_i] = \sigma^2(X_i^\top X_i)^{-1}$. Using (7.67), we obtain

$$\begin{aligned}
E[\widehat{\alpha}_i\widehat{\alpha}_i^\top|b_i] &= \mathrm{Cov}[\widehat{\alpha}_i|b_i] + E[\widehat{\alpha}_i|b_i]E[\widehat{\alpha}_i|b_i]^\top = \\
&\sigma^2(X_i^\top X_i)^{-1} + (\Lambda_i\beta_i + d_i)(\Lambda_i\beta_i + d_i)^\top = \\
&\sigma^2(X_i^\top X_i)^{-1} + \Lambda_i\beta_i\beta_i^\top\Lambda_i^\top + d_i(\Lambda_i\beta_i)^\top + \Lambda_i\beta_i d_i^\top + d_i d_i^\top.
\end{aligned} \tag{7.75}$$

We have $E[b_i] = 0$, $E[b_ib_i^T] = \text{Cov}[b_i] = B$, hence

$$E[\beta_i\beta_i^\top] \;=\; E[\beta\beta^\top + \beta b_i^\top + b_i\beta^\top + b_ib_i^\top] \;=\; \beta\beta^\top + B,$$

Hence

$$E[\widehat{\alpha}_i\widehat{\alpha}_i^\top] \;=\;$$
$$\sigma^2(X_i^\top X_i)^{-1} + \Lambda_i\beta\beta^\top\Lambda_i^\top + \Lambda_i B\Lambda_i^\top + d_i(\Lambda_i\beta)^\top + \Lambda_i\beta d_i^\top + d_id_i^\top. \tag{7.76}$$

Using (7.68), we obtain

$$\text{Cov}[\widehat{\alpha}_i] \;=\; E[\widehat{\alpha}_i\widehat{\alpha}_i^\top] - E[\widehat{\alpha}_i]E[\widehat{\alpha}_i]^\top \;=\; \sigma^2(X_i^\top X_i)^{-1} + \Lambda_i B\Lambda_i^\top. \tag{7.77}$$

From (7.65) and (7.77), we obtain

$$\text{Cov}[\widehat{\beta}] \;=\; \frac{1}{m^2}\sum_{i=1}^{m}\Lambda_i^{-1}\text{Cov}[\widehat{\alpha}_i](\Lambda_i^{-1})^\top \;=\; \frac{1}{m}B + \frac{\sigma^2}{m^2}\sum_{i=1}^{m}\Lambda_i^{-1}(X_i^\top X_i)^{-1}(\Lambda_i^{-1})^\top. \tag{7.78}$$

Using $\widehat{\beta}_i = \Lambda_i^{-1}(\widehat{\alpha}_i - d_i)$, see equation (7.64), we obtain

$$\text{Cov}[\widehat{\beta}_i] \;=\; \Lambda_i^{-1}\text{Cov}[\widehat{\alpha}_i](\Lambda_i^{-1})^\top \;=\; \sigma^2\Lambda_i^{-1}(X_i^\top X_i)^{-1}(\Lambda_i^{-1})^\top + B. \tag{7.79}$$

In the following, the covariance matrix of $\widehat{b}_i$ will be described.

As described, we consider the totally homoskedastic model described by equation (7.72). By the independence of different groups and by equation (7.65) we obtain

$$\text{Cov}[\widehat{\beta},\widehat{\alpha}_i] \;=\; \frac{1}{m}\sum_{l=1}^{m}\text{Cov}[\Lambda_l^{-1}(\widehat{\alpha}_l - d_l),\widehat{\alpha}_i] \;=\; \frac{1}{m}\Lambda_i^{-1}\text{Cov}[\widehat{\alpha}_i,\widehat{\alpha}_i] \;=\;$$
$$\frac{1}{m}\Lambda_i^{-1}\text{Cov}[\widehat{\alpha}_i] \;\underset{(7.77)}{=}\; \frac{\sigma^2}{m}\Lambda_i^{-1}(X_i^\top X_i)^{-1} + \frac{1}{m}B\Lambda_i^\top \tag{7.80}$$

And

$$E[\widehat{\beta}\widehat{\alpha}_i^\top] \;=\; \text{Cov}[\widehat{\beta},\widehat{\alpha}_i] + E[\widehat{\beta}]E[\widehat{\alpha}_i]^\top \;\underset{(7.80)}{=}\;$$
$$\frac{\sigma^2}{m}\Lambda_i^{-1}(X_i^\top X_i)^{-1} + \frac{1}{m}B\Lambda_i^\top + \beta\beta^\top\Lambda_i^\top + \beta d_i^\top \tag{7.81}$$

From (7.80) we obtain

$$\text{Cov}[\widehat{\beta},\Lambda_i^{-1}\widehat{\alpha}_i] \;=\; \text{Cov}[\widehat{\beta},\widehat{\alpha}_i](\Lambda_i^{-1})^\top \;=\; \frac{\sigma^2}{m}\Lambda_i^{-1}(X_i^\top X_i)^{-1}(\Lambda_i^{-1})^\top + \frac{1}{m}B. \tag{7.82}$$

With (7.66)

$$\text{Cov}[\widehat{b}_i] = \text{Cov}[\Lambda_i^{-1}(\widehat{\alpha}_i - d_i) - \widehat{\beta}] =$$

$$\text{Cov}[\Lambda_i^{-1}\widehat{\alpha}_i] - \text{Cov}[\Lambda_i^{-1}\widehat{\alpha}_i, \widehat{\beta}] - \text{Cov}[\widehat{\beta}, \Lambda_i^{-1}\widehat{\alpha}_i] + \text{Cov}[\widehat{\beta}] =_{(7.77),(7.78),(7.82)}$$

$$\Lambda_i^{-1}\left(\sigma^2(X_i^\top X_i)^{-1} + \Lambda_i B \Lambda_i^\top\right)(\Lambda_i^{-1})^\top - \frac{2\sigma^2}{m}\Lambda_i^{-1}(X_i^\top X_i)^{-1}(\Lambda_i^{-1})^\top - \frac{2}{m}B +$$

$$\frac{1}{m}B + \frac{\sigma^2}{m^2}\sum_{l=1}^{m}\Lambda_l^{-1}(X_l^\top X_l)^{-1}(\Lambda_l^{-1})^\top,$$

And thus, with $E[\widehat{b}_i] = 0$ according to (7.70),

$$\text{Cov}[\widehat{b}_i] = E[\widehat{b}_i\widehat{b}_i^\top] = \sigma^2\left(1 - \frac{2}{m}\right)\Lambda_i^{-1}(X_i^\top X_i)^{-1}(\Lambda_i^{-1})^\top + \left(1 - \frac{1}{m}\right)B +$$

$$\frac{\sigma^2}{m^2}\sum_{l=1}^{m}\Lambda_l^{-1}(X_l^\top X_l)^{-1}(\Lambda_l^{-1})^\top = \qquad (7.83)$$

$$\text{Cov}[\widehat{\beta}] + \left(1 - \frac{2}{m}\right)\left\{\sigma^2\Lambda_i^{-1}(X_i^\top X_i)^{-1}(\Lambda_i^{-1})^\top + B\right\}.$$

Summation of the right-hand side of (7.83) provides

$$\sum_{i=1}^{m}\text{Cov}[\widehat{b}_i] = E[\widehat{b}_i\widehat{b}_i^\top] = (m-1)\left\{\frac{\sigma^2}{m}\sum_{l=1}^{m}\Lambda_l^{-1}(X_l^\top X_l)^{-1}(\Lambda_l^{-1})^\top + B\right\} \qquad (7.84)$$

$$=_{(7.78)} m(m-1)\text{Cov}[\widehat{\beta}].$$

Exploiting the independence of the estimators $\widehat{\alpha}_i, \widehat{\alpha}_j$ from different groups $i \neq j$ we obtain

$$\text{Cov}[\widehat{b}_i, \widehat{b}_j] = \text{Cov}[\Lambda_i^{-1}(\widehat{\alpha}_i - d_i) - \widehat{\beta}, \Lambda_j^{-1}(\widehat{\alpha}_j - d_j) - \widehat{\beta}] =$$

$$-\text{Cov}[\Lambda_i^{-1}(\widehat{\alpha}_i - d_i), \widehat{\beta}] - \text{Cov}[\widehat{\beta}, \Lambda_j^{-1}(\widehat{\alpha}_j - d_j)] + \text{Cov}[\widehat{\beta}] =$$

$$-\text{Cov}[\Lambda_i^{-1}\widehat{\alpha}_i, \widehat{\beta}] - \text{Cov}[\widehat{\beta}, \Lambda_j^{-1}\widehat{\alpha}_j] + \text{Cov}[\widehat{\beta}] =$$

$$-\text{Cov}[\widehat{\beta}, \Lambda_i^{-1}\widehat{\alpha}_i]^\top - \text{Cov}[\widehat{\beta}, \Lambda_j^{-1}\widehat{\alpha}_j] + \text{Cov}[\widehat{\beta}] =$$

$$-\Lambda_i^{-1}\text{Cov}[\widehat{\beta}, \widehat{\alpha}_i]^\top - \text{Cov}[\widehat{\beta}, \widehat{\alpha}_j](\Lambda_j^{-1})^\top + \text{Cov}[\widehat{\beta}] =_{(7.80)}$$

$$-\Lambda_i^{-1}\left\{\frac{\sigma^2}{m}(X_i^\top X_i)^{-1}(\Lambda_i^{-1})^\top + \frac{1}{m}\Lambda_i B\right\} - \left\{\frac{\sigma^2}{m}\Lambda_j^{-1}(X_j^\top X_j)^{-1} + \frac{1}{m}B\Lambda_j^\top\right\}(\Lambda_j^{-1})^\top +$$

$$\frac{1}{m}B + \frac{\sigma^2}{m^2}\sum_{l=1}^{m}\Lambda_l^{-1}(X_l^\top X_l)^{-1}(\Lambda_l^{-1})^\top,$$

And thus

$$\mathrm{Cov}[\hat{b}_i, \hat{b}_j] \;=\; E[\hat{b}_i \hat{b}_j^\top] \;=$$

$$\frac{-1}{m}\mathbf{B} - \frac{\sigma^2}{m}\left(\Lambda_i^{-1}(\mathbf{X}_i^\top\mathbf{X}_i)^{-1}(\Lambda_i^{-1})^\top + \Lambda_j^{-1}(\mathbf{X}_j^\top\mathbf{X}_j)^{-1}(\Lambda_j^{-1})^\top\right) + \qquad (7.85)$$

$$\frac{\sigma^2}{m^2}\sum_{l=1}^{m}\Lambda_l^{-1}(\mathbf{X}_l^\top\mathbf{X}_l)^{-1}(\Lambda_l^{-1})^\top.$$

From (7.83) and (7.85) we obtain

$$\sum_{1\le i,j\le m}\mathrm{Cov}[\hat{b}_i, \hat{b}_j] \;=\; \sum_{\substack{1\le i,j\le m\\ i\ne j}}\mathrm{Cov}[\hat{b}_i, \hat{b}_j] + \sum_{i=1}^{m}\mathrm{Cov}[\hat{b}_i] \;=$$

$$\frac{-m(m-1)}{m}\mathbf{B} - \frac{\sigma^2}{m}\sum_{\substack{1\le i,j\le m\\ i\ne j}}\left(\Lambda_i^{-1}(\mathbf{X}_i^\top\mathbf{X}_i)^{-1}(\Lambda_i^{-1})^\top + \Lambda_j^{-1}(\mathbf{X}_j^\top\mathbf{X}_j)^{-1}(\Lambda_j^{-1})^\top\right) +$$

$$2\sigma^2\frac{m-1}{m}\sum_{i=1}^{m}\Lambda_i^{-1}(\mathbf{X}_i^\top\mathbf{X}_i)^{-1}(\Lambda_i^{-1})^\top + (m-1)\mathbf{B}$$

Hence

$$\sum_{1\le i,j\le m}\mathrm{Cov}[\hat{b}_i, \hat{b}_j] \;=\; \mathbf{O}. \qquad (7.86)$$

In the following, an estimation of the covariance matrix B = Cov[$b_i$] will be described.

Because of $\sum_{i=1}^{m}\hat{b}_i = \mathbf{0}$, the sample covariance of the sample $\hat{b}_l, \dots \hat{b}_m$ is

$$\mathbf{S}_{\hat{b}_1,\dots,\hat{b}_m} \;=\; \frac{1}{m-1}\sum_{i=1}^{m}\hat{b}_i\hat{b}_i^\top. \qquad (7.87)$$

From (7.84) we obtain

$$E[\mathbf{S}_{\hat{b}_1,\dots,\hat{b}_m}] \;=\; \frac{1}{m-1}\sum_{i=1}^{m}E[\hat{b}_i\hat{b}_i^\top] \;=\; \frac{1}{m-1}\sum_{i=1}^{m}\mathrm{Cov}[\hat{b}_i] \;=$$

$$\frac{\sigma^2}{m}\sum_{l=1}^{m}\Lambda_l^{-1}(\mathbf{X}_l^\top\mathbf{X}_l)^{-1}(\Lambda_l^{-1})^\top + \mathbf{B} \;=_{(7.78)}\; m\mathrm{Cov}[\hat{\beta}]. \qquad (7.88)$$

The quantity $S_z^2$ defined by equation (7.74) is unbiased for $\sigma^2$. Hence

$$\hat{\mathbf{B}} \;=\; \frac{1}{m-1}\sum_{i=1}^{m}\hat{b}_i\hat{b}_i^\top - \frac{S_z^2}{m}\sum_{l=1}^{m}\Lambda_l^{-1}(\mathbf{X}_l^\top\mathbf{X}_l)^{-1}(\Lambda_l^{-1})^\top \qquad (7.89)$$

is unbiased for the covariance matrix B, and

$$\widehat{\mathrm{Cov}[\widehat{\beta}]} \;=\; \frac{1}{(m-1)m}\sum_{i=1}^{m}\widehat{b}_i\widehat{b}_i^{\top} \;=\; \frac{1}{m}\left\{\widehat{\mathrm{B}} + \frac{S_Z^2}{m}\sum_{i=1}^{m}\Lambda_i^{-1}(\mathrm{X}_i^{\top}\mathrm{X}_i)^{-1}(\Lambda_i^{-1})^{\top}\right\} \qquad (7.90)$$

is unbiased for $\mathrm{Cov}[\hat{\beta}]$. With equation (7.66) we obtain

$$\sum_{i=1}^{m}\widehat{b}_i\widehat{b}_i^{\top} \;=\; \sum_{i=1}^{m}\left(\Lambda_i^{-1}(\widehat{\alpha}_i - d_i) - \widehat{\beta}\right)\left(\Lambda_i^{-1}(\widehat{\alpha}_i - d_i) - \widehat{\beta}\right)^{\top} \;=$$

$$\sum_{i=1}^{m}\left(\Lambda_i^{-1}(\widehat{\alpha}_i - d_i) - \widehat{\beta}\right)\left((\widehat{\alpha}_i - d_i)^{\top}(\Lambda_i^{-1})^{\top} - \widehat{\beta}^{\top}\right) \;=$$

$$\sum_{i=1}^{m}\Lambda_i^{-1}(\widehat{\alpha}_i - d_i)(\widehat{\alpha}_i - d_i)^{\top}(\Lambda_i^{-1})^{\top} - \underbrace{\sum_{i=1}^{m}\Lambda_i^{-1}(\widehat{\alpha}_i - d_i)\widehat{\beta}^{\top}}_{=_{(7.65)}m\widehat{\beta}}$$

$$-\widehat{\beta}\underbrace{\sum_{i=1}^{m}(\widehat{\alpha}_i - d_i)^{\top}(\Lambda_i^{-1})^{\top}}_{=_{(7.65)}m\widehat{\beta}^{\top}} + m\widehat{\beta}\widehat{\beta}^{\top} \quad =_{(7.65)}$$

$$\sum_{i=1}^{m}\Lambda_i^{-1}(\widehat{\alpha}_i - d_i)(\widehat{\alpha}_i - d_i)^{\top}(\Lambda_i^{-1})^{\top} - m\widehat{\beta}\widehat{\beta}^{\top}.$$

Inserting $\widehat{\beta} = \frac{1}{m}\sum_{i=1}^{m}\Lambda_i^{-1}(\widehat{\alpha}_i - d_i)$, see Equation (7.65), we obtain

$$\begin{aligned}\sum_{i=1}^{m}\widehat{b}_i\widehat{b}_i^{\top} \;&=\; \sum_{i=1}^{m}\Lambda_i^{-1}(\widehat{\alpha}_i - d_i)(\widehat{\alpha}_i - d_i)^{\top}(\Lambda_i^{-1})^{\top} -\\ \frac{1}{m}&\sum_{1\le i,l\le m}\Lambda_i^{-1}(\widehat{\alpha}_i - d_i)(\widehat{\alpha}_l - d_l)^{\top}(\Lambda_l^{-1})^{\top}.\end{aligned} \qquad (7.91)$$

In the following, an analysis of distributions will be described.

We consider the following distribution assumptions: 1) $b_i$ has a q-dimensional normal distribution N(0;B). 2) The residual vector $\varepsilon i$ has a normal distribution $N(0, \sigma^2 I)$ i.e. $V_i = \sigma^2 I$.

From linear regression analysis it is known that, given $b_i$, $\hat{\alpha}_i$ has the conditional q-variate-normal distribution $N(\Lambda_i(\beta + b_i) + d_i, \sigma^2(\mathrm{X}_i^{\top}\mathrm{X}_i)^{-1})$. The unconditional mean and covariance matrix are given by equations (7.68) and (7.77). From the above normality assumptions 1) and 2) it follows that $b\,\alpha i$ has the q-variate normal distribution $N(\Lambda_i\beta + d_i, \sigma^2(\mathrm{X}_i^{\top}\mathrm{X}_i)^{-1} + \Lambda_i B\Lambda_i^{\top})$. Hence $\widehat{\beta}_i = \Lambda_i^{-1}(\widehat{\alpha}_i - d_i)$, see equation (7.64), has the q-variate normal distribution $N(\beta, \sigma^2\Lambda_i^{-1}(\mathrm{X}_i^{\top}\mathrm{X}_i)^{-1}(\Lambda_i^{-1})^{\top} + \mathrm{B})$. As a linear function of the $\hat{\beta}_1, ..., \hat{\beta}_m, \hat{b}_i$ has the q-variate normal distribution with $E[\hat{b}_i] = 0$ and with $\mathrm{Cov}[\hat{b}_i]$ given by euation (7.83). The vector $\hat{b} = (\hat{b}_1, ..., b_m)^{\top}$ has the m×q-variate normal distribution with $E[\hat{b}] = 0$ and with $\mathrm{Cov}[\hat{b}_i, \hat{b}_j]$ given by equation (7.85).

From linear model theory it is known that under assumptions 1) and 2) $\alpha_i$ and the residual variance estimator $S_{Zi}^2$ defined by equation (7.73) are conditionally independent under $b_i$. Equation (7.71) shows that the sample residual

$\hat{\varepsilon}_i$ is independent of $b_i$. Hence $\hat{\alpha}_i$ and $S_{Z_i}^2$ are independent, and the pooled variance estimator $S_Z^2$ defined by equation (7.74) is independent of $\hat{\alpha}_1, ..., \hat{\alpha}_m$. From equation (7.65) it follows that $\hat{\beta} = \frac{1}{m}\sum_{i=1}^{m} \Lambda_i^{-1}(\hat{\alpha}_i - d_i)$ is independent of $S_Z^2$. From equation (7.66) it follows that the estimators $\hat{b}_1, ..., \hat{b}_m$ are independent of $S_Z^2$. Hence $\sum_{i=1}^{m} \hat{b}_i \hat{b}_i^\top$ and $S_Z^2$ are independent. $\frac{N-mq}{\sigma^2} S_Z^2$ has the $\chi^2$ distribution $\chi^2(N - mq)$.

The estimator $\hat{\beta}$ given by equation (7.65) is the customary arithmetic mean estimator $\hat{\beta} = \overline{\hat{\beta}_{1,...,m}}$ of the common mean $\beta$ of the m independent random variables $\hat{\beta}_1, ..., \hat{\beta}_m$. $\hat{\beta}$ has the q-variate normal distribution

$$N(\beta, \frac{1}{m}\mathbf{B} + \frac{\sigma^4}{m^2}\sum_{i=1}^{m}\Lambda_i^{-1}(\mathbf{X}_i^\top \mathbf{X}_i)^{-1}(\Lambda_i^{-1})^\top)_i$$

Consider the sample covariance

$$\mathbf{S}_{\hat{\beta}_1,...,\hat{\beta}_m} = \frac{1}{m-1}\sum_{i=1}^{m}\left(\hat{\beta}_i - \overline{\hat{\beta}_{1,...,m}}\right)^2 = \frac{1}{m-1}\left(\sum_{i=1}^{m}\hat{\beta}_i\hat{\beta}_i^\top - m\overline{\hat{\beta}_{1,...,m}}\,\overline{\hat{\beta}_{1,...,m}}^\top\right). \quad (7.92)$$

Since $\hat{b}_i = \hat{\beta}_i - \overline{\hat{\beta}_{1,...,m}}$, see equation (7.66), the sample covariance $\frac{1}{m-1}\sum_{i=1}^{m}\hat{b}_i\hat{b}_i^\top$ of $\hat{b}_1, ..., \hat{b}_m$ equals the sample covariance of the independent normally distributed random vectors $\hat{\beta}_1, ..., \hat{\beta}_m$ with identical means $E[\hat{\beta}_i] = \hat{\beta}$, i.e.,

$$\mathbf{S}_{\hat{b}_1,...,\hat{b}_m} = \mathbf{S}_{\hat{\beta}_1,...,\hat{\beta}_m}. \quad (7.93)$$

Consider very small residual variance $\sigma^2$ such that $\sigma^2\Lambda_i^{-1}(\mathbf{X}_i^\top \mathbf{X}_i)^{-1}(\Lambda_i^{-1})^\top$ is negligible in comparison with B. Under this approximative view, $\hat{\beta}_1, ..., \hat{\beta}_m$ is an i.i.d. sample, and the sample mean $\hat{\beta}$ and the sample covariance $\mathbf{S}_{\hat{b}_1,...,\hat{b}_m}$ are independent.

In the following, a prediction in the linear mixed model scheme will be described.

Let $\Lambda$ be a q $\times$ q matrix, and let x be a vector in $\mathbb{R}^q$. Consider the response $Z(x) = (\Lambda(\beta + b) + d)^\top x + \varepsilon$ under the regressor x where the random effect b and the residual $\varepsilon$ are independent of all variables used for parameter estimation. The appropriate predictor for the response is

$$\hat{Z}(x) = (\Lambda\hat{\beta} + d)^\top x. \quad (7.94)$$

Since $E[\hat{\beta}] = \beta$, see equation (7.69)t', we have $E[\hat{Z}(x)] = (\Lambda\beta + d)^\top x = E[Z](x)]$ and

$$V[Z(x)] = V[x^\top(\Lambda(\beta + b) + d)] + \sigma^2 = V[x^\top\Lambda b] + \sigma^2 =$$
$$\mathrm{Cov}[x^\top\Lambda b] + \sigma^2 = x^\top\Lambda\mathrm{Cov}[b]\Lambda^\top x + \sigma^2 = x^\top\Lambda\mathbf{B}\Lambda^\top x + \sigma^2, \quad (7.95)$$

the prediction variance is

$$V[\hat{Z}(x)] = \mathrm{Cov}[\hat{Z}(x)] = \mathrm{Cov}[x^\top(\Lambda\hat{\beta} + d)] = x^\top\Lambda\mathrm{Cov}[\hat{\beta}]\Lambda^\top x, \quad (7.96)$$

and the prediction error variance is

$$\sigma^2_{\hat{Z}(x)-Z(x)} \;=\; V[\hat{Z}(x)-Z(x)] \;=\; V[\hat{Z}(x)]+V[Z(x)] \;=\; \sigma^2 + x^\top \Lambda \left(\mathrm{B}+\mathrm{Cov}[\hat{\beta}]\right)\Lambda^\top x. \tag{7.97}$$

Replacing $\sigma^2$ by $S^2_Z$, B by the unbiased estimator $\hat{\mathrm{B}}$ according to equation (7.89), and $\mathrm{Cov}[\hat{\beta}]$ by the unbiased estimator $\widehat{\mathrm{Cov}[\hat{\beta}]}$ according to equation (7.90), we obtain the unbiased estimator

$$\begin{aligned}
\hat{\sigma}^2_{\hat{Z}(x)-Z(x)} \;=\; & V[\widehat{\hat{Z}(x)-Z(x)}] \;=\; S^2_Z + x^\top \Lambda \left(\hat{\mathrm{B}}+\widehat{\mathrm{Cov}[\hat{\beta}]}\right)\Lambda^\top x \;=\; \\
& S^2_Z + x^\top \Lambda \left(\frac{m+1}{m}\hat{\mathrm{B}} + \frac{S^2_Z}{m^2}\sum_{l=1}^{m}\Lambda_l^{-1}(\mathrm{X}_l^\top \mathrm{X}_l)^{-1}(\Lambda_l^{-1})^\top\right)\Lambda^\top x \;=\; \\
& S^2_Z + \frac{1}{m}x^\top \Lambda \left(\frac{m+1}{m-1}\sum_{i=1}^{m}b_i b_i^\top - S^2_Z\sum_{l=1}^{m}\Lambda_l^{-1}(\mathrm{X}_l^\top \mathrm{X}_l)^{-1}(\Lambda_l^{-1})^\top\right)\Lambda^\top x \;=\; \\
& S^2_Z\left(1-\frac{1}{m}x^\top \Lambda \sum_{l=1}^{m}\Lambda_l^{-1}(\mathrm{X}_l^\top \mathrm{X}_l)^{-1}(\Lambda_l^{-1})^\top \Lambda^\top x\right) \;+\; \\
& \qquad\qquad\qquad\qquad \frac{m+1}{m(m-1)}x^\top \Lambda \sum_{i=1}^{m}b_i b_i^\top \Lambda^\top x.
\end{aligned} \tag{7.98}$$

of the prediction error variance $\sigma^2_{\hat{Z}(x)-Z(x)}$.

In the following, a distributional analysis of the estimator of the prediction error variance will be described.

For the subsequent inferences we consider the assumptions: 1) $b_j$ has a q-dimensional normal distribution $N(0, \mathrm{B})$. 2) The residual vector $\varepsilon_i$ has a normal distribution $N(0, \sigma^2 \mathrm{I})$, i.e., $\mathrm{V}_{i\,=}\,\sigma^2\mathrm{I}$. Then the vector $\hat{b} = (\hat{b}_1,...,b_m)^\top$ has the $m \times$q-variate normal distribution with $E[\hat{b}] = 0$, $\mathrm{Cov}[\hat{b}_i]$ given by equation (7.83), and with $\mathrm{Cov}[\hat{b}_i, \hat{b}_j]$ given by equation (7.85).

By the above results, $\frac{N-mq}{\sigma^2}S^2_Z$ has the $\chi^2$ distribution $\chi^2(N{-}mq)$, and the two components

$$S^2_Z\underbrace{\left(1-\frac{1}{m}x^\top \Lambda \sum_{l=1}^{m}\Lambda_l^{-1}(\mathrm{X}_l^\top \mathrm{X}_l)^{-1}(\Lambda_l^{-1})^\top \Lambda^\top x\right)}_{=\,\Delta}$$

And $\dfrac{m+1}{m(m-1)}x^\top \Lambda \sum_{i=1}^{m}\hat{b}_i \hat{b}_i^\top \Lambda^\top x$   are independent.

From the properties of the $\chi^2$ distribution we infer

$$V[S^2_Z\Delta] \;=\; \frac{\sigma^4\Delta^2}{(N-mq)^2}V\left[\frac{N-mq}{\sigma^2}S^2_Z\right] \;=\; \frac{2\sigma^4\Delta^2}{N-mq}. \tag{7.99}$$

Under assumptions 1) and 2), we investigate properties of the scalar variable $W_i = x^\top \Lambda \hat{b}_i$ which appears in the second component of the prediction variance considered above where

$$x^\top \Lambda \sum_{i=1}^{m}\hat{b}_i \hat{b}_i^\top \Lambda^\top x \;=\; \sum_{i=1}^{m} W_i^2. \tag{7.100}$$

$W_1,..., W_m$ have an m-variate joint normal distribution. By (7.70), we have $\mu w_i = E[x^\top \Lambda \hat{b}_i] = 0$. The variance

$\sigma_{W_i}^2 = E[W_i^2]$ can be inferred from equation (7.83) by using

$$\sigma_{W_i}^2 \;=\; V[x^\top \Lambda \widehat{b}_i] \;=\; \mathrm{Cov}[x^\top \Lambda \widehat{b}_i, x^\top \Lambda \widehat{b}_i] \;=\; x^\top \Lambda \mathrm{Cov}[\widehat{b}_i, \widehat{b}_i]\Lambda^\top x . \qquad (7.101)$$

The covariances $\sigma W_i, W_j = E[W_i W_j]$ can be inferred from equation (7.85) by using

$$\sigma_{W_i,W_j} \;=\; \mathrm{Cov}[x^\top \Lambda \widehat{b}_i, x^\top \Lambda \widehat{b}_j] \;=\; x^\top \Lambda \mathrm{Cov}[\widehat{b}_i, \widehat{b}_j]\Lambda^\top x . \qquad (7.102)$$

By (7.84), we have

$$
\begin{aligned}
E\Big[\sum_{i=1}^m W_i^2\Big] &= \sum_{i=1}^m \sigma_{W_i}^2 = x^\top \Lambda \sum_{i=1}^m \mathrm{Cov}[\widehat{b}_i, \widehat{b}_i]\Lambda^\top x = \\
(m-1)x^\top \Lambda &\left\{ \frac{\sigma^2}{m}\sum_{l=1}^m \Lambda_l^{-1}(X_l^\top X_l)^{-1}(\Lambda_l^{-1})^\top + \mathbf{B} \right\}\Lambda^\top x \;\;=_{(7.78)} \\
m(m-1)&x^\top \Lambda \mathrm{Cov}[\beta]\Lambda^\top x .
\end{aligned}
\qquad (7.103)
$$

From the theory of multivariate normal distribution we obtain

$$E[W_i^4] \;=\; 3\sigma_{W_i}^4, \quad E[W_i^2 W_j^2] \;=\; \sigma_{W_i}^2\sigma_{W_j}^2 + 2\sigma_{W_i,W_j}^2 . \qquad (7.104)$$

Obviously, the second part of equation (7.104) contains the first part as the special case $i = j$.

$$
\begin{aligned}
V[W_i^2] &= E[W_i^4] - E[W_i^2]^2 = 3\sigma_{W_i}^4 - \sigma_{W_i}^4 = 2\sigma_{W_i}^4 = \\
&2\Big(x^\top \Lambda \mathrm{Cov}[\widehat{b}_i, \widehat{b}_i]\Lambda^\top x\Big)^2,
\end{aligned}
\qquad (7.105)
$$

$$
\begin{aligned}
\mathrm{Cov}[W_i^2, W_j^2] &= E[W_i^2 W_j^2] - E[W_i^2]E[W_j^2] = \\
\sigma_{W_i}^2\sigma_{W_j}^2 + 2\sigma_{W_i,W_j}^2 - \sigma_{W_i}^2\sigma_{W_j}^2 &= 2\sigma_{W_i,W_j}^2 = 2\Big(x^\top \Lambda \mathrm{Cov}[\widehat{b}_i, \widehat{b}_j]\Lambda^\top x\Big)^2 .
\end{aligned}
\qquad (7.106)
$$

Obviously, equation (7.106) contains equation (7.105) as the special case i = j. From equations (7.105) and (7.106) we obtain

$$
\begin{aligned}
V\Big[\sum_{i=1}^m W_i^2\Big] &= 2\sum_{1\le i,j\le m} \sigma_{W_i,W_j}^2 = 2\Big(\sum_{i=1}^m \sigma_{W_i}^4 + \sum_{i\ne j}\sigma_{W_i,W_j}^2\Big) = \\
2\sum_{1\le i,j\le m} &\Big(x^\top \Lambda \mathrm{Cov}[\widehat{b}_i, \widehat{b}_i]\Lambda^\top x\Big)^2
\end{aligned}
\qquad (7.107)
$$

From (7.98), (7.99), (7.100), (7.107) we obtain

$$
\begin{aligned}
V[\widehat{\sigma}_{\widehat{Z}(x)-Z(x)}^2] &= 2\frac{\sigma^4\Delta^2}{N-mq} + 2\left(\frac{m+1}{m(m-1)}\right)^2 \sum_{1\le i,j\le m}\sigma_{W_i,W_j}^2 = \\
2\frac{\sigma^4\Delta^2}{N-mq} &+ 2\left(\frac{m+1}{m(m-1)}\right)^2 \sum_{1\le i,j\le m}\Big(x^\top \Lambda \mathrm{Cov}[\widehat{b}_i, \widehat{b}_i]\Lambda^\top x\Big)^2 .
\end{aligned}
\qquad (7.108)
$$

In the following, an approximate distribution of the estimator of the prediction error variance will be described.

An approximation of the distribution of the estimator (7.98) of the prediction error variance can be constructed following the known approximation scheme. The distribution of

$$U_\nu = \nu \frac{\widehat{\sigma}^2_{\widehat{Z}(x)-Z(x)}}{E\left[\widehat{\sigma}^2_{\widehat{Z}(x)-Z(x)}\right]} = \nu \frac{\widehat{\sigma}^2_{\widehat{Z}(x)-Z(x)}}{\sigma^2_{\widehat{Z}(x)-Z(x)}} \qquad (7.109)$$

is approximated by the $\chi^2(\nu)$ distribution with the same variance as $U_\nu$. Hence $\nu$ is determined from

$$2\nu \overset{!}{=} V[U_\nu] = \frac{2\nu^2}{\sigma^4_{\widehat{Z}(x)-Z(x)}} \left\{ \frac{\sigma^4\Delta^2}{N-mq} + \left(\frac{m+1}{m(m-1)}\right)^2 \sum_{1\le i,j\le m} \sigma^2_{W_i,W_j} \right\}.$$

Hence

$$\nu = \frac{\sigma^4_{\widehat{Z}(x)-Z(x)}}{\frac{\frac{\sigma^4\Delta^2}{N-mq} + \left(\frac{m+1}{m(m-1)}\right)^2 \sum_{1\le i,j\le m} \sigma^2_{W_i,W_j}}{\sigma^4_{\widehat{Z}(x)-Z(x)}}} = \frac{\sigma^4_{\widehat{Z}(x)-Z(x)}}{\frac{\sigma^4\Delta^2}{N-mq} + \left(\frac{m+1}{m(m-1)}\right)^2 \sum_{1\le i,j\le m} \left(x^\top \Lambda \mathrm{Cov}[\widehat{b}_i,\widehat{b}_j]\Lambda^\top x\right)^2} \qquad (7.110)$$

In the following, an approximate prediction interval will be described.

As described, we consider the assumptions 1) and 2). Additionally, we assume very small residual variance $\sigma^2$ such that $\sigma^2 \sum_{i=1}^{m} \Lambda_i^{-1}(X_i^\top X_i)^{-1}(\Lambda_i^{-1})^\top$ is negligible in comparison with B.

By the above results, the prediction error $\widehat{Z}(x) - Z(x) = (\Lambda(\widehat{\beta} - \beta - b))^\mathsf{T}x$ and the estimator $\widehat{\sigma}^2_{\widehat{Z}(x)-Z(x)}$ of the prediction error variance are approximately independent. The prediction error has a univariate normal distribution with mean 0 and variance $\sigma^2_{\widehat{Z}(x)-Z(x)}$ given by equation (7.97). Hence $(\widehat{Z}(x) - Z(x))/\sigma_{\widehat{Z}(x)-Z(x)}$ has the standard normal distribution $N(0; 1)$.

Using the previous result of the previous paragraph with $\nu$ defined by equation (7.110), the ratio

$$\frac{\widehat{Z}(x) - Z(x)}{\widehat{\sigma}_{\widehat{Z}(x)-Z(x)}} = \frac{\frac{\widehat{Z}(x)-Z(x)}{\sigma_{\widehat{Z}(x)-Z(x)}}}{\sqrt{\nu\frac{\widehat{\sigma}^2_{\widehat{Z}(x)-Z(x)}}{\sigma^2_{\widehat{Z}(x)-Z(x)}}}} \sqrt{\nu} \qquad (7.111)$$

is approximately distributed by the central t-distribution $t(\nu)$. Hence approximate bounds for prediction interval for $Z(x)$ are of the form

$$\widehat{Z}(x) -/+ z\widehat{\sigma}_{\widehat{Z}(x)-Z(x)}, \qquad (7.112)$$

where $z$ is an appropriate quantile of the central t-distribution $t(\nu)$. To apply (7.112) in data analysis, the unknown terms in the definition (7.110) of $\nu$ have to be replaced by estimators: $\sigma^2_{\widehat{Z}(x)-Z(x)}$ by $\widehat{\sigma}^2_{\widehat{Z}(x)-Z(x)}$ defined in equation (7.98), $\sigma^2$ by $S_Z^2$ $\mathrm{Cov}[\widehat{b}_i,\widehat{b}_i]$ by replacing in equation (7.85) B by $\widehat{B}$ and $\sigma^2$ by $S_Z^2$.

In the following, a confidence interval for the forecasting variance will be described.

Let $0 < \gamma < 1$, let $\nu = \nu_0$ be defined by equation (7.110) and let $z = z\chi 2(\nu)(\gamma)$ be the $100\gamma\%$ quantile of the $\chi^2$ distribution $\chi^2(\nu)$. We have

$$U_{\nu_0} = \frac{\sigma^2_{\hat{Z}(x)-Z(x)}\widehat{\sigma}^2_{\hat{Z}(x)-Z(x)}}{\frac{\sigma^4\Delta^2}{N-mq} + \left(\frac{m+1}{m(m-1)}\right)^2 \sum_{1\le i,j\le m}\left(x^\top\Lambda\mathrm{Cov}[\hat{b}_i,\hat{b}_j]\Lambda^\top x\right)^2} \qquad (7.113)$$

From the above result we have

$$\gamma \approx \mathrm{P}(U_{\nu_0}\le z) =$$

$$\mathrm{P}\left(\sigma^2_{\hat{Z}(x)-Z(x)} \le z\frac{\frac{\sigma^4\Delta^2}{N-mq} + \left(\frac{m+1}{m(m-1)}\right)^2\sum_{1\le i,j\le m}\left(x^\top\Lambda\mathrm{Cov}[\hat{b}_i,\hat{b}_j]\Lambda^\top x\right)^2}{\widehat{\sigma}^2_{\hat{Z}(x)-Z(x)}}\right)$$

Hence

$$\left[0;\, z\frac{\frac{\sigma^4\Delta^2}{N-mq} + \left(\frac{m+1}{m(m-1)}\right)^2\sum_{1\le i,j\le m}\left(x^\top\Lambda\mathrm{Cov}[\hat{b}_i,\hat{b}_j]\Lambda^\top x\right)^2}{\widehat{\sigma}^2_{\hat{Z}(x)-Z(x)}}\right) \qquad (7.114)$$

is an approximate level $\gamma$ confidence interval for the forecasting error variance $\sigma^2_{\hat{Z}(x)-Z(x)}$. To apply (7.114) in data analysis, the unknown parameter terms in the coefficient of z have to be replaced by estimators. I. e., replace $\sigma^4$ by $S^4_{\hat{Z}}$, and replace $\mathrm{Cov}[\hat{b}_i,\hat{b}_j]$ by $\widehat{\mathrm{Cov}[\hat{b}_i,\hat{b}_j]}$ which results from inserting $\hat{B}$ for B and $S^2_{\hat{Z}}$ for $\sigma^2$ in equation (7.85).

In the following, an application of the general mixed model scheme for the analysis of panel life times will be described.

As to the transformed model as a special case of the general linear mixed model scheme, the previous results can be applied to the analysis of the transformed model equations considered above. The parameters previously introduced may be chosen as follows:

$$\beta = \begin{pmatrix}\beta_{-1}\\\beta_1\end{pmatrix}, \quad b_i = \begin{pmatrix}b_{i,-1}\\b_{i,1}\end{pmatrix}, \quad \alpha_i = \begin{pmatrix}\alpha_{i0}\\\alpha_{i1}\end{pmatrix}, \qquad (7.115)$$

$$\Lambda_i = \begin{pmatrix}1 & \exp\left(\frac{-\beta_2}{R}a_{temp,70,i}\right)a_{time,70,i}\\0 & a_{co,20,i}\end{pmatrix}, \quad d_i = \begin{pmatrix}1\\0\end{pmatrix}, \qquad (7.116)$$

$$X_i = \begin{pmatrix}1 & x_{time,20,i,1}\\\vdots & \vdots\\1 & x_{time,20,i,n_i}\end{pmatrix} \qquad (7.117)$$

Then

$$\Lambda_i^{-1} = \begin{pmatrix}1 & -\exp\left(\frac{-\beta_2}{R}a_{temp,70,i}\right)\frac{a_{time,70,i}}{a_{co,20,i}}\\0 & \frac{1}{a_{co,20,i}}\end{pmatrix} \qquad (7.118)$$

$$\widehat{\beta} \;=\; \frac{1}{|M|}\sum_{i\in M}\left(\frac{\widehat{\alpha}_{i0}-1-\widehat{\alpha}_{i1}\exp\left(\frac{-\beta_2}{R}a_{temp,70,i}\right)\frac{a_{time,70,i}}{a_{co,20,i}}}{\frac{\widehat{\alpha}_{i1}}{a_{co,20,i}}}\right),\qquad(7.119)$$

$$\widehat{b}_i \;=\; \left(\frac{\widehat{\alpha}_{i0}-1-\widehat{\alpha}_{i1}\exp\left(\frac{-\beta_2}{R}a_{temp,70,i}\right)\frac{a_{time,70,i}}{a_{co,20,i}}}{\frac{\widehat{\alpha}_{i1}}{a_{co,20,i}}}\right) -$$
$$\frac{1}{|M|}\sum_{l\in M}\left(\frac{\widehat{\alpha}_{l0}-1-\widehat{\alpha}_{l1}\exp\left(\frac{-\beta_2}{R}a_{temp,70,l}\right)\frac{a_{time,70,l}}{a_{co,20,l}}}{\frac{\widehat{\alpha}_{l1}}{a_{co,20,l}}}\right)\qquad(7.120)$$

With $a_{co,20,l}=\exp\left(\frac{-\beta_2}{R}a_{temp,20,l}\right)$, where $\alpha_{temp,20,l}$ = 0.0000363021 approximately we obtain

$$\widehat{b}_i \;=\; \left(\frac{\widehat{\alpha}_{i0}-1-\widehat{\alpha}_{i1}\exp\left(\frac{-\beta_2}{R}(a_{temp,70,i}-a_{temp,20,i})\right)a_{time,70,i}}{\widehat{\alpha}_{i1}\exp\left(\frac{\beta_2}{R}a_{temp,20,i}\right)}\right) -$$
$$\frac{1}{|M|}\sum_{l\in M}\left(\frac{\widehat{\alpha}_{l0}-1-\widehat{\alpha}_{l1}\exp\left(\frac{-\beta_2}{R}(a_{temp,70,l}-a_{temp,20,l})\right)a_{time,70,l}}{\widehat{\alpha}_{l1}\exp\left(\frac{\beta_2}{R}a_{temp,20,l}\right)}\right)\qquad(7.121)$$

$b_{i,q}$, $q\in\{-1,1\}$, depends on the parameter $\beta_2$ in the form

$$b_{i,q}(\beta_2) \;=\; h_{i,q}(\beta_2)-\frac{1}{|M|}\sum_{l\in M}h_{l,q}(\beta_2),\qquad(7.122)$$

Where $h_{i,q}(\beta_2)$ is obvious from equation (7.120), or (7.121), respectively.
In the following, a nonlinear parametrisation will be described.
Simultaneous parametrisation of $h_{i,-1}$ and $h_{i,1}$

$$h_{i,q}(\beta_2) \;=\; \xi_{i,q,1}+\xi_{i,q,2}\exp(\xi_{i,q,3}\beta_2)\qquad(7.123)$$

Where

$$\xi_{i,q,1} \;=\; \begin{cases} \widehat{\alpha}_{i0}-1 & \text{if } q=-1,\\[2mm] 0 & \text{if } q=1, \end{cases}\qquad \xi_{i,q,2} \;=\; \begin{cases} -\widehat{\alpha}_{i1}a_{time,70,i} & \text{if } q=-1,\\[2mm] \widehat{\alpha}_{i1} & \text{if } q=1, \end{cases}\qquad(7.124)$$

$$\xi_{i,q,3} \;=\; \begin{cases} \dfrac{-(a_{temp,70,i}-a_{temp,20,i})}{R} & \text{if } q=-1,\\[3mm] \dfrac{a_{temp,20,i}}{R} & \text{if } q=1. \end{cases}\qquad(7.125)$$

Let

$$\overline{\xi}_{i,q,p} \;=\; \frac{1}{|M|}\sum_{l\in M}\xi_{i,q,p}\quad\text{for } q\in\{-1,1\},\ p\in\{1,2,3\}.$$

Then by (7.121)

$$\widehat{b}_i \;=\; \begin{pmatrix} \xi_{i,-1,1} + \xi_{i,-1,2}\exp(\xi_{i,-1,3}\beta_2) - \overline{\overline{\xi}}_{i,-1,1} - \frac{1}{|M|}\sum_{l\in M}\xi_{l,-1,2}\exp(\xi_{l,-1,3}\beta_2) \\ \xi_{i,1,1} + \xi_{i,1,2}\exp(\xi_{i,1,3}\beta_2) - \overline{\overline{\xi}}_{i,1,1} - \frac{1}{|M|}\sum_{l\in M}\xi_{l,1,2}\exp(\xi_{l,1,3}\beta_2) \end{pmatrix} \quad (7.126)$$

We write

$$\sum_{i\in M} b_{i,-1}^2(\beta_2) \;=\;$$

$$\sum_{i\in M}\left[\xi_{i,-1,1} - \overline{\xi}_{i,-1,1} - \left\{ -\xi_{i,-1,2}\exp(\xi_{i,-1,3}\beta_2) + \frac{1}{|M|}\sum_{l\in M}\xi_{l,-1,2}\exp(\xi_{l,-1,3}\beta_2)\right\}\right]^2.$$
$$(7.127)$$

The estimator of $\beta_2$ which minimises (7.127) is the OLS estimator of $\beta_2$ in the nonlinear regression sampling model

$$\xi_{i,-1,1} - \overline{\xi}_{i,-1,1} \;=\; -\xi_{i,-1,2}\exp(\xi_{i,-1,3}\beta_2) + \frac{1}{|M|}\sum_{i\in M}\xi_{l,-1,2}\exp(\xi_{l,-1,3}\beta_2), \quad i\in M. \quad (7.128)$$

The model (7.128) is the centered version of the model

$$\xi_{i,-1,1} \;=\; \beta^\star - \xi_{i,-1,2}\exp(\xi_{i,-1,3}\beta_2), \quad i\in M. \qquad (7.129)$$

In the following, a first expansion in $\beta_2$ with $\alpha_{co,20,l}$ not considered as a function of $\beta_2$ will be described.
We have

$$\frac{\mathrm{d}}{\mathrm{d}\beta_2}\exp\left(\frac{-\beta_2}{R}a_{temp,70,l}\right) \;=\; \frac{-a_{temp,70,l}}{R}\exp\left(\frac{-\beta_2}{R}a_{temp,70,l}\right).$$

Hence the linear expansion of $h_{i,-1}(\beta_2)$ around a point $\beta_2^{(0)}$ is

$$h_{i,-1}(\beta_2) \;\approx\;$$

$$\widehat{\alpha}_{i0} - 1 - \frac{\widehat{\alpha}_{i1}a_{time,70,i}}{a_{co,20,i}}\exp\left(\frac{-\beta_2^{(0)}}{R}a_{temp,70,i}\right)\left\{1 - \frac{a_{temp,70,i}}{R}(\beta_2 - \beta_2^{(0)})\right\} \;=\; \qquad (7.130)$$
$$=\; r_i + s_i\beta_2$$

$$r_i \;=\; \widehat{\alpha}_{i0} - 1 - \frac{\widehat{\alpha}_{i1}a_{time,70,i}}{a_{co,20,i}}\exp\left(\frac{-\beta_2^{(0)}}{R}a_{temp,70,i}\right)\left\{1 + \frac{a_{temp,70,i}}{R}\beta_2^{(0)}\right\}, \qquad (7.131)$$

$$s_i \;=\; \frac{\widehat{\alpha}_{i1}a_{time,70,i}}{a_{co,20,i}}\exp\left(\frac{-\beta_2^{(0)}}{R}a_{temp,70,i}\right)\frac{a_{temp,70,l}}{R}. \qquad (7.132)$$

In the following, a first expansion in $\beta_2$ with $\alpha_{co,20,l}$ considered as a function of $\beta_2$ will be described.
We have

$$\frac{d}{d\beta_2} \exp\left(\frac{-\beta_2}{R}(a_{temp,70,l} - a_{temp,20,l})\right) = \frac{-(a_{temp,70,l} - a_{temp,20,l})}{R} \exp\left(\frac{-\beta_2}{R}(a_{temp,70,l} - a_{temp,20,l})\right).$$

Hence the linear expansion of $h_{i,-1}(\beta_2)$ around a point $\beta_2^{(0)}$ is

$$h_{i,-1}(\beta_2) \approx$$

$$\widehat{\alpha}_{i0} - 1 - \widehat{\alpha}_{i1} a_{time,70,i} \exp\left(\frac{-\beta_2^{(0)}}{R}(a_{temp,70,i} - a_{temp,20,i})\right) \left\{1 - \frac{a_{temp,70,l} - a_{temp,20,i}}{R}(\beta_2 - \beta_2^{(0)})\right\} =$$

$$= r_i + s_i\beta_2 \tag{7.133}$$

$$r_i = \widehat{\alpha}_{i0} - 1 - \widehat{\alpha}_{i1} a_{time,70,i} \exp\left(\frac{-\beta_2^{(0)}}{R}(a_{temp,70,i} - a_{temp,20,i})\right) \left\{1 + \frac{a_{temp,70,i} - a_{temp,20,i}}{R}\beta_2^{(0)}\right\}, \tag{7.134}$$

$$s_i = \widehat{\alpha}_{i1} a_{time,70,i} \exp\left(\frac{-\beta_2^{(0)}}{R}(a_{temp,70,i} - a_{temp,20,i})\right) \frac{a_{temp,70,i} - a_{temp,20,i}}{R}. \tag{7.135}$$

In the following, an estimation of $\beta_2$ will be described.
The estimator $\hat{\beta}_2$ should minimise $\Sigma_{i\in M}\hat{b}_{i,-1}(\beta_2)^2$. From equation (7.122) we obtain

$$\sum_{i\in M} \widehat{b}_{i,-1}(\beta_2)^2 = \sum_{i\in M}\left(h_i(\beta_2) - \frac{1}{|M|}\sum_{l\in M} h_l(\beta_2)\right)^2 = \sum_{i\in M} h_i(\beta_2)^2 - \frac{1}{|M|}\left(\sum_{l\in M} h_l(\beta_2)\right)^2.$$

Hence

$$\frac{d}{d\beta_2}\sum_{i\in M} \widehat{b}_{i,-1}(\beta_2)^2 = 2\left\{\sum_{l\in M} h_l(\beta_2)h_l'(\beta_2) - \frac{1}{|M|}\sum_{i\in M} h_i(\beta_2)\sum_{l\in M} h_l'(\beta_2)\right\}. \tag{7.136}$$

With $h_i(\beta_2) \approx r_i + s_i\beta_2$, we obtain approximately

$$\frac{d}{d\beta_2}\sum_{i\in M} \widehat{b}_{i,-1}(\beta_2)^2 \approx 2\left\{\sum_{l\in M}(r_l + s_l\beta_2)s_l - \frac{1}{|M|}\sum_{i\in M}(r_i + s_i\beta_2)\sum_{l\in M} s_l\right\} =$$
$$2\left\{\sum(s_l - \overline{s})^2\beta_2 + \sum(s_l - \overline{s})(r_l - \overline{r})\right\}. \tag{7.137}$$

Hence $\Sigma_{i\in M}\hat{b}_{i,-1}(\beta_2)^2$ is approximately minimised by

$$\widehat{\beta}_2 = \frac{-\sum(s_l - \overline{s})(r_l - \overline{r})}{\sum(s_l - \overline{s})^2}. \tag{7.138}$$

The result (7.138) can also be obtained in the following manner. With the approximation $h_i(\beta_2) \approx r_i + s_i\beta_2$, we obtain approximately

$$\widehat{b}_{i,-1}(\beta_2) \approx r_i + s_i\beta_2 - (\overline{r} + \overline{s}\beta_2) = (r_i - \overline{r}) + (s_i - \overline{s})\beta_2 . \qquad (7.139)$$

Hence the value $\beta_2$ which minimises $\Sigma_{i \in M}\widehat{b}_{i,-1}(\beta_2)^2$ is approximately the OLS estimator of $\beta_2$ in the model

$$(r_i - \overline{r}) = -(s_i - \overline{s})\beta_2 + \widetilde{\varepsilon}_i, \quad E[\widetilde{\varepsilon}_i] = 0, \quad i \in M. \qquad (7.140)$$

The OLS estimator is provided by equation (7.138). The approximate validity of the model (7.140) follows from $E[\widehat{b}_{i,-1}(\beta_2)] = 0$. We consider the model in the conditional situation given $\widehat{\alpha}_i$, $i \in M$. The design matrix of the model (7.140) is

$$\mathbf{X} = \left( -(s_i - \overline{s}) \right)_{i \in M}, \quad \text{hence} \quad (\mathbf{X}^\top\mathbf{X})^{-1} = \frac{1}{\sum_{i \in M}(s_i - \overline{s})^2}.$$

Let $\widehat{\sigma}_{\widetilde{\varepsilon}}^2$ be the usual estimator of the residual variance $\sigma_{\widetilde{\varepsilon}}^2$. Then the variance of $\widehat{\beta}_2$ is estimated by

$$\widehat{\sigma}_{\widehat{\beta}_2}^2 = \frac{\widehat{\sigma}_{\widetilde{\varepsilon}}^2}{\sum_{i \in M}(s_i - \overline{s})^2}. \qquad (7.141)$$

In the conditional situation, confidence intervals for $\widehat{\beta}_2$ can be calculated in the way familiar from linear regression analysis.

Forecasts refer to panels stored some time x under non-accelerated conditions at an average temperature c °C, i. e., at T = c + 273:15 K. The corresponding transformation is

$$x_{temp,T} = \frac{1}{T} - \frac{1}{T_0} = \frac{1}{c + 273.15} - \frac{1}{296.15}.$$

Hence the matrix $\Lambda$ has to be chosen as

$$\Lambda = \begin{pmatrix} 1 & 0 \\ 0 & \exp\left(\frac{\beta_2}{R}x_{temp,c}\right) \end{pmatrix}, \quad \text{or} \quad \Lambda = \begin{pmatrix} 1 & 0 \\ 0 & \exp\left(\frac{\beta_2}{R}x_{temp,c}\right) \end{pmatrix}, \qquad (7.142)$$

corresponding to whether $\beta_0$ is assumed to be known or estimated by the method above described, where R = 8:314471 is the gas constant. The forecasting vector x is

$$x = \begin{pmatrix} 1 \\ x \end{pmatrix}.$$

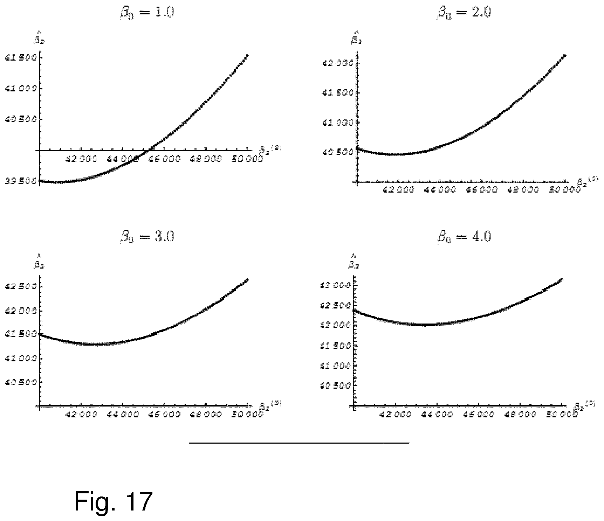

Estimates $\widehat{\beta}_2$ as a function of expansion points $\beta_2^{(0)}$ and prescribed values $\beta_0$ are shown in Fig. 17, wherein groups 13 and 19 are excluded.

The response predictor (7.94) amounts to

$$\widehat{Z}(x) = (\Lambda\widehat{\beta} + d)^\top x = \widehat{\beta}_{-1} + 1 + \widehat{\beta}_1 \exp\left(\frac{\beta_2}{R}x_{temp,c}\right) x \qquad (7.143)$$

Or

$$\widehat{Z}(x) \;=\; (\Lambda\widehat{\beta} + d)^{\top} x \;=\; \widehat{\beta}_{-1} + 1 + \widehat{\beta}_i \exp\left(\frac{\widehat{\beta}_2}{R} x_{temp,c}\right) x, \qquad (7.144)$$

respectively. The forecast in the untransformed model is

$$\widehat{Y}(x) \;=\; \frac{1}{a_d}\left(\beta_0 + \lambda_{free\ gas} - \frac{\lambda_{free\ gas}}{\widehat{Z}(x)}\right) \qquad (7.145)$$

Where $\alpha_d$ is the panel thickness.

In the following, an estimation of βi0 based on linearised response will be described.

The subsequent approach is described for general information of the reader. The estimation procedure provided no intuitively reasonable results.

Consider the transformed model (7.31). For abbreviation, let $\lambda_{fg} = \lambda_{free\ gas}$. Consider the left-hand side of (7.31) as a function of $\beta_{i0}$. We have

$$\frac{d}{d\beta_{i0}} \frac{\lambda_{fg}}{\lambda_{fg} - a_{d,i}Y_{ij} + \beta_{i0}} \;=\; \frac{-\lambda_{fg}}{(\lambda_{fg} - a_{d,i}Y_{ij} + \beta_{i0})^2}.$$

Hence the linear expansion of $\frac{\lambda_{fg}}{\lambda_{fg} - a_{d,i}Y_{ij} + \beta_{i0}}$ around a point $\beta_{i0}^{(0)}$ is

$$\begin{aligned}
\frac{\lambda_{fg}}{\lambda_{fg} - a_{d,i}Y_{ij} + \beta_{i0}} &\approx \\
\frac{\lambda_{fg}}{\lambda_{fg} - a_{d,i}Y_{ij} + \beta_{i0}^{(0)}} &- \frac{\lambda_{fg}}{(\lambda_{fg} - a_{d,i}Y_{ij} + \beta_{i0}^{(0)})^2}(\beta_{i0} - \beta_{i0}^{(0)}) \;= \\
\frac{\lambda_{fg}}{\lambda_{fg} - a_{d,i}Y_{ij} + \beta_{i0}^{(0)}} &+ \frac{\lambda_{fg}\beta_{i0}^{(0)}}{(\lambda_{fg} - a_{d,i}Y_{ij} + \beta_{i0}^{(0)})^2} - \frac{\lambda_{fg}}{(\lambda_{fg} - a_{d,i}Y_{ij} + \beta_{i0}^{(0)})^2}\beta_{i0}.
\end{aligned} \qquad (7.146)$$

On the left-hand side of (7.31), replace $\frac{\lambda_{fg}}{\lambda_{fg} - a_{d,i}Y_{ij} + \beta_{i0}}$ by the linear expansion (7.146). Let

$$\bar{Z}_{ij} \;=\; \frac{\lambda_{fg}}{\lambda_{fg} - a_{d,i}Y_{ij} + \beta_{i0}^{(0)}} + \frac{\lambda_{fg}\beta_{i0}^{(0)}}{(\lambda_{fg} - a_{d,i}Y_{ij} + \beta_{i0}^{(0)})^2}, \qquad (7.147)$$

$$u_{ij} \;=\; \frac{\lambda_{fg}}{(\lambda_{fg} - a_{d,i}Y_{ij} + \beta_{i0}^{(0)})^2}. \qquad (7.148)$$

Then we obtain the regression equation

$$\bar{Z}_{ij} \;=\; \underbrace{1 + \beta_{-1} + (\beta_i + b_{1i}) \cdot \exp\left(\frac{-\beta_2}{R} a_{temp,70,i}\right) a_{time,70,i}}_{=\ a_{i,-1}} +$$
$$\underbrace{\beta_{i0}}_{=\ a_{i0}} u_{ij} + \underbrace{(\beta_i + b_{1i}) \cdot a_{co,20,i}}_{=\ a_{i1}} x_{time,20,i,j}. \qquad (7.149)$$

52

The previous results can be applied to the analysis of the regression model (7.149). The parameters previously introduced have to be chosen as follows:

$$\beta = \begin{pmatrix} \beta_{-1} \\ \beta_0 \\ \beta_1 \end{pmatrix}, \quad b_i = \begin{pmatrix} b_{i,-1} \\ b_{i,0} \\ b_{i,1} \end{pmatrix}, \quad \alpha_i = \begin{pmatrix} \alpha_{i,-1} \\ \alpha_{i0} \\ \alpha_{i1} \end{pmatrix}, \quad (7.150)$$

$$\Lambda_i = \begin{pmatrix} 1 & 0 & \exp\left(\frac{-\beta_2}{R} a_{temp,70,i}\right) a_{time,70,i} \\ 0 & 1 & 0 \\ 0 & 0 & a_{co,20,i} \end{pmatrix}, \quad d_i = \begin{pmatrix} 1 \\ 0 \\ 0 \end{pmatrix}, \quad (7.151)$$

$$X_i = \begin{pmatrix} 1 & u_{i1} & x_{time,20,i,1} \\ \vdots & \vdots & \vdots \\ 1 & u_{in_i} & x_{time,20,i,n_i} \end{pmatrix} = \begin{pmatrix} 1 & \frac{\lambda_{fg}}{(\lambda_{fg} - a_{d,i} Y_{i1} + \beta_{i0}^{(0)})^2} & x_{time,20,i,1} \\ \vdots & \vdots & \vdots \\ 1 & \frac{\lambda_{fg}}{(\lambda_{fg} - a_{d,i} Y_{in_i} + \beta_{i0}^{(0)})^2} & x_{time,20,i,n_i} \end{pmatrix} \quad (7.152)$$

In the following, an estimation of β0 based on maximising forecasts will be described.

Consider the second mixed model (7.7) with $\beta_0$ constant over all groups. A least favourable forecast estimator $\hat{\beta}_0$ can be defined in the following sense: Choose $\hat{\beta}_0$ which maximises the forecast $\hat{Y}(x)$ defined by equation (7.145).

In the following, parameter estimates and prediction will be described.

As to parameter estimates, we consider the empirical evaluation of the linear mixed model as described. Basis for the evaluation is the data set containing the values of the measurements.

The following parameters have to be estimated in the order displayed, see also tables 3 and 4:

1. The random parameters $\alpha_i = \begin{pmatrix} \alpha_{i0} \\ \alpha_{i1} \end{pmatrix}$ for each panel $i = 1,..., m$.

2. The global parameter $\beta_2$ representing the activation energy.

3. The parameter $\beta_0$ as a least favourable forecast estimator.

4. The components $\beta_{-1}$ and $\beta_1$ of the vector β representing the average initial gas pressure in the panel in units of $p_{1/2}$ and the average relative increase in the gas pressure in units of $p_{1/2}$, respectively.

5. The random parameters $b_i = \begin{pmatrix} b_{i,-1} \\ b_{i,1} \end{pmatrix}$ for each panel $i = I.... m$.

6. The variance $\sigma^2$ representing the measurement uncertainty.

7. The covariance matrix B of $\beta$ representing the uncertainty due to quality differences in the panels.

For the evaluation the following items have to be taken into account:

1. Groups are identified with panels.

2. Panel 46 is excluded from the analysis due to implausible measurements. Hence a total of 9 panels is included in the analysis.

3. For each panel, only 3 measurings may be available. For the estimation of the parameters $\beta_{i,-1}$, $\beta_{i,1}$ it is necessary that the measuring points used for the evaluation are equal concerning $\alpha_{time,70,is}$, the total accelerated exposure time of panel i. The total non-accelerated exposure time $x_{time,20,i,j}$ of panel i until measurement j is the only variable factor. The panels stored in the 20°C-environment are not stored in a 70°C-environment at all such that $\alpha_{time,70,i} = 0$. These panels do not differ in respect of $\alpha_{time,70,i}$, so all the available measuring points can be used for the evaluation, more precisely 3 measuring points for each panel. For the panels which are partly stored in the accelerated 70°C-environment, the accelerated exposure times $\alpha_{time,70,i}$ differ from measuring point to measuring point. The panels are measured in the beginning, then stored in the 70°C-environment and then measured again twice after some time, in which they undergo a 20°C-environment only. Therefore only the measuring points 2 and 3 do not differ in respect of $\alpha_{time,70,i}$, so that only these two points can be included in the analysis of each panel. There are 5 panels which are partially stored in a 70°C-environment, hence 4 panels which are stored in a 20°C-environment for the whole measuring process. So the overall sample size is $4 \times 3 + 5 \times 2 = 22$.

Table 7: Parameter estimates

| | Estimate | Lower confidence limit | Upper confidence limit | Unit |
|---|---|---|---|---|
| $\beta_{-1}$ | 0.000403441 | - | - | - |
| $\beta_1$ | 0.000604925 | - | - | 1/day |
| $\beta_2$ | 42879.7 | 38320.3 | 47439.1 | J/(mol$\times$K) |
| $\beta_0$ | 3.45 | - | - | $10^{-3}$W/(m$\times$K) |
| $\sigma^2$ | 0.0000143776 | - | - | - |
| B = Cov[$b_i$] | $\begin{pmatrix} 0.000244814 & 1.20215 \cdot 10^{-6} \\ 1.20215 \cdot 10^{-6} & 3.61278 \cdot 10^{-8} \end{pmatrix}$ | - | - | - |
| Cov[$\hat{\beta}$] | $\begin{pmatrix} 0.0000651265 & 2.6741 \cdot 10^{-7} \\ 2.6741 \cdot 10^{-7} & 9.43481 \cdot 10^{-9} \end{pmatrix}$ | - | - | - |

4. Since for some of the panels only two measuring points are available, see remark 3, it is impossible to estimate a variance in the measuring of these panels. Therefore the variance is estimated only by the use of the panels stored in the 20°C-environment.

5. Due to expert knowledge the parameter $\beta_0$ is expected to be in the interval [1; 4].

Therefore the least favourable case for the parameter $\beta_0$ is searched for in the interval [1; 4]. Furthermore the two location parameters $\beta_0$ and $\beta_{-1}$ are connected in a negative way: The greater the parameter $\beta_0$ (location parameter with reference to the activation energy), the lower the estimated value for $\beta_{-1}$ (location parameter with reference to the gas pressure). Since a negative value for the parameter $\beta_{-1}$ is considered implausible, the parameter $\beta_0$ is regarded plausible only as long as $\beta_{-1}$ is positive.

Table 5 shows the parameter estimates for the nonlinear mixed model as above described based on the data set containing the values of the measurements. For the estimation, commercially available tools may be used.

For the validation of the model the parameter estimates based on the measurements are compared with the parameter estimates based on the measurements taken from further measurements.

For the evaluation the following items have to be taken into account:

1. For each panel measuring runs have taken place. Each measuring run is separately analysed, i. e. groups are identified with measurement periods. Particularly, the random parameters $\beta_{i,1}$ and $\beta_{i,-1}$ are estimated for each test run. As a consequence the group index i does not represent different panels as described, but different test runs.

2. Test run 13 ($\widehat{=}$ panel 46) is excluded from the analysis due to implausible measurements. No second test run took place for this panel.

3. The test run 19 is excluded from the analysis since no second test run took place for the corresponding panel.

4. Implausible observations and observations which show unusual behaviour in the beginning of the measuring process are excluded from the analysis.

5. To mitigate the potential autocorrelation of measurements taken every five minutes over a period of several days per panel, only each 12th data point is included in the analysis, i. e., the response "thermal conductivity" is regarded once per hour.

As to prediction we consider the mixed nonlinear model as described. The objective is to predict the response "thermal conductivity", $a_{d,i}Y$ with $a_{d,i}$ the thickness of panel i, under usage conditions, i. e., for special values of the following two influential factors:

1) Time. This factor is contained in the vector x.

2) Temperature. This factor is contained in the matrix Λ.

Table 8: Parameter estimates

|  | Estimate | Lower confidence limit | Upper confidence limit | Unit |
|---|---|---|---|---|
| $\beta_{-1}$ | 0.182909 | - | - | - |
| $\beta_1$ | 0.000873323 | - | - | 1/day |
| $\beta_2$ | 39682.8 | 36450.9 | 42914.6 | J/(mol×K) |
| $\beta_0$ | 1.0 | - | - | $10^{-3}$W/(m×K) |
| $\sigma^2$ | $1.24806 \cdot 10^{-6}$ | - | - | - |
| B = Cov[$b_i$] | $\begin{pmatrix} 0.00916976 & -0.0000100659 \\ -0.0000100659 & 2.75897 \cdot 10^{-7} \end{pmatrix}$ | - | - | - |
| Cov[$\hat{\beta}$] | $\begin{pmatrix} 0.000774777 & -8.87293 \cdot 10^{-7} \\ -8.87293 \cdot 10^{-7} & 2.35788 \cdot 10^{-8} \end{pmatrix}$ | - | - | - |

The prediction is based on two components:

i) point prediction,

ii) interval prediction.

The point prediction of the transformed response Z, see equation (7.33), is a prediction of the expected value $\hat{Z}(x) = (\Lambda\hat{\beta} + d)^T x$. Since the model as described uses the transformation

$$\frac{\lambda_{free\,gas}}{\lambda_{free\,gas} - a_{d,i}Y_{ij} + \beta_0} = Z_{ij}, \qquad (7.153)$$

the prediction $a_{d,i}\hat{Y}$ for the response "thermal conductivity" can be calculated by retransforming the response $\hat{Z}$ using the following equation:

$$a_{d,i}\hat{Y} = \beta_0 + \lambda_{free\,gas} - \frac{\lambda_{free\,gas}}{\hat{Z}_{ij}}. \qquad (7.154)$$

The prediction $\hat{Y}$ for the response "heat transfer coefficient" can be derived using the following equation, respectively:

$$\hat{Y} = \frac{1}{a_{d,i}}\left(\beta_0 + \lambda_{free\,gas} - \frac{\lambda_{free\,gas}}{\hat{Z}_{ij}}\right). \qquad (7.155)$$

An approximate prediction interval for a future response $\hat{Z}$ is

$$\hat{Z}(x) \pm z\hat{\sigma}_{\hat{Z}(x)-Z(x)} =: (Z_L(x), Z_U(x)), \qquad (7.156)$$

where

$$\widehat{\sigma}^2_{\widehat{Z}(x)-Z(x)} = S^2_{\widehat{Z}} + x^\top \Lambda \left( \frac{m+1}{m} \widehat{B} + \frac{S^2_{\widehat{Z}}}{m^2} \sum_{l=1}^m \Lambda_l^{-1}(X_l^\top X_l)^{-1}(\Lambda_l^{-1})^\top \right) \Lambda^\top x, \qquad (7.157)$$

and z is an appropriate quantile of the central t-distribution. To receive a prediction interval $(a_{d,i}Y_L, a_{d,i}Y_U)$ for the response $a_{d,i}Y$ or a prediction interval $(Y_L, Y_U)$ for the response Y, again one can use the retransforming equation (7.154).

The prediction variance, see equation (7.157), is basically formed by

a) the residual variance $\sigma^2$ due to measurement uncertainty, estimated by $S^2_{\widehat{Z}}$.

b) the variance due the quality differences in the panels, which can be read out of the covariance matrix B, estimated by $\widehat{B}$.

c) the variance that can partially be controlled by the measurement setup, i. e., the time the panels are stored in the accelerated environment, the overall duration of the experiment, the number of measuring points for each panel, the temperature levels. These experimental factors influence the matrices $\Lambda_l$ and $X_l$.

We calculate the prediction for the following values of the influential factors which represent usage conditions:

1) Time: 2 years.

2) Temperature: 20°C.

On grounds of the linearised model, the prediction $\widehat{Z}(x)$ by (7.94) and the two-sided prediction limits $Z_L(x) < Z_U(x)$ by (7.156) at a confidence level of 0.95 are

$$\widehat{Z}(x) = 1.36992, \quad Z_L(x) = 1.0015549, \quad Z_U(x) = 1.7382753.$$

Both the point prediction $\widehat{Z}(x)$ and the limits of the prediction interval have to be retransformed by applying equation (7.154). The predicted thermal conductivity and the corresponding prediction limits given in W/(mK) at a confidence level of $\gamma = 0{:}95$ are

$$a_{d,i}\widehat{Y} = 0.0104707, \quad a_{d,i}Y_L = 0.00349037, \quad a_{d,i}Y_U = 0.0144926.$$

To illustrate the influence of the different components of the prediction variance, the prediction variance and its components are calculated. Using the above conditions for the prediction and the estimated parameter values from table 7, the following values are obtained:

$$\widehat{\sigma}^2 = 0.0000143776, \qquad (7.158)$$

$$\widehat{\sigma}^2_{\widehat{Z}(x)-Z(x)} = 0.0169387, \qquad (7.159)$$

$$x^\top \Lambda \left( \frac{m+1}{m} \widehat{B} \right) \Lambda^\top x = 0.0168818, \qquad (7.160)$$

$$x^\top \Lambda \left( \frac{S^2_{\widehat{Z}}}{m^2} \sum_{l=1}^m \Lambda_l^{-1}(X_l^\top X_l)^{-1}(\Lambda_l^{-1})^\top \right) \Lambda^\top x = 0.0000424975. \qquad (7.161)$$

These results show that the variance 0.0168818, which is basically due to quality differences in the panels,

dominates the variance $\widehat{\sigma}^2_{\widehat{Z}(x)-Z(x)}$ ) of the prediction. The experimental setup, which influences the matrices $\Lambda_l$ and $X_l$ and contributes to the value 0.0000424975, has negligibly small influence.

As to the experimental design of experiments for life time prediction, the analysis is based on the mixed model as described. The objective is to ensure a prediction of future values which is as exact as possible without neglecting certain external restrictions. The empirical basis for the design study is the data set containing the values of the measurements.

The following questions are considered in this context:

1. How many different panels m have to be included in the experiment?

2. How should the panels be divided into two groups of sizes $m_1$, $m_2$, with $m_1$ panels being stored in the low-temperature-environment and $m_2$ panels being stored in the accelerated-temperature-environment?

3. How much time should at least be scheduled for the whole experimental process?

4. How should the storing environments be chosen, more precisely, which two temperature levels should be chosen for the panels to be stored in?

5. How long should the panels of the accelerated temperature group be stored in the accelerated environment before being stored in the lower temperature environment and be measured a few times during that period?

6. How often should each panel be measured in the course of the whole measuring period?

The precision in the prediction is reflected in the length of the prediction interval (7.156). The lower the length of the prediction interval, the more exact a future observation can be predicted. The crucial component of the prediction interval is the variance of the prediction, see formula (7.98). The objective of an ideal construction of an experimental design is therefore minimising the length of the prediction interval, see formula (7.112).

However, due to the nature of the mixed model, the prediction interval (7.98) cannot be used to answer each of the questions mentioned above in the same way.

The experimental design aims at minimising one of the following functions of the prediction variance keeping in mind the above remarks. The prediction is calculated for panels stored for 2 years in a 20°C-environment at a confidence level of 95%:

- Length of the prediction interval:

$$L_U - L_L \quad := \quad 2 \cdot z \cdot \widehat{\sigma}_{\widehat{Z}(x)-Z(x)} \tag{8.1}$$

- Squared length of the prediction interval:

$$(L_U - L_L)^2 \quad := \quad (2 \cdot z \cdot \widehat{\sigma}_{\widehat{Z}(x)-Z(x)})^2 \quad = \quad 4 \cdot z^2 \cdot \widehat{\sigma}^2_{\widehat{Z}(x)-Z(x)} \tag{8.2}$$

This term is mainly influenced by the differences in panel quality and can basically be reduced by increasing the number m of testing panels.

- The part of the variance of the prediction which is basically influenced by the measurement setup. We consider the following terms:

$$\Phi \quad := \quad x^\top \Lambda \left( \frac{S_Z^2}{m^2} \sum_{l=1}^{m} \Lambda_l^{-1} (X_l^\top X_l)^{-1} (\Lambda_l^{-1})^\top \right) \Lambda^\top x, \tag{8.3}$$

$$\bar{\bar{\Phi}} \quad := \quad 4 \cdot z^2 \cdot \boldsymbol{x}^\top \Lambda \left( \frac{S_{\bar{z}}^2}{m^2} \sum_{l=1}^{m} \Lambda_l^{-1} (\mathbf{X}_l^\top \mathbf{X}_l)^{-1} (\Lambda_l^{-1})^\top \right) \Lambda^\top \boldsymbol{x}. \qquad (8.4)$$

In the above cases z is an appropriate quantile of the t-distribution. For the construction of the experimental design the following estimated values derived from the original data set have to be used, see table 7:

- The estimated variance, $S_{\bar{z}}^2$, due to measurement uncertainty.

- The estimated value $\hat{\beta}_2$ for the parameter $\beta_2$.

- The estimated worst case value for the parameter $\beta_0$, $\hat{\beta}_0$.

- The estimated components $\hat{\beta}_{-1}$ and $\hat{\beta}_1$ of the vector $\beta$.

- The covariance matrix $\hat{B}$ of b.

The parameter $\beta_2$ depends on the random parameters $\alpha_{i0}$ and $\alpha_{i1}$, $i = 1,..., m$, and can only be estimated after the estimation of these parameters. Therefore, and since the estimation of $\beta_2$ differs with the experimental design used, the following conservative approach is taken: The prediction interval is calculated with the value for $\beta_2$ taken from its confidence interval which maximises the length of the two-sided prediction interval.

Regarding the construction of the experimental design the following approach is taken:

1. For each measurement setup with a prescribed number of testing panels, temperatures and storing time of the panels in the available environments, at least 10 000 sets of random values $\alpha_{i0}$, $\alpha_{i1}$ are simulated using the information about their distribution, $E[\hat{\alpha}_0]$, $E[\hat{\alpha}_1]$ and $\text{Cov}[\hat{\alpha}_i]$. see equations (7.68) and (7.77).

2. For each simulated set, an estimation and confidence interval for the parameter $\beta_2$ is calculated. The level of the confidence interval is chosen in a way, so that the uncertainty that comes with the estimation of $\beta_2$ and the uncertainty in the calculation of the prediction interval in total is maximally the prescribed maximum error 1 - $\gamma$. A prescribed level $\gamma$ in the final prediction interval is obtained via the Bonferroni inequality by choosing partial levels $\gamma_i = 0.5(1 + \gamma)$ for the confidence level for $\beta_2$ and for the prediction interval depending on $\beta_2$.

3. For each value of $\beta_2$ in its confidence interval the future prediction along with its prediction interval is calculated.

4. From all possible prediction intervals the one selected for the analysed measurement setup is the one which maximises the length of the prediction interval.

5. The results achieved by simulating 10 000 sets of random values for $\alpha_{i0}$, $\alpha_{i1}$ are averaged. These mean values are used to compare different measurement setups.

As to selection of measuring points, the mixed model analysis estimates some parameters for each panel separately, in particular the residual variance (measurement variance). At least three measuring points are necessary to secure the possibility of estimating the measuring variance for each panel. To exceed the unreliable minimum, it is advised to measure each panel at least four times in the course of the measuring period. Since the measuring variance is regarded rather small in general, four measuring points are assumed to be enough. It is advised that the measuring points are arranged in equal distances making use of the whole available measurement period.

As to the choice of the number of testing panels, since in the case at hand the uncertainty in the prediction is mainly influenced by the differences in quality of the panels, the accuracy of the prediction can be improved most by increasing the number of testing panels.

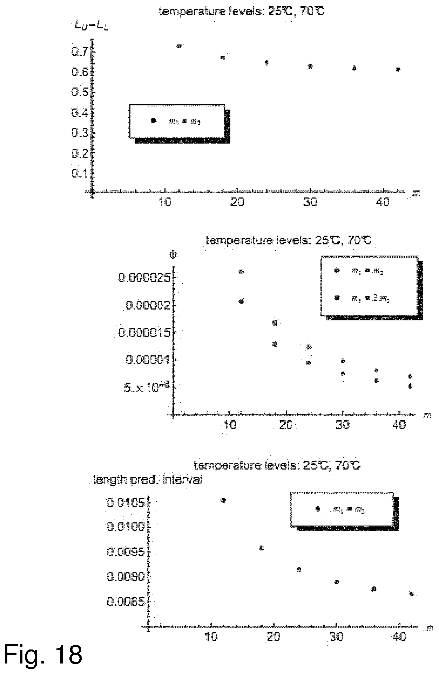

Fig. 18 shows the length $L_U - L_L$, of the prediction interval for the transformed values, the contribution $\Phi$ of the measurement setup to the prediction variance of the transformed values and the length of the prediction interval for the thermal conductivity (unit: W/(mK)) as a function of the number of testing panels. The calculation is based on the following measurement setup:

- Temperature levels: 25°C, 70°C.

- Storage time in the 70°C-environment: 60 days.

- Length of the overall measuring period: 120 days.

- Times of measuring for panels stored in a 25°C-environment in days from the beginning: 0, 40, 80, 120 days.

- Times of measuring for panels stored in a 70°C-environment in days from the end of the storage time in the 70°C-environment: 0, 20, 40, 60 days.

The length of the prediction interval is calculated for the following divisions of the panels into the two temperature groups:

a) $m_1 = m_2 = \frac{m}{2}$: The same number $m_1$ of panels is stored in a 25°C-environment as is stored in a 70°C-environment, $m_2$.

b) $m_1 = 2m_2$: Only half as many panels, $m_2$, are stored in a 70°C-environment as are stored in a 25°C-environment, $m_1$.

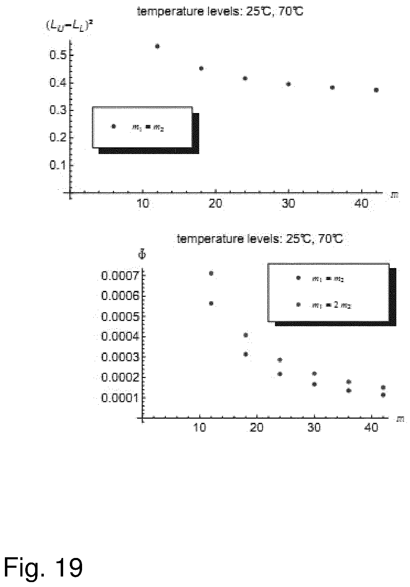

Fig. 19 shows that a huge improvement in prediction accuracy can be achieved by increasing the number of testing panels involved in the experiment up to a number of about 24. Only a minor improvement can be observed when including more than about 24 testing panels in the experiment. To assess the influence of the temperatures the panels are stored in, we compare the term $\Phi$ for the two cases $m_1 = m_2$ and $m_1 = 2m_2$. $\Phi$ reveals an advantage for the case $m_1 = m_2$ compared to the case $!m_1 = 2m_2$, i. e., it seems to be better to store as many panels in the 25°C-environment as in the 70°C-environment than twice as many.

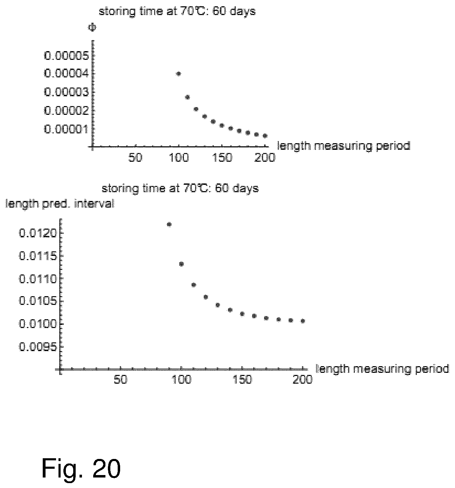

Fig. 20 shows the squared length $(L_U - L_L)^2$ of the prediction interval and the term $\overline{\Phi}$, see equation (8.4), with the intention of comparing the two quantities. It is obvious that $\overline{\Phi}$, which contains the influences of the experimental design, is comparably small in comparison to $(L_U - L_L)^2$.

As to the choice of the length of the measuring period the length of the overall measuring period mainly influences the matrices XI, and indirectly the matrices $\Lambda$ and $\Lambda_1$, $l = 1,...,m$, in the prediction variance (7.157). Therefore, the decision on the total length of the measuring period should be based on the minimisation of the term $\Phi$, see equation (8.3). Note that $\Phi$ is comparably small in the case at hand. Compared to the number of testing panels it does not influence the accuracy of the prediction a lot.

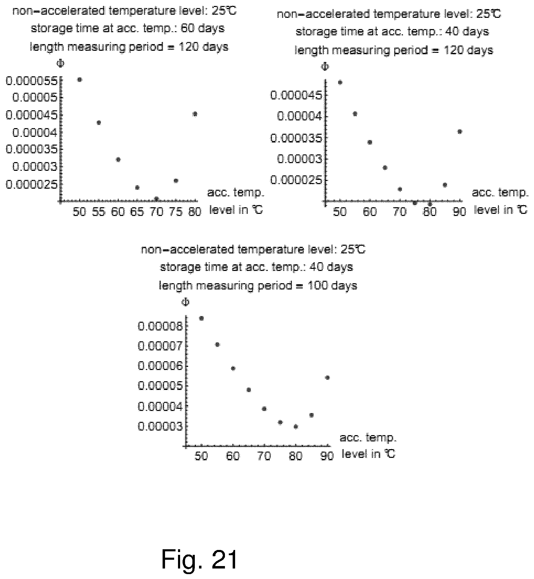

Fig. 21 shows the component $\Phi$ of the prediction variance as a function of the length of the overall experimental time. The calculation is based on the following measurement setup:

- Temperature levels: 25°C, 70°C.

- Number of panels in each temperature group: 6, i. e. a total of 12 panels.

- Storage time in the 70°C-environment: 60 days.

Varying the length of the overall experimental time means the following times of measuring:

- Times of measuring for panels stored in a 25°C-environment: Four equally distanced measuring points over the entire measuring period.

- Times of measuring for panels stored in a 70°C-environment: Four equally distanced measuring points over the measuring period beginning after 60 days of storing the panels in the 70°C-environment.

Figure 19 shows that strong improvement in $\Phi$ can be achieved when choosing at least 150 days for the total length of the measuring period. The length of the prediction interval in units W/(mK) decreases only little if the measuring period is extended beyond 150 days.

As to the choice of the storing environments, the choice of the storing environments for the panels, i. e., the two temperature levels the panels are faced with during the whole experimental process, influences the matrices $X_l$, $\Lambda$ and $\Lambda_l$, $l = 1,...,m$, in the prediction variance (7.157). Therefore the decision on the temperature levels for the storing environments for the panels during the experimental process should be based on the minimisation of the term $\Phi$, see equation (8.3). For reasons of simplicity, the lower of the two temperature levels should be approximately room temperature, i. e., between about 10 and 25°C. Since applications have shown that a storage temperature of more than about 70°C might cause a destruction of the panels in a short time, storage temperatures of more than about 80°C are not considered in the analysis. For the analysis, the non-accelerated temperature is prescribed at 25°C, which is considered to be an upper bound for temperature stress in domestic applications.

Figure 20 shows the component $\Phi$, see equation (8.3), of the prediction variance as a function of the accelerated temperature level in °C for the three following cases:

a) Storage time in the 70°C-environment: 60 days. Length of the measuring period: 120 days.

b) Storage time in the 70°C-environment: 40 days. Length of the measuring period: 120 days.

c) Storage time in the 70°C-environment: 40 days. Length of the measuring period: 100 days.

The other quantities are kept constant for the calculation on the following values:

• Temperature level of the low temperature: 25°C.

• Number of panels in each temperature group: 6, i.e., a total of 12 panels.

• Times of measuring for panels stored in a 25°C-environment in days from the beginning: 0, 40, 80, 120 days.

• Times of measuring for panels stored in a 70°C-environment in days from the end of the storage time in the 70°C-environment: Four equally distanced measuring points over the measuring period beginning after the storing time in the 70°C-environment.

The first plot in Fig. 20 which represents the results for a storage time in the 70°C-environment of 60 days reveals a minimum in $\Phi$ at an accelerated temperature of about 70°C. The second plot representing the results for a storage time in the 70°C-environment of 40 days reveals a minimum in $\Phi$ at an accelerated temperature of about 80°C. Both plots are based on a measuring period of 120 days. The third plot shows the results for a storage time in the 70°C-environment of 40 days with a measuring period of only 100 days. The minimum in $\Phi$ can be observed at an accelerated temperature of 80°C as well.

Both the time the panels are stored in the accelerated environment as well as the accelerated temperature itself are acceleration factors in the experiments. Hence from Fig. 20 it can be concluded that if panels are stored less time in the accelerated environment, the lower acceleration effect can be compensated if in return the accelerated temperature level is increased. Nevertheless to choose the accelerated temperature above a certain level can be disadvantageous. Furthermore reducing the length of the whole measuring period causes worse results in the precision of the prediction.

As to the choice of the storing time in the accelerated environment, the choice of the storing time of panels in the accelerated environment influences on the matrices $X_l$, $\Lambda$ and $\Lambda_l$, $l = 1,..., m$, in the prediction variance (7.157). Therefore the decision on the length of the accelerated storing period should be based on the minimisation of the term $\Phi$, see equation (8.3).

Fig. 20 shows the component $\Phi$, see equation (8.3), of the prediction variance as a function of the time the panels are stored in the accelerated environment in days. The calculation is based on the following measurement setup:

• Temperature levels: 25°C, 70°C.

• Number of panels in each temperature group: 6, i. e., a total of 12 panels.

• Length of the overall measuring period: 120 days.

• Times of measuring for panels stored in a 25°C-environment in days from the beginning: 0, 40, 80, 120 days.

• Times of measuring for panels stored in a 70°C-environment in days: Four equally distanced measuring points over the measuring period beginning after the storing time in the 70°C-environment.

Fig. 20 shows a minimum in $\Phi$ at a storing time in the 70°C-environment of about 55 days. Hence under the above measurement setup. Fig. 20 suggests that optimally panels should be stored in a 70°C-environment for almost two months before being measured 4 times under room temperature.

Fig. 21 shows $\Phi$ as a function of the accelerated temperature level.

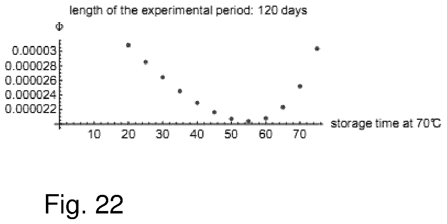

Fig. 22 shows $\Phi$ as a function of the storage time of the panels in the accelerated environment in days.

As to the operating instructions, the choice of the experimental design depends on the amount of the variation due to differences in the panel quality. Therefore first of all examinations should be taken on how much the panel-to-panel variation influences the accuracy in the prediction in comparison to the other factors determining the experimental design.

In the following, the choice of the experimental factors and their levels will be described.

As to the choice of the length of the measuring period, the accuracy in the prediction can be improved by extending the measuring period. A measuring period of at least 150 days should bring reasonable results in the prediction. The measurements on panels which are stored under approximately room temperature should begin with the start of the experiment. Panels which are stored in an accelerated environment should first remain in that environment for a prescribed time, and should afterwards being measured. If the panel-to-panel variation is comparably high, a shortening of the measuring period might be justifiable if in return the number of panels is increased.

On the contrary, if in future experiments the panel-to-panel variation is comparably small, extending the length of the measuring period might have greater influence on the accuracy of the prediction and might be worth considering.

As to the selection of measuring points, each panel may be measured 4 times. The measuring points should be equally distributed over the entire measuring period. I. e., for panels stored at room temperature, the first measuring point is the starting time of the experiment, and for panels stored under in an accelerated environment, the first measuring point is the time point right after the end of the accelerated storing period. For both groups of panels, the last measuring point is at the end of the experimental period.

As to the choice of the storing time in the accelerated environment panels subject to accelerated exposure may remain in the accelerated environment over almost two months before starting the measurement period.

As to the choice of the storing environments, two temperature levels should be chosen in which the panels are stored during the experiment. Partly the panels are recommended to be stored in an environment of about 25°C which is approximately room temperature. The remaining panels should be stored in an environment of about 70°C if the storing time in the accelerated environment is chosen to be 60 days. If this period is shortened, the acceleration effect can nevertheless be achieved by increasing the accelerated temperature.

As to the choice of the number of testing panels, a number of at least 24 testing panels are recommended to be included in the experiment.

The panels can be divided into to equally sized groups: one group being stored in a 25°C-environment, and the other in a 70°C-environment. Whether to increase the number of testing panels or rather to increase the length of the measuring period depends on what is the decisive factor for the prediction variance: panel-to-panel variation or the measurement-to-measurement variation.

As to the prediction of the proportion of nonconforming items, to predict the proportion of nonconforming items, the point prediction $\hat{Z}(x)$ as well as the two-sided prediction interval

$$B_x = \hat{Z}(x) \pm z\hat{\sigma}_{\hat{Z}(x)-Z(x)} =: (Z_L(x), Z_U(x)),$$

have to be examined. By a suitable choice of the quantile $z = z\left(\frac{1+\gamma}{2}\right)$, a prescribed forecasting confidence level $\gamma$ can be achieved, i. e., $z = z\left(\frac{1+\gamma}{2}\right)$ can be chosen so as to provide

$$P(Z(x) \in B_x) = \gamma.$$

I. e., the probability that the real value for the response $Z(x)$ lies in the interval $B_x$ is $\gamma$.

To be able to make conclusions in units of thermal conductivity, it is necessary to retransform the values $\hat{Z}(x)$, $Z_L(x)$, and $Z_U(x)$. A prediction $a_{d,i}\hat{Y}(x)$ for the thermal conductivity as well as a prediction interval $(a_{d,i}Y_L(x), a_{d,i}Y_U(x))$ can be derived by using the transforming equation

$$a_{d,i}\hat{Y}(x) = \beta_0 + \lambda_{free\,gas} - \frac{\lambda_{free\,gas}}{\hat{Z}(x)}.$$

The unknown parameter $\beta_0$ has to be replaced by the estimator $\hat{\beta}_0$ from the actual experiment. The estimator is determined as described above.

As to the prediction based on prescribed confidence levels 0.99 and 0.95 for the prediction is prescribed, we consider the prescribed confidence levels 0.99 and 0.95 in the following.

Consider the prediction interval $(a_{d,i}Y_L(x), a_{d,i}Y_U(x))$ for a prescribed confidence level of 0:99. If the upper bound $a_{d,i}Y_U(x)$ does not exceed a critical value c for the thermal conductivity, it can be argued, that in the long run not more than $(1 - 0:99) \cdot 100\% = 1\%$ of the panels are expected to exceed c in the thermal conductivity.

If the upper bound of the prediction interval for the given confidence level 0:99 is higher than the critical value c, the prediction interval should be calculated for a confidence level of 0:95. If the upper bound of the prediction interval for a confidence level of 0:95 lies below c, one can conclude that in the long run less than $(1-0:95) \cdot 100\% = 5\%$ of the panels are expected to exceed the critical value c.

As to the prediction based on random confidence level, the approach to predict the proportion of nonconforming items where the confidence level is not prescribed but random may be deployed.

The following two cases have to be distinguished:

1. $a_{d,i}\hat{Y}(x) < c$, i. e., the point prediction $a_{d,i}\hat{Y}(x)$ lies below the critical value c. In this case, consider the upper bound $a_{d,i}Y_U(x)$ of the prediction interval. Determine $\gamma$ in a way, that

$$a_{d,i}Y_U(x) = c$$

which requires a suitable choice of $z = z\left(\frac{1+\gamma}{2}\right)$ in formula (9.3). Then a proportion of less than $(1 - \gamma) \cdot 100\%$ is predicted to exceed the critical value c.

2. $a_{d,i}\hat{Y}(x) > c$, i. e., the point prediction $a_{d,i}\hat{Y}(x)$ lies above the critical value c. In this case, consider the lower bound $a_{d,i}Y_L(x)$ of the prediction interval. Determine $\gamma$ in a way, that

$$a_{d,i}Y_L(x) = c$$

which requires a suitable choice of $z = z\left(\frac{1+\gamma}{2}\right)$ in formula (9.3). Then a proportion of at least $(1 - \gamma) \cdot 100\%$ is predicted to exceed the critical value c.

As to the prediction based on one-sided prediction intervals, the preceding analysis is based on two-sided prediction intervals for the thermal conductivity. A different approach to decide on how many panels exceed the critical values 0.008 W/(m· K) for 2 years and 0.015 W/(m· K) for 10 years in the thermal conductivity, would be to consider the one-sided prediction interval with an upper bound:

$$\left(-\infty, \ \hat{Z}(x) + z\hat{\sigma}_{\hat{Z}(x)-Z(x)}\right) \quad =: \quad \left(-\infty, \ \overline{Z}_U(x)\right)$$

and the retransformed interval

$$\left(-\infty, \ \beta_0 + \lambda_{free\,gas} - \frac{\lambda_{free\,gas}}{\overline{Z}_U(x)}\right) \quad =: \quad \left(-\infty, \ a_{d,i}\overline{Y}_U(x)\right),$$

respectively. If the quantile z is chosen as $z = z(\gamma)$, a prescribed forecasting confidence level $\gamma$ can be achieved. If the upper bound $a_{d,i}\overline{Y}_U(x)$ is below the critical value c for the thermal conductivity it can be concluded that in the long run not more than $(1 - \gamma) \cdot 100\%$ of the panels are expected to exceed c. Otherwise no conclusion is possible, i. e. the percentage of the panels exceeding the critical values cannot be estimated below 100%. This approach allows to decide what percentage of the panels exceed the critical value at the utmost while ensuring a higher confidence level for the prediction than in the case of a two-sided prediction interval. Nevertheless, to ensure the possibility of drawing a conclusion, this method is only recommended if the predicted response is far below the critical value c.

In the case at hand, the basis for the investigations were measurements taken on highly degrading panels with high panel-to-panel variation that are not suitable and cannot be used for the intended purpose. Since the critical values for the thermal conductivity are not far from the point prediction, no conclusion would be possible in many cases if one-sided prediction intervals were used. Therefore, the investigations concentrated on two-sided prediction intervals which allow to estimate an interval with upper and lower bound in which the future observations lie with a high probability. Also, the two-sided interval allows to compare the accuracy of the prediction by means of the length of the prediction interval, and is suitable especially for the construction of an experimental design.

For future investigations, other panels with lower degradation rates and lower panel-to-panel variation are expected. In this case, one-sided prediction intervals with an upper bound will probably be the appropriate method to find an upper bound for the percentage of nonconforming panels.

**Reference Numerals**

| | |
|---|---|
| 101 | measuring |
| 103 | measuring |
| 107 | executing |
| 201-215 | method steps |
| 217 | fitting the regression model |
| 219 | executing the regression model |

**Claims**

1.  Method for predicting a physical characteristic of vacuum insulation panels of a certain type, the method comprising:

    measuring (101) a plurality of physical quantities (x1, x2, x3, x4, x5) associated with the vacuum insulation panels at distinct time instants;
    measuring (103) values of the physical characteristic at the distinct time instants;
    fitting (105) a parametric regression model to predict the measured values of the physical characteristic at the distinct time instants using the parametric regression model; and
    executing (107) the parametric regression model to predict the physical characteristic at a future time instant, **characterized in that**
    the parametric regression model is one of the following parametric regression models

    $$Y \;=\; f(\boldsymbol{x}, \boldsymbol{\beta}) + \varepsilon \;=\; (\beta_1 x_1 + \beta_2 x_2) \exp\left(\frac{-\beta_3}{R} x_3\right) x_5 + \beta_4 x_4 + \varepsilon$$

    or

    $$Y \;=\; g(\boldsymbol{x}, \boldsymbol{\beta}) + \varepsilon \;=\; (\beta_1 x_1 + \beta_2 x_2) \exp\left(\frac{-\beta_3}{R} x_3\right) x_5 + \varepsilon$$

    with Y denoting values of the physical characteristic, $\beta_1$ - $\beta_4$ denoting regression coefficients, x1 - x5 denoting regressors and $\varepsilon$ denoting an error,
    wherein

    $$\beta_1 = c_{LS}, \; x_1 = \frac{LS}{V}, \;\; \beta_2 = c_A, \; x_2 = \frac{A}{V}, \;\; \beta_3 = E, \; x_3 = \frac{1}{T} - \frac{1}{T_0},$$

    $$\beta_4 = \alpha, \; x_4 = \frac{m(t) - m(0)}{m(0)}, \;\; x_5 = t - t_0.$$

    wherein LS denotes length of the sealing, $A = A_{Folie}$ denotes surface area, V denotes volume of the kernel, $\dfrac{LS}{V}$

denotes length of sealing per volume, $\dfrac{A}{V}$ denotes surface per volume, $\dfrac{1}{T} - \dfrac{1}{T_0}$ denotes transformed temperature, $t - t_0$ denotes time elapsed, $\dfrac{m(t) - m(t_0)}{m(t)}$ denotes mass increase.

2. The method of claim 1, wherein the parametric regression model is executed and/or fitted by a computer.

3. The method of anyone of the preceding claims, wherein the values of the physical characteristic and the plurality of physical quantities are measured at three distinct time instants, in particular only at three distinct time instants.

4. The method of anyone of the preceding claims, wherein the physical characteristic is a least one of: thermal conductivity, internal gas pressure.

5. The method of anyone of the preceding claims, wherein the step of fitting (105) of the parametric regression model comprises determining regression coefficients of the parametric regression model.

6. The method of anyone of the preceding claims, further comprising determining the distinct time instants for measurements.

7. The method of anyone of the preceding claims, further comprising determining a number of vacuum insulation panels of the same type for measurements.

8. The method of anyone of the preceding claims, further comprising determining a total measurement time of the measurements.

9. The method of anyone of the preceding claims, further comprising determining environmental conditions, in particular temperatures, to which to expose at least one vacuum insulation panel.

10. The method of claim 9, further comprising determining an exposure time.

11. The method of anyone of the preceding claims, further comprising determining a number of measurements repetitions.

12. The method of anyone of the preceding claims, wherein the vacuum insulation panel of the same type comprise a panel core, in particular a fiber panel core.

13. The method of anyone of the preceding claims, wherein the predicting the physical characteristic of the vacuum insulation panels comprises predicting a number of vacuum insulation panels having a certain value of the physical characteristic or having a value of the physical characteristic below or above a threshold.

14. The method of anyone of the preceding claims, wherein the predicting the physical characteristic of the vacuum insulation panels comprises predicting a change of the physical characteristic over time.

**Patentansprüche**

1. Verfahren zur Vorhersage einer physischen Eigenschaft von Vakuumwärmedämmpanelen einer bestimmten Art, wobei das Verfahren Folgendes umfasst:

Messen (101) einer Mehrzahl von mit den Vakuumwärmedämmpanelen verbundenen physikalischen Größen (x1, x2, x3, x4, x5) an distinkten Zeitpunkten,
Messen (103) von Werten der physischen Eigenschaft an den distinkten Zeitpunkten,
Anpassen (105) eines parametrischen Regressionsmodells zum Vorhersagen der gemessenen Werte der physischen Eigenschaft an den distinkten Zeitpunkten unter Verwendung des parametrischen Regressionsmodells und
Ausführen (107) des parametrischen Regressionsmodells zum Vorhersagen der physischen Eigenschaft an einem zukünftigen Zeitpunkt, **dadurch gekennzeichnet, dass**
das parametrische Regressionsmodell eines der folgenden parametrischen Regressionsmodelle ist

$$Y = f(\boldsymbol{x}, \boldsymbol{\beta}) + \varepsilon = (\beta_1 x_1 + \beta_2 x_2) \exp\left(\frac{-\beta_3}{R} x_3\right) x_5 + \beta_4 x_4 + \varepsilon$$

oder

$$Y = g(\boldsymbol{x}, \boldsymbol{\beta}) + \varepsilon = (\beta_1 x_1 + \beta_2 x_2) \exp\left(\frac{-\beta_3}{R} x_3\right) x_5 + \varepsilon$$

wobei Y Werte der physischen Eigenschaft bezeichnet, $\beta_1$ bis $\beta_4$ Regressionskoeffizienten bezeichnen, x1 bis x5 Regressoren bezeichnen und $\varepsilon$ einen Fehler bezeichnet, wobei

$$\beta_1 = c_{LS}, \ x_1 = \frac{LS}{V}, \ \beta_2 = c_A, \ x_2 = \frac{A}{V}, \ \beta_3 = E, \ x_3 = \frac{1}{T} - \frac{1}{T_0},$$

$$\beta_4 = \alpha, \ x_4 = \frac{m(t) - m(0)}{m(0)}, \ x_5 = t - t_0.$$

wobei *LS* die Länge der Dichtung bezeichnet, A = A$_{Folie}$ die Oberfläche bezeichnet, *V* das Volumen des Kerns bezeichnet, $\frac{LS}{V}$ die Dichtungslänge pro Volumen bezeichnet, $\frac{A}{V}$ die Oberfläche pro Volumen bezeichnet, $\frac{l}{T} - \frac{l}{T_0}$ die transformierte Temperatur bezeichnet, $t - t_0$ die verstrichene Zeit bezeichnet, $\frac{m(t) - m(t_0)}{m(t)}$ die Massezunahme bezeichnet.

2. Verfahren nach Anspruch 1, wobei das parametrische Regressionsmodell durch einen Computer ausgeführt und/oder angepasst wird.

3. Verfahren nach einem der vorhergehenden Ansprüche, wobei die Werte der physischen Eigenschaft und die Mehrzahl der physikalischen Größen an drei distinkten Zeitpunkten, insbesondere nur an drei distinkten Zeitpunkten gemessen werden.

4. Verfahren nach einem der vorhergehenden Ansprüche, wobei die physische Eigenschaft mindestens eine der folgenden ist: Wärmeleitfähigkeit, Innengasdruck.

5. Verfahren nach einem der vorhergehenden Ansprüche, wobei der Schritt des Anpassens (105) des parametrischen Regressionsmodells das Bestimmen von Regressionskoeffizienten des parametrischen Regressionsmodells umfasst.

6. Verfahren nach einem der vorhergehenden Ansprüche, ferner umfassend das Bestimmen der distinkten Zeitpunkte für Messungen.

7. Verfahren nach einem der vorhergehenden Ansprüche, ferner umfassend das Bestimmen einer Anzahl von Vakuumwärmedämmpanelen derselben Art für Messungen.

8. Verfahren nach einem der vorhergehenden Ansprüche, ferner umfassend das Bestimmen einer Gesamtmessdauer der Messungen.

**9.** Verfahren nach einem der vorhergehenden Ansprüche, ferner umfassend das Bestimmen von Umgebungsbestimmungen, insbesondere Temperaturen, mit denen mindestens eine Vakuumwärmedämmpanele zu beaufschlagen ist.

**10.** Verfahren nach Anspruch 9, ferner umfassend das Bestimmen einer Beaufschlagungszeit.

**11.** Verfahren nach einem der vorhergehenden Ansprüche, ferner umfassend das Bestimmen einer Anzahl von Messungswiederholungen.

**12.** Verfahren nach einem der vorhergehenden Ansprüche, wobei die Vakuumwärmedämmpanele derselben Art einen Panelkern, insbesondere einen Faser-Panelkern umfasst.

**13.** Verfahren nach einem der vorhergehenden Ansprüche, wobei das Vorhersagen der physischen Eigenschaft der Vakuumwärmedämmpanelen das Vorhersagen einer Anzahl von Vakuumwärmedämmpanelen umfasst, welche einen bestimmten Wert der physischen Eigenschaft haben oder einen Wert der physischen Eigenschaft unterhalb oder oberhalb eines Schwellwertes haben.

**14.** Verfahren nach einem der vorhergehenden Ansprüche, wobei das Vorhersagen der physischen Eigenschaft der Vakuumwärmedämmpanelen das Vorhersagen einer Veränderung der physischen Eigenschaft über der Zeit umfasst.

**Revendications**

**1.** Procédé de prédiction d'une caractéristique physique de panneaux d'isolation sous vide d'un certain type, le procédé comprenant les étapes consistant à :

mesurer (101) une pluralité de quantités physiques (x1, x2, x3, x4, x5) associées aux panneaux d'isolation sous vide à des instants temporels distincts ;
mesurer (103) des valeurs de la caractéristique physique à des instants temporels distincts ;
régler (105) un modèle de régression paramétrique pour prédire les valeurs mesurées de la caractéristique physique à des instants temporels distincts à l'aide du modèle de régression paramétrique ; et
exécuter (107) le modèle de régression paramétrique pour prédire la caractéristique physique à un futur instant temporel, **caractérisé en ce que** :

le modèle de régression paramétrique est l'un des modèles de régression paramétriques suivants :

$$Y \;=\; f(\boldsymbol{x},\boldsymbol{\beta}) + \varepsilon \;=\; (\beta_1 x_1 + \beta_2 x_2)\exp\left(\frac{-\beta_3}{R}x_3\right)x_5 + \beta_4 x_4 + \varepsilon$$

ou

$$Y \;=\; g(\boldsymbol{x},\boldsymbol{\beta}) + \varepsilon \;=\; (\beta_1 x_1 + \beta_2 x_2)\exp\left(\frac{-\beta_3}{R}x_3\right)x_5 + \varepsilon$$

avec Y indiquant des valeurs de la caractéristique physique, $\beta_1$ - $\beta_4$ indiquant des coefficients de régression, x1 - x5 indiquant des régresseurs et $\varepsilon$ indiquant une erreur,
dans lequel

$$\beta_1 = c_{LS},\; x_1 = \frac{LS}{V},\;\; \beta_2 = c_A,\; x_2 = \frac{A}{V},\;\; \beta_3 = E,\; x_3 = \frac{1}{T} - \frac{1}{T_0},$$

$$\beta_4 = \alpha, \ x_4 = \frac{m(t) - m(0)}{m(0)}, \ x_5 = t - t_0.$$

dans lequel LS indique une longueur de l'étanchéité, A = $A_{Folie}$ indique une zone de surface, V indique un volume du noyau, $\frac{LS}{V}$ indique une longueur de l'étanchéité par volume, $\frac{A}{V}$ indique une surface par volume, $\frac{1}{T} - \frac{1}{T_0}$ indique une température transformée, $t - t_0$ indique un temps écoulé, $\frac{m(t) - m(t_0)}{m(t)}$ indique une augmentation de masse.

**2.** Procédé selon la revendication 1, dans lequel le modèle de régression paramétrique est exécuté et/ou réglé par un ordinateur.

**3.** Procédé selon l'une quelconque des revendications précédentes, dans lequel les valeurs de la caractéristique physique et de la pluralité des qualités physiques sont mesurées à trois instants temporels distincts, en particulier seulement à trois instants temporels distincts.

**4.** Procédé selon l'une quelconque des revendications précédentes, dans lequel la caractéristique physique est au moins l'une de : une conductivité thermique, une pression de gaz interne.

**5.** Procédé selon l'une quelconque des revendications précédentes, dans lequel l'étape de réglage (105) du modèle de régression paramétrique comprend la détermination des coefficients de régression du modèle de régression paramétrique.

**6.** Procédé selon l'une quelconque des revendications précédentes, comprenant en outre la détermination des instants temporels distincts pour des mesures.

**7.** Procédé selon l'une quelconque des revendications précédentes, comprenant en outre la détermination d'un certain nombre de panneaux d'isolation sous vide du même type pour des mesures.

**8.** Procédé selon l'une quelconque des revendications précédentes, comprenant en outre la détermination d'un temps de mesure total des mesures.

**9.** Procédé selon l'une quelconque des revendications précédentes, comprenant en outre la détermination des conditions environnementales, en particulier des températures, auxquelles exposer au moins un panneau d'isolation sous vide.

**10.** Procédé selon la revendication 9, comprenant en outre la détermination d'un temps d'exposition.

**11.** Procédé selon l'une quelconque des revendications précédentes, comprenant en outre la détermination d'un nombre de répétitions des mesures.

**12.** Procédé selon l'une quelconque des revendications précédentes, dans lequel le panneau d'isolation sous vide du même type comprend un coeur de panneau, en particulier un coeur de panneaux de fibres.

**13.** Procédé selon l'une quelconque des revendications précédentes, dans lequel la prédiction de la caractéristique physique des panneaux d'isolation sous vide comprend la prédiction d'un certain nombre de panneaux d'isolation sous vide ayant une certaine valeur de la caractéristique physique ou ayant une valeur de la caractéristique physique en dessous ou au-dessus d'un seuil.

**14.** Procédé selon l'une quelconque des revendications précédentes, dans lequel la prédiction de la caractéristique physique des panneaux d'isolation sous vide comprend la prédiction d'un changement de la caractéristique physique dans le temps.

Fig. 1

Fig. 2a

217

219

Fig. 2b

Fig. 3

71

Fig. 4

Fig. 5

Fig. 6

Fig. 7

Fig. 8

Fig. 9

H

Forecasting confidence level = 0.99.

W

Forecasting confidence level = 0.95.

Fig. 10

EP 2 594 924 B1

Fig. 11

EP 2 594 924 B1

Fig. 12

Fig. 13

81

Fig. 14

Fig. 15

Fig. 16

$$\beta_0 = 1.0$$

$$\beta_0 = 2.0$$

$$\beta_0 = 3.0$$

$$\beta_0 = 4.0$$

Fig. 17

Fig. 18

Fig. 19

storing time at 70°C: 60 days

Φ

0.00005
0.00004
0.00003
0.00002
0.00001

length measuring period

50        100        150        200

storing time at 70°C: 60 days

length pred. interval

0.0120
0.0115
0.0110
0.0105
0.0100
0.0095

length measuring period

50        100        150        200

Fig. 20

Fig. 21

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Prediction of service life for vacuum insulation panels with fumed silica kernel and foil cover. **SCHWAB H. et al.** JOURNAL OF THERMAL ENVELOPE AND BUILDING SCIENCE. SAGE PUBLICATIONS LTD, April 2005